# EUROPEAN PATENT APPLICATION

(11) **EP 2 033 564 A1**
(43) Date of publication of application: **11.03.2009**
(21) Application number: 07745458.5
(22) Date of filing: 18.06.2007
(51) Int. Cl.: A47L 9/24, A47L 9/10, B03C 3/15, B03C 3/155, B03C 3/30

(54) **DUST CONDENSING PASSAGE, CHARGING DRAFT MEMBER, FRICTIONAL CHARGING RESIN PIPE, ELECTRIC VACUUM CLEANER**

(30) Priority: 22.06.2006 JP 2006172037; 15.09.2006 JP 2006251551; 06.10.2006 JP 2006275231; 16.11.2006 JP 2006310466; 27.11.2006 JP 2006317909; 27.11.2006 JP 2006318314; 29.11.2006 JP 2006322357
(71) Applicant: Sharp Kabushiki Kaisha, Osaka-shi, Osaka 545-8522 (JP)
(72) Inventor: KATOH, Yasuaki, Kitakatsuragi-gun Nara 636-0001 (JP); OHTSUKA, Masaki, Yao-shi, Osaka 581-0041 (JP); TOMOMURA, Yoshinobu, Kitakatsuragi-gun Nara 636-0003 (JP); KITATANI, Kazuya, Ikoma-gun, Nara 636-0821 (JP); YOSHIDA, Choji, Yao-shi, Osaka 581-0068 (JP); OHNISHI, Yuhji, Osaka 599-8242 (JP); NINOMIYA, Kohji, Kitakatsuragi-gun Nara 636-0151 (JP); TATSUOKA, Masao, Ikoma-gun, Nara 636-0151 (JP)
(74) Representative: Brown, Kenneth Richard
(86) International application number: PCT/JP2007/062208
(87) International publication number: WO 2007/148643

(57) **Abstract**

Provided is a dust flocculating duct which has a simple configuration and is capable of reducing the number of particulates by increasing the number of times when the particulates in dust collide with one another and by facilitating flocculation and of increasing an apparent diameter of each of the particulates. The dust flocculating duct comprises: an extension pipe (502), a suction hose (504), and a joining section (505) as components constituting a passage unit for flowing gas containing pieces of dust, a frictional electrification passage part (161) disposed in the extension pipe (502) and friction-electrifying the pieces of dust, and a collision promotion passage part (162) disposed in the joining section (505), causing the pieces of dust electrified by the frictional electrification passage part (161) to collide with each other, and facilitating formation of dust masses (clusters). The frictional electrification passage part (161) includes a first frictional electrification part made of a first material and a second frictional electrification part made of a second material. The collision promotion passage part (162) is made of a third material. A contact potential difference of the first material is larger than a contact potential difference of the third material and the contact potential difference of the third material is larger than a contact potential difference of the second material.

## Description

### TECHNICAL FIELD

The present invention relates to a dust flocculating duct for causing gas containing dust to circulate therethrough and for flocculating the dust, an electrification gas passage member for causing particulates to pass therethrough to be contact-electrified and flocculated, a frictional electrification or triboelectric charging resin pipe which is tubular and causes a substance subjected to friction to be electrified through contacting the substance subjected to the friction, and a vacuum cleaner.

### BACKGROUND ART

Conventionally, as an example in which protruding portions are provided on an inner wall surface of a pipe through which gas containing dust circulates, there is an extension pipe of a vacuum cleaner disclosed in Japanese Patent Application Laid-Open Publication No. 2002-320578 (Patent Document 1). This aims to accelerate a gas flow in the vicinity of the inner wall surface of the extension pipe by providing guide blades, as acceleration means, in the vicinity of an entrance of the extension pipe connected via a hose to a main body of the vacuum cleaner.

In addition, Japanese Patent Application Laid-Open Publication No. 9-131522 (Patent Document 2) discloses a mixing element which increases a fluid mixing efficiency. This aims to increase the mixing efficiency by providing a cylindrical passage pipe with helical blades in an integrated manner and imparting action of positional shifting, confluence, and shearing of a fluid along the blades.

On the other hand, Japanese Patent Application Laid-Open Publication No. 2005-324094 (Patent Document 3) discloses a particulate flocculation device which electrifies particulates by utilizing corona discharge and thereafter, collects the particulates by using an electric conductor having a voltage applied thereto. This particulate flocculation device has a mechanism in which the collected particulates flocculates on a surface of the electric conductor, and when the particulates have grown to have certain sizes, groups of the flocculated particulates are separated off from the electric conductor by a gas flow and discharged.

Japanese Patent No. 2517877 (Patent Document 4) discloses that particulates are electrified through frictional and contact electrification. There disclosed is a method, for producing a fine particulate composite body, in which fine particulates on one side are electrified with positive static electricity and fine particulates on another side are electrified with negative static electricity through electrification by contact with a pipe and thereafter, both of the particulates are mixed to be electrically combined.

In addition, conventionally, there are a cyclone-type vacuum cleaner and a filter-type vacuum cleaner, in each of which dust is sucked concurrently with air and collected in a dust collecting part of a main body of the vacuum cleaner, and the collected dust is discarded all together.

However, dust whose particulate diameter is less than or equal to 10 micrometer (hereinafter, referred to as fine dust) hardly undergoes action of a centrifugal force because of a small mass thereof. Therefore, the cyclone-type vacuum cleaner in which the dust is sucked into a dust cup, swirled at a high speed, and separated by a centrifugal force has had a problem that in a case of the dust having a particulate diameter of approximately several microns, centrifugal separation cannot be performed due to a light weight of the dust in a state where the dust is dispersed in a gas flow. Even if the centrifugal separation is performed in a well-devised manner, it is difficult to collect fine dust having a particulate diameter less than or equal to 4 micrometers.

Consequently, in order to further collect the fine dust in the cyclone-type vacuum cleaner, a filter such as a HEPA filter (High Efficiency Particulate Air Filter) is needed on a downstream side of a duct collecting device.

On the other hand, although in a general vacuum cleaner, it is possible to collect the fine dust by making a mesh of a dust collecting filter made of a paper bag or a cloth so as to be fine, a fine mesh of the filter reduces a suction force of a wind of the vacuum cleaner. Therefore, it is difficult to suck the dust having a large size. For these reasons, in order to collect the fine dust, it is required to provide multiple filters each having a further fine mesh or another expensive filter such as the HEPA filter on the downstream side of the duct collecting filter.

As a technology of a vacuum cleaner allowing the collection of the fine dust which cannot be collected by such a dust collecting device, Japanese Patent Application Laid-Open Publication No. 4-341228 (Patent Document 5) discloses a vacuum cleaner including an electric dust collecting device which is provided on a downstream side of an electric gas blower and electrically collects fine dust and dirt.

In the field of a vacuum cleaner, conventionally, there are a variety of methods for producing gas ducts by combining individual components. For example, in a vacuum cleaner disclosed in Japanese Patent Application Laid-Open Publication No. 8-173361 (Patent Document 6), a joint pipe of a floor brush part is inserted into and connected to a connecting pipe below a main body thereof.

In addition, the conventional vacuum cleaner collects dust with a filter. A vacuum cleaner including a cyclone-type dust collecting part collects dust through separating the dust by a swirling gas flow.
Patent Document 1: Japanese Patent Application Laid-Open Publication No. 2002-320578
Patent Document 2: Japanese Patent Application Laid-Open Publication No. 9-131522
Patent Document 3: Japanese Patent Application Laid-Open Publication No. 2005-324094
Patent Document 4: Japanese Patent No. 2517877
Patent Document 5: Japanese Patent Application Laid-Open Publication No. 4-341228
Patent Document 6: Japanese Patent Application Laid-Open Publication No. 8-173361
Patent Document 7: Japanese Patent No. 3370511 (Page 3 to Page 5, Fig 1)
Patent Document 8: Japanese Patent No. 3313871 (Page 2 to Page 7)
Patent Document 9: Japanese Patent Application Laid-Open Publication No. 4-124676 (Page 1 to Page 5)
Patent Document 10: Japanese Patent No. 3757081 (Page 6 to Page 21)
Patent Document 11: Japanese Patent No. 2552133 (Page 2 to Page 12)
Patent Document 12: Japanese Patent No. 2807795 (Page 2 to Page 7)

### DISCLOSURE OF THE INVENTION

### Problems to be solved by the invention

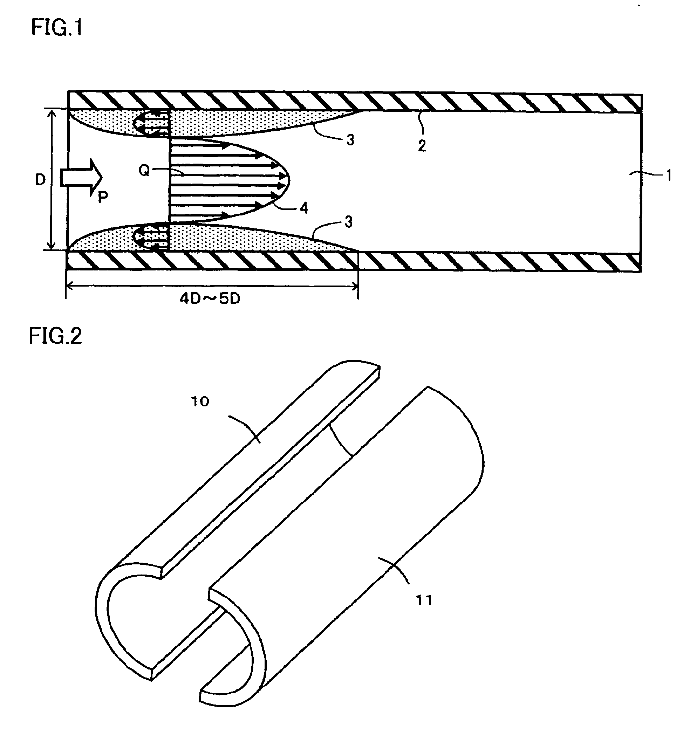

Fig. 1 is a schematic diagram illustrating a gas flow inside a cylindrical pipe such as an extension pipe of a vacuum cleaner. As shown in Fig. 1, when gas P flows inside a passage 1 in a direction indicated by an arrow, an exfoliation area 3 is formed on a portion where a wall 2 of the passage 1 contacts gas. Therefore, velocities of a gas flow Q at positions inside the passage become uneven and a velocity gradient 4 arises. A length of the exfoliation area 3 in a direction along the gas flow is approximately 4 to 5 times that of a diameter D of the passage 1.

In Japanese Patent Application Laid-Open Publication No. 2002-320578 (Patent Document 1), the guide blades provided in the extension pipe of the vacuum cleaner is aimed at an effect of reducing a pressure loss in order to effectively transport the dust to a dust collecting chamber by suppressing the exfoliation, as shown in Fig. 1, around an inlet portion of the passage and increasing an apparent area of an suction inlet. However, collision flocculation of the particulates contained in the gas flow is not particularly described therein.

In addition, in Japanese Patent Application Laid-Open Publication No. 9-131522 (Patent Document 2), a main object of the mixing element is to mix fluid. Therefore, means for reducing the number of particularly fine particulates of the dust by causing the fine particulates to collide with one another and to be flocculated is not described therein.

In Japanese Patent Application Laid-Open Publication No. 2005-324094 (Patent Document 3), since the particulate flocculation device utilizes the corona discharge in order to electrify the particulates, a high voltage part is provided in a duct. In such a case, when a substance having a size which corresponds to a diameter of the duct and in particular, a threadlike substance is caught in the high voltage part, a short circuit in electrodes may occur, thereby leading to a hazard such as a fire.

Furthermore, in the method for producing the particulate composite body disclosed in Japanese Patent No. 2517877 (Patent Document 4), by using two pipes, fine particulates passing through one of the two pipes are electrified with positive static electricity and fine particulates passing through the other of the two pipes are electrified with negative static electricity, and thereafter, both of the particulates are mixed.

In order to provide the two passages as mentioned above, it is required to branch one pipe having one inlet halfway or to provide one pipe having two inlets. However, when the one pipe is branched halfway, accumulation of the fine particulates at a branched portion easily occurs. When in order to avoid the above-mentioned accumulation, the two inlets are provided, it is required to increase a distance between the two inlets, thereby not only increasing an area occupied by the pipes but also rendering a configuration thereof complicated.

Therefore, an object of the present invention is to provide a dust flocculating duct which has a simple configuration, is operable to facilitate the flocculation of particulates by increasing the number of times when the particulates collide with one another, and allows a reduction in the number of the particulates and an increase in an apparent diameter of each of the particulates.

In addition, when the multiple filters are provided in a duct of the vacuum cleaner in order to collect the fine dust, the suction force is reduced. Therefore, it is difficult to powerfully suck large dirt and the dust having a large mass.

Therefore, objects of the present invention are to provide an electrification gas passage member which has a simple configuration and is operable to flocculate the dust by electrifying the dust without reducing a suction flow amount and to provide a vacuum cleaner including the same.

### Means for solving the problems

A dust flocculating duct according to the present invention comprises: passage parts for flowing gas containing pieces of dust; a frictional electrification passage part disposed in the passage part and friction-electrifying the pieces of dust; and a collision promotion passage part disposed in the passage part, causing the pieces of dust electrified by the frictional electrification passage part to collide with each other, and facilitating formation of dust masses (clusters). In the dust flocculating duct, the frictional electrification passage part includes a first frictional electrification part made of a first material and a second frictional electrification part made of a second material, the collision promotion passage part is made of a third material, a contact potential difference of the first material is larger than a contact potential difference of the third material, and the contact potential difference of the third material is larger than a contact potential difference of the second material.

The higher a contact potential difference of a substance is, the stronger a power of the substance which deprives the other substance of electrons is when the substance contacts the other substance. In other words, a substance having a high contact potential difference is easily negatively electrified and easily positively electrifies a counterpart contacted by the substance. On the other hand, the lower a contact potential difference of a substance is, the more easily the substance is deprived of electrons by other substance when the substance having the lower contact potential difference contacts the other substance. In other words, a substance having a low contact potential difference is easily positively electrified and easily negatively electrifies a counterpart contacted by the substance.

Therefore, by employing the above-mentioned relationship of the contact potential differences of the materials, even in a case where there is a restriction on selection of the materials of the dust flocculating duct, the materials having the three different contact potential differences are selected and the above-mentioned magnitude relationship of the respective contact potential differences is arranged, thereby obtaining the dust flocculating duct having a high flocculation efficiency as compared with the conventional one.

As described above, while realizing a simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

In the dust flocculating duct according to the present invention, it is preferable that the frictional electrification passage part includes a first frictional electrification part made of a material which has a contact potential difference larger than a contact potential difference of predetermined dust circulating through the passage parts and a second frictional electrification part made of a material which has a contact potential difference smaller than the contact potential difference of the predetermined dust circulating through the passage parts, and the collision promotion passage part is made of a material which has a substantially same contact potential difference as the contact potential difference of the predetermined dust circulating through the passage parts.

This allows the dust, composed of a specific substance, to be effectively flocculated, causes the dust to grow so as to be large dust masses in clusters, and allows the dust to be collected by the dust collecting unit, thereby obtaining the dust flocculating duct having an extremely high dust collecting efficiency, as compared with the conventional one.

In the dust flocculating duct according to the present invention, it is preferable that the frictional electrification passage part includes a first frictional electrification part made of a material which has a contact potential difference larger than a maximum contact potential difference among contact potential differences of a plurality of pieces of dust circulating through the passage parts and a second frictional electrification part made of a material which has a contact potential difference smaller than a minimum contact potential difference among the contact potential differences of the plurality of pieces of dust circulating through the passage parts, and the collision promotion passage part is made of a material which has a substantially same contact potential difference as an average contact potential difference of the contact potential differences of the plurality of pieces of dust circulating through the passage parts.

This allows the dust, composed of the plurality of substances, to be effectively flocculated, causes the dust to grow so as to be large dust masses in clusters, thereby obtaining the dust flocculating duct having an extremely high dust collecting efficiency, as compared with the conventional one.

In addition, even in a case where composition of the dust to be flocculated is unknown, this allows the dust to be effectively flocculated and causes the dust to grow so as to be large dust masses in clusters, thereby obtaining the dust flocculating duct having an extremely high dust collecting efficiency, as compared with the conventional one.

In the dust flocculating duct according to the present invention, it is preferable that the frictional electrification passage part has a wall forming the frictional electrification passage part, and protrusions are formed on an inner surface of the wall.

This allows the gas flow, inside the frictional electrification passage part, to be agitated and a probability, with which the dust contacts the frictional electrification part, to be increased, thereby allowing the number of the electrified particulates of the dust to be increased and an electric charge amount in the dust to be increased.

In the dust flocculating duct according to the present invention, it is preferable that the collision promotion passage part has a wall forming the collision promotion passage part, and protrusions are formed on an inner surface of the wall.

This allows the particulates of the dust to effectively collide.

In the dust flocculating duct according to the present invention, it is preferable that the protrusions are formed so as to allow vortices to be generated in gas circulating on downstream sides of the protrusions.

By employing the above-described configuration, all the particulates mutually collide with one another due to the action of the vortices, thereby allowing dust masses (clusters) to be effectively formed.

In an electrification gas passage member according to the present invention, an inlet and an outlet communicate with each other so as to form a gas duct through which a gas flow passes through connection with a gas blower; a first electrification part for positively contact-electrifying dust and a second electrification part for negatively electrifying the dust are included; when the dust is transported by the gas flow through the gas duct, the dust is caused to contact one of the first electrification part and the second electrification part and to be electrified so as to have one of positive and negative polarities and the positively or negatively electrified dust is caused to form dust masses (clusters); an exterior frame disposed outside the first electrification part and the second electrification part is included; and the first electrification part and/or the second electrification part are/is disposed so as to be fitted into the exterior frame.

When the dust is transported through the gas passage by the gas flow, the dust contacts the first electrification part for positively contact-electrifying the dust or the second electrification part for negatively contact-electrifying the dust and is positively or negatively electrified, whereby the positively or negatively electrified dust can be caused to form the dust masses (clusters). This causes the positively or negatively electrified dust to mutually adsorb each other by utilizing static electricity action, thereby allowing the masses (clusters) of the dust to be formed. These dust masses are caused to grow so as to have appropriate sizes, thereby allowing a mass (weight) of the dust masses (clusters) to be increased and sizes of the clusters to be increased.

Furthermore, the electrification gas passage member includes the exterior frame disposed outside of the first electrification part and the second electrification part. The first electrification part and the second electrification part are disposed so as to be fitted into the exterior frame, whereby the disposition of the first electrification part and the second electrification part with respect to the gas passage can be determined and the first electrification part and the second electrification part can be easily fitted at accurate positions. The exterior frame, the first electrification part, and the second electrification part can be formed so as to be made of different materials, whereby the exterior frame, the first electrification part, and the second electrification part can be respectively formed by using the appropriate materials which are suited to perform functions required of the exterior frame, the first electrification part, and the second electrification part.

By employing the above-described configuration, the electrification gas passage member which has a simple configuration and is capable of electrifying and flocculating the dust without reducing a suction flow amount can be provided.

In the electrification gas passage member according to the present invention, it is preferable that the exterior frame and/or the first electrification part and the second electrification part have fitting parts for fitting the exterior frame and the first electrification part and the second electrification part, and the fitting parts are disposed along a direction of the gas flow.

By employing the above-described configuration, a disposition of the first electrification part and the second electrification part with respect to a circumferential direction of the gas passage can be determined. In addition, the first electrification part and the second electrification part are disposed so as to face each other in a horizontal direction, whereby the electrification becomes well-balanced.

In the electrification gas passage member according to the present invention, it is preferable that the exterior frame and/or the first electrification part and the second electrification part have fitting parts for fitting the exterior frame, and the first electrification part and the second electrification part and the fitting parts are disposed along a circumferential direction of the exterior frame.

By employing the above-described configuration, a disposition of the first electrification part and the second electrification part with respect to a direction of a gas flow of a gas passage can be determined and even if a wind pressure in the gas passage is increased or even if any influence of a kind of a fluid is exerted, shifting of the disposition of the first electrification part and the second electrification part in a direction of the gas flow can be avoided.

In the electrification gas passage member according to the present invention, it is preferable that the first electrification part and the second electrification part are formed so as to have external diameters of end portions thereof on an upstream side of the gas flow, which are larger than an internal diameter of the exterior frame.

By employing the above-described configuration, clearances among the exterior frame, the first electrification part, and the second electrification part can be covered on the upstream side with respect to the direction of the gas flow, thereby avoiding accumulation of the dust in the clearances among the exterior frame, the first electrification part, and the second electrification part and preventing an increase in a pressure loss.

In the electrification gas passage member according to the present invention, it is preferable that the exterior frame is formed so as to be integrated with one of the first electrification part and the second electrification part.

By employing the above-described configuration, the number of the components of which the electrification gas passage member is composed can be decreased and the number of processes in which the electrification gas passage member is assembled can be decreased, thereby allowing a reduction in the assembly working time. Moreover, a cost of manufacturing the electrification gas passage member can be reduced.

A vacuum cleaner according to the present invention includes: an electric gas blower; a gas duct for communicating from a suction inlet to the electric gas blower; and a dust collecting unit. The vacuum cleaner is operable to suck dust from the suction inlet through a gas flow generated by the electric gas blower and to collect in the dust collecting unit the dust passing through the gas duct. In the vacuum cleaner, in the gas duct, a first electrification part for positively contact-electrifying the dust and a second electrification part for negatively contact-electrifying the dust are provided. In the vacuum cleaner, an exterior frame disposed outside the first electrification part and the second electrification part is included and the first electrification part and/or the second electrification part are/is fitted into the exterior frame. In a process in which the dust passes through the gas duct, the vacuum cleaner is operable to cause the dust and dust, which have been electrified by the first electrification part and the second electrification part so as to have polarities which are different from each other, to form dust masses (clusters) and operable to collect in the dust collecting unit the dust grown as the dust masses.

In the vacuum cleaner according to the present invention, when the dust is transported by the gas flow through the gas passage, the dust contacts one of the first electrification part for positively contact-electrifying the dust and the second electrification part for negatively contact-electrifying the dust which are disposed on an upstream side of the dust collecting unit, and positively or negatively electrified dust can be formed. This causes the positively or negatively electrified dust to mutually adsorb each other by utilizing static electricity action, thereby allowing the masses (clusters) of the dust to be formed. These dust masses are caused to grow so as to have appropriate sizes, thereby allowing a mass (weight) of each of the dust masses (clusters) to be increased and a size of each of the clusters to be increased. The mass (weight) of each of the dust masses (clusters) is increased, whereby in a cyclone vacuum cleaner, the dust masses can be collected through centrifugal separation. In addition, in a filter-type vacuum cleaner, since the size of each of the dust masses can be made larger than a mesh size of a filter, the dust can be collected. In each case, since a pressure loss in suction gas hardly occurs, a problem that a dust suction power (power) of the vacuum cleaner main body is reduced is solved.

Furthermore, the electrification gas passage member includes the exterior frame disposed outside of the first electrification part and the second electrification part. The first electrification part and the second electrification part are disposed so as to be fitted into the exterior frame, whereby the disposition of the first electrification part and the second electrification part with respect to the gas passage can be determined and the first electrification part and the second electrification part can be easily fitted at accurate positions. The exterior frame, the first electrification part, and the second electrification part can be formed so as to be made of different materials, whereby the exterior frame, the first electrification part, and the second electrification part can be respectively formed by using the appropriate materials which are suited to perform the functions required of the exterior frame, the first electrification part, and the second electrification part.

As described above, the vacuum cleaner, including a cyclone dust collecting device, which has the simple configuration and allows enhancement of performance of collecting the fine dust without reducing the power can be provided.

In addition, the vacuum cleaner, including a filter-type dust collecting device, which has the simple configuration and allows enhancement of performance of collecting the fine dust without reducing the power can be provided.

A vacuum cleaner according to the present invention comprises: a suction inlet body having a suction inlet; an electric gas blower for generating suction gas; a main body having the electric gas blower thereinside; a gas suction pipe for communicating between the suction inlet body and the main body; and an electrification duct having a first electrification part for positively electrifying dust contained in the suction gas and a second electrification part for negatively electrifying the dust contained in the suction gas. In the vacuum cleaner, the gas suction pipe has: a first gas suction pipe connected to the suction inlet body; a second gas suction pipe connected to the first gas suction pipe such that one part of the first gas suction pipe is inserted to an inside of the second gas suction pipe on a downstream side of the first gas suction pipe with respect to the suction gas; a first connecting pipe connected to the second gas suction pipe on a downstream side of the second gas suction pipe with respect to the suction gas; a third gas suction pipe connected to the first connecting pipe on a downstream side of the first connecting pipe with respect to the suction gas; and a second connecting pipe for connecting the third gas suction pipe and the main body on a downstream side of the third gas suction pipe with respect to the suction gas. In the vacuum cleaner, the first gas suction pipe has stiffness and a relatively small diameter; the second gas suction pipe has stiffness and a relatively large diameter; the first connecting pipe has stiffness and a relatively large diameter and includes a handle to be held by a user; the third gas suction pipe has flexibility and a relatively large diameter; and the second connecting pipe has stiffness and a relatively large diameter. In the vacuum cleaner, the electrification duct is disposed inside one of the first connecting pipe and the second connecting pipe.

The dust flocculation effect is enhanced in accordance with an increase in a length of the electrification duct in a gas suction direction. On the other hand, in a case where the vacuum cleaner includes the electrification duct, the electrification duct is required to be disposed at a position where the suction gas passes. However, the length of the electrification duct is subject to restrictions or operability of the vacuum cleaner is reduced, depending on the position where the electrification duct is disposed.

Therefore, the electrification duct is disposed inside the first connecting pipe or the second connecting pipe, whereby the vacuum cleaner which has a simple configuration and is capable of electrifying and flocculating the dust without reducing a suction flow amount can be provided.

In the vacuum cleaner according to the present invention, it is preferable that the third gas suction pipe is connected to the first connecting pipe such that one part of the third gas suction pipe is inserted to an inside of the first connecting pipe; the electrification duct is disposed inside the first connecting pipe such that at least one part of the electrification duct is inserted to an inside of the third gas suction pipe; and a downstream end portion of the electrification duct, which is located on a downstream side of the suction gas, is located more upstream of the suction gas than an downstream end portion of the first connecting pipe, which is located on the downstream side of the suction gas.

By employing the above-described configuration, even when the third gas suction pipe having flexibility is curved, a curving degree is restricted by the first connecting pipe having the stiffness, and a stress exerted on the electrification duct inserted into the third gas suction pipe is drastically relieved. Consequently, in order to avoid an increase in a pressure loss inside the electrification duct, it is possible to increase an internal diameter of the electrification duct or to configure the electrification duct so as to have a double structure.

In addition, by employing the above-described configuration, since the downstream end of the electrification duct is covered by the third gas suction pipe and thereby, great sealing performance is attained, the air does not leak even without ultrasonic welding or screwing the components constituting the electrification duct. Thus, when the electrification duct is produced, a reduction in a production time, enhancement of a production efficiency, a reduction in a production cost, and the like are attained, thereby enhancing profitability.

In the vacuum cleaner according to the present invention, it is preferable that the electrification duct is held so as to be rotatable with respect to an axis of a direction in which the suction gas flows.

If the electrification duct is held such that the electrification duct does not rotate in the first connecting pipe or the second connecting pipe by fixing positions of the first connecting pipe or the second connecting pipe and the electrification duct, a twisting force is exerted when the vacuum cleaner is handled and a user has difficulty in cleaning.

Therefore, by employing the above-described configuration, operability of the vacuum cleaner is enhanced and a user can operate the vacuum cleaner without being subjected to a stress, thereby allowing a cleaning time and a power consumption to be reduced. Moreover, a force generated by the rotation of the third gas suction pipe having the flexibility is unlikely to be exerted on the electrification duct, thereby preventing the electrification duct from, for example, being deformed or damaged and attaining safety and long life of the vacuum cleaner.

An electrification gas passage member according to the present invention, in which an inlet and an outlet communicate with each other so as to form a gas duct through which a gas flow passes through connection with a gas blower, includes a first electrification part for positively contact-electrifying dust and a second electrification part for negatively electrifying the dust. In the electrification gas passage member, when the dust is transported by the gas flow through the gas duct, the dust is caused to contact one of the first electrification part and the second electrification part so as to have one of positive and negative polarities and the positively or negatively electrified dust is caused to form dust masses (clusters).

By employing the above-described configuration, when the dust is transported through the gas passage by the gas flow, the dust contacts the first electrification part for positively contact-electrifying the dust or the second electrification part for negatively contact-electrifying the dust and is positively or negatively electrified, whereby the positively or negatively electrified dust can be caused to form the dust masses (clusters). This causes the positively or negatively electrified dust to mutually adsorb each other by utilizing static electricity action, thereby allowing the masses (clusters) of the dust to be formed. These dust masses are caused to grow so as to have appropriate sizes, thereby allowing a mass (weight) of each of the dust masses (clusters) to be increased and a size of each of the clusters to be increased.

As a result, the electrification gas passage member which has a simple configuration and is capable of electrifying and flocculating the dust without reducing a suction flow amount can be provided.

In the electrification gas passage member according to the present invention, it is preferable that the gas duct further has deflecting parts for deflecting the gas flow in the gas duct.

This allows the gas flow, passing through the gas duct, to form vortices and a frequency at which the dust contained in the gas flow contacts the electrification members is increased, thereby efficiently electrifying and flocculating the dust.

In the electrification gas passage member according to the present invention, it is preferable that the first electrification part and/or the second electrification part extend/extends so as to form an angle with respect to a direction of the gas flow.

Depending on a shape of a gas passage pipe, a viscosity of a fluid containing the dust, or the like, the dust may be scarcely diffused in a direction intersecting the direction of the gas flow. In such a case, when the first electrification part and the second electrification part are disposed in the direction intersecting the direction of the gas flow, the positively electrified dust and the negatively electrified dust hardly approach each other due to the gas flow passing along the direction of the gas passage. In order for the Coulomb force and the Van der Waals force to effectively act, the positively electrified dust and the negatively electrified dust are required to approach each other to a certain extent. Therefore, when the positively electrified dust and the negatively electrified dust do not approach each other to the certain extent, it occurs that the Coulomb force and the Van der Waals force do not facilitate the dust flocculation.

Therefore, the first electrification part and/or the second electrification part are/is extended so as to form the angle with respect to the direction of the gas flow, that is, are/is skewed, whereby the dust flowing along the gas flow passes both of the first electrification part and the second electrification part. By employing the above-described configuration, even when the dust is not diffused in the direction intersecting the direction of the gas flow, the particulates of the dust approaches each other due to the turbulent flow components in the direction of the gas flow. When the positively electrified particulates and the negatively electrified particulates approach each other to the certain extent, the effect of the Coulomb force becomes prominent, and the positively electrified particulates and the negatively electrified particulates mutually attract each other and are flocculated, thereby becoming masses (clusters) of the particulates.

As described above, also in a case where the turbulent flow components in the direction intersecting the direction of the gas flow are small or where the turbulent flow components in the direction of the gas flow are large, the dust can be sufficiently flocculated.

It is preferable that the electrification gas passage member according to the present invention includes a joining member, and in the electrification gas passage member, the first electrification parts and the second electrification parts constitute one electrification part pair, respectively and a plurality of the electrification part pairs are respectively disposed so as to be arranged via the joining member.

For example, when a cylindrical pipe is formed by assembling such half-cylinder-shaped pipes made of different materials through fitting-in or screwing, a strength thereof is generally inferior to that of a cylindrical pipe made of a single material. Therefore, when a strong cylindrical pipe is required, for example, in a case where a supporting member is incorporated into the cylindrical pipe or where an external pressure is exerted on the cylindrical pipe such that the cylindrical pipe is collapsed, a countermeasure such as increasing a wall thickness of the cylindrical pipe is required.

Therefore, by connecting the plurality of the electrification part pairs by using the common joining member, the electrification gas passage member having a simple configuration can be formed by combining the different materials so as to have a sufficient strength.

In the electrification gas passage member according to the present invention, it is preferable that the first electrification parts and the second electrification parts constitute one electrification part pair so as to be arranged in a circumferential direction of a cross section of a gas passage, which intersects the direction of the gas flow, and a plurality of the electrification part pairs are respectively disposed so as to be arranged in the circumferential direction.

By employing the above-described configuration, on a plane perpendicular to the direction of the gas flow, distances between the particulates contact-electrified so as to have the positive electric charge and the particulates contact-electrified so as to have the negative electric charge are decreased.

As described above, when the distances between the particulates having the positive electric charge and the particulates having the negative electric charge are decreased, the Coulomb force easily acts on the respective particulates. In addition, a probability with which the particulates having the positive electric charge and the particulate having the negative electric charge approach each other is increased. Accordingly, the respectively electrified particulates are flocculated to easily grow to be the masses.

In the electrification gas passage member according to the present invention, it is preferable that the first electrification parts and the second electrification parts are arrange in the direction of the gas flow and constitute one electrification part pair and a plurality of the electrification part pairs are respectively disposed so as to be arranged in the direction of the gas flow.

Depending on a shape of a gas passage pipe, a viscosity of a fluid containing the dust, or the like, the dust may be scarcely diffused in a direction intersecting the direction of the gas flow. In such a case, even when the first electrification part and the second electrification part are disposed in the direction intersecting the direction of the gas flow, the positively electried dust and the negatively electrified dust hardly approach each other due to the gas flow passing along a direction of a gas passage. In order for the Coulomb force and the Van der Waals force to effectively act, the positively electrified dust and the negatively electrified dust are required to approach each other to a certain extent. Therefore, when the positively electrified dust and the negatively electrified dust do not approach each other to the certain extent, it occurs that the Coulomb force and the Van der Waals force do not facilitate the dust flocculation.

For example, it is supposed that in the gas duct, turbulent flow components are generated in the direction of the gas flow and turbulent flow components, which are substantially equal to the turbulent flow components generated in the direction of the gas flow, are generated in the direction intersecting the direction of the gas flow. At this time, in the above-described configuration, the first electrification part and the second electrification part are disposed alternately also along the direction of the gas flow, whereby a part of the positively electrified dust and a part of the negatively electrified dust approach each other due to the turbulent flow components along the direction of the gas flow. When the positively electrified particulates and the negatively electrified particulates approach each other to the certain extent, the effect of the Coulomb force becomes prominent, the positively electrified particulates and the negatively electrified particulates mutually attract each other and are flocculated, thereby becoming the masses (clusters) of the particulates.

By employing the above-described configuration, an efficiency of electrifying the particulates is increased, and an effect of the flocculation is enhanced. In particular, in a case where the turbulent flow components in the direction perpendicular to the direction of the gas flow are small and where the turbulent flow components in the direction of the gas flow are large, the effect of the flocculation is enhanced.

In the electrification gas passage member according to the present invention, it is preferable that the first electrification parts and the second electrification parts constitute one electrification part pair, respectively and a plurality of the electrification part pairs are arranged in the circumferential direction of the cross section of the gas duct, which intersects the direction of the gas flow, and in the direction of the gas flow such that the first electrification parts included in the plurality of the electrification part pairs do not mutually neighbor each other, respectively and the second electrification parts included in the plurality of the electrification part pairs do not mutually neighbor each other, respectively.

By employing the above-described configuration, an efficiency of electrifying the particulates is increased, and an effect of the flocculation is enhanced. In particular, in a case where the turbulent flow components in the direction perpendicular to the direction of the gas flow are small and where the turbulent flow components in the direction of the gas flow are large, the effect of the flocculation is enhanced.

In the electrification gas passage member according to the present invention, it is preferable that in the first electrification part and the second electrification part included in the gas duct, an area occupied by the electrification part which contact-electrifies a relatively large amount of the dust is smaller than an area occupied by the other electrification part.

For example, it is supposed that a half of the dust flowing inside the gas passage member is positively electrified by the first electrification part for positively contact-electrifying the particulates so as to have a certain electric charge amount. It is also supposed that the remaining half of the dust is negatively electrified by the second electrification part for negatively contact-electrifying the particulates so as to have the same electric charge amount as mentioned above. At this time, since the positive and negative electrification distribution is even, in a case where the Coulomb force is dominant in the mutual flocculation of the particulates, a flocculation efficiency is highest. However, in general, since an electrochemical potential of a solid substance is specific thereto, disproportion between the positive electrification amount and the negative electrification amount in the whole dust occurs. Therefore, as compared with the case where distribution of the positive and negative electrification of the dust is even, a flocculation efficiency is reduced in the case where the disproportion between the positive electrification amount and the negative electrification amount in the whole dust occurs.

Therefore, a proportion of an area which the first electrification part occupies in the gas passage member is made different from a proportion of an area which the second electrification part occupies in the gas passage member, thereby allowing the positive and negative electrification amounts to be even. In accordance with dust which most frequently flows in the gas passage member, a proportion of an area which the first electrification part occupies in the gas passage member is made different from a proportion of an area which the second electrification part occupies in the gas passage member, thereby realizing the electrification gas passage member which attains a high flocculation efficiency.

In the electrification gas passage member according to the present invention, it is preferable that the first electrification part and/or the second electrification part are/is made of a polymer resin.

In a case where the electrification parts are formed by using respective materials for positively and negatively contact-electrifying the dust, a raw material cost increases depending on kinds of the materials. In addition, processing is difficult depending on a disposition and a configuration of the materials.

Therefore, for example, the polypropylene is used as the material of which the first electrification part is made and the nylon 66 is used as the material of which the second electrification part is made, that is, the polymer resins which are available at a low cost as industrial materials are used to form the electrification parts, thereby allowing a reduction in the cost. In addition, even in a case where a complicated shape is required, such as a case where the respective electrification parts are fitted into each other, when thermoplastic resins are used, mass production is enabled by employing a processing method such as extrusion molding and injection molding.

In the electrification gas passage member according to the present invention, it is preferable that the first electrification part and/or the second electrification part are/is made of a polymer resin mixed with an electrically conductive filler.

When dielectric materials are used as the respective materials for positively and negatively contact-electrifying the dust, a contact electrification amount is comparatively early saturated. Therefore, an amount of the electrified particulates gradually decreases in accordance with an increase in an amount of the particulates to be electrified, thereby incurring a problem that flocculation performance is deteriorated. This occurs because even when electrons and electron holes are supplied in the vicinity of a material surface through the contact electrification, the electrons and the electron holes are hardly diffused inside of the materials due to a high resistivity of the dielectric materials. In other words, this occurs because the transferred electrons and the electron holes are accumulated in the vicinity of the material surface and an electric potential of the material surface is greatly changed, thereby hampering a subsequent electric charge transfer.

Therefore, by using the polymer resin mixed with the electrically conductive filler to form the electrification parts for contact-electrifying the dust, the contact electrification amount is hardly saturated, thereby allowing realization of the electrification gas passage member which allows a reduction in the cost, is easily processed, and maintains the dust flocculation performance.

In the electrification gas passage member according to the present invention, it is preferable that the second electrification part is made of glass.

The glass is more easily positively electrified than polystyrene and the nylon which are the polymer resins. The second electrification part which is made of the glass is more easily positively electrified than a second electrification part which is made of, for example, these polystyrene and nylon. In other words, the dust is further easily negatively electrified by the second electrification part made of the glass.

As described above, the glass is used as the material for negatively contact-electrifying the dust, whereby the dust is sufficiently contact-electrified and a flocculation effect is enhanced.

In the electrification gas passage member according to the present invention, it is preferable that the second electrification part is made of a polymer resin containing a glass filler.

As the material for negatively contact-electrifying the particulates, the polymer resin mixed with the glass filler is used, thereby avoiding danger of breakage or the like which may occur in a case where the glass is singly used and moreover, allowing enhancement of a flocculation effect through sufficiently electrifying the particulates by utilizing high contact electrification properties of the glass.

In the electrification gas passage member according to the present invention, it is preferable that the first electrification part and/or the second electrification part are/is made of a conductive material.

In a case where a gas duct is formed by using respective materials for positively and negatively contact-electrifying particulates, when dielectric materials are used as these materials, a contact electrification amount is comparatively early saturated. Therefore, an amount of the electrified particulates gradually decreases in accordance with an increase in an amount of the particulates to be electrified, thereby incurring a problem that flocculation performance is deteriorated. This occurs because even when electrons and electron holes are supplied in the vicinity of a material surface through contact electrification, the electrons and the electron holes are hardly diffused inside of the material due to a high resistivity of the dielectric material. In other words, this occurs because the transferred electrons and the electron holes are accumulated in the vicinity of the material surface and an electric potential of the material surface is greatly changed, thereby hampering a subsequent electric charge transfer.

In addition, metal is more easily positively electrified than, for example, the polystyrene as one example of a material of which dust is composed. Accordingly, when the second electrification part for negatively contact-electrifying the dust is made of the conductive material, the contact electrification amount is hardly saturated, thereby allowing realization of the electrification gas passage member in which the particulate flocculation performance is maintained.

In the electrification gas passage member according to the present invention, it is preferable that the second electrification part is made of a stainless steel.

For example, whereas a resistivity of the nylon 66 which is the polymer resin is approximately 10¹⁰ Ω·m, a resistivity of the stainless steel is very small, approximately 10⁻⁷ Ω·m. Therefore, even when the electron holes on a surface of the nylon 66 increase through contact electrification, the electrons are hardly conducted inside of the nylon 66, an surface potential increases, this compensates a chemical potential, and a contact electrification amount is saturated. On the other hand, when the electron holes on a surface of the stainless steel, which is metal having a small resistivity, increase through contact electrification, the electrons are quickly conducted inside of the stainless steel, a surface potential scarcely increases, and a contact electrification amount is hardly saturated. In other words, since the electrons can be continued to be supplied to the dust which contacts the electrification part, flocculation performance due to the Coulomb force is also maintained.

Accordingly, when the second electrification part for negatively contact-electrifying the dust is made of the stainless steel, the contact electrification amount is hardly saturated, thereby allowing realization of the electrification gas passage member in which the particulate flocculation performance is maintained.

In the electrification gas passage member according to the present invention, it is preferable that the second electrification part is made of aluminum.

A resistivity of the aluminum which is a conductive material is very small, approximately 10⁻⁸Ω· m. Therefore, when the electron holes on a surface of the aluminum increase through contact electrification, the electrons are quickly conducted inside of the aluminum, a surface potential scarcely increases, and a contact electrification amount is hardly saturated. In other words, since the electrons can be continued to be supplied to the dust which contacts the electrification part, flocculation performance due to the Coulomb force is also maintained. In addition, a specific gravity of the aluminum is approximately one third of that of iron and a specific strength of the aluminum is equal to that of the iron. Thus, the electrification gas passage member which is very lightweight and has excellent contact electrification properties can be realized.

Accordingly, the second electrification part for negatively contact-electrifying the dust is made of the aluminum, thereby allowing the realization of the electrification gas passage member which is lightweight and enables the particulate flocculation performance to be maintained.

A vacuum cleaner according to the present invention includes: an electric gas blower; a gas duct for communicating from a suction inlet to the electric gas blower; and a dust collecting unit. The vacuum cleaner is operable to suck dust from the suction inlet through a gas flow generated by the electric gas blower and to collect in the dust collecting unit the dust passing through the gas duct. In the vacuum cleaner, in the gas duct, a first electrification part for positively electrifying the dust and a second electrification part for negatively electrifying the dust are provided. In a process in which the dust passes through the gas duct, the vacuum cleaner is operable to cause the pieces of dust, which have been electrified by the first electrification part and the second electrification part so as to have polarities which are different from each other, to form dust masses (clusters) and is operable to collect in the dust collecting unit the dust grown as the dust masses.

In the vacuum cleaner according to the present invention, when the dust is transported by the gas flow through the gas passage, the dust contacts the first electrification part for positively contact-electrifying the dust or the second electrification part for negatively contact-electrifying the dust, which are disposed on an upstream side of the dust collecting unit, and positively or negatively electrified dust can be formed. This causes the positively or negatively electrified dust to mutually adsorb each other by utilizing static electricity action, thereby allowing the masses (clusters) of the dust to be formed. These dust masses are caused to grow so as to have appropriate sizes, thereby allowing a mass (weight) of each of the dust masses (clusters) to be increased and a size of each of the clusters to be increased. The mass (weight) of each of the dust masses (clusters) is increased, whereby in a cyclone vacuum cleaner, the dust masses can be collected through centrifugal separation. In addition, in a filter-type vacuum cleaner, since the size of each of the dust masses can be made larger than a mesh size of a filter, the dust can be collected. In each case, since a pressure loss in suction gas hardly occurs, a problem that a dust suction power (power) of the vacuum cleaner main body is reduced is solved.

As described above, the vacuum cleaner, including a cyclone dust collecting device, which has the simple configuration and allows enhancement of performance of collecting the fine dust without reducing the power can be provided.

In addition, the vacuum cleaner, including a filter-type dust collecting device, which has the simple configuration and allows enhancement of performance of collecting the fine dust without reducing the power can be provided.

In the conventional dust collecting method, there may be a case where the fine dust is not collected and leaks out. In a case of the vacuum cleaner having the filter, when in order to cope with this, a mesh size of a filter is reduced, there arises a problem that a suction force is reduced. Furthermore, in a case of the vacuum cleaner having the cyclone-type dust collecting unit, when in order to cope with this, a swirling velocity is increased, there arises a problem that a power consumption is increased.

In order to solve these problems, as described above, in the vacuum cleaner, the frictional electrification resin pipe for contact-electrifying the dust is disposed in the gas duct through which the dust circulates. This frictional electrification resin pipe has: the first electrification part which is made of the polypropylene, polytetrafluoroethylene, etc. and positively electrifies the dust through contacting; and the second electrification part which is made of the polypropylene, etc. and negatively electrifies the dust through contacting.

While circulating through the frictional electrification resin pipe, the dust which contacts the first electrification part is positively electrified and the dust which contacts the second electrification part is negatively electrified. The positively electrified dust and the negatively electrified dust mutually attract each other mainly due to the Coulomb force and are flocculated, thereby forming the dust masses (clusters). This allows the fine dust to grow so as to be the clusters of the particulates and to be easily collected.

However, when in the frictional electrification resin pipe, resins such as polyamide and polytetrafluoroethylene which have excellent frictional electrification properties are used, since such resins are expensive, a material cost increases. In addition, although the polypropylene is very excellent as an industrial material, when moldability and how to cope with embrittlement under a low temperature condition are considered, the ABS resin is more advantageous for an application to a pipe in the vacuum cleaner or the like to which the present invention is mainly applied.

Another aspect of the present invention is to provide a frictional electrification resin pipe which can be formed easily and at a low cost and a vacuum cleaner using the same.

In order to achieve the above-mentioned object, the present invention is characterized in that a frictional electrification resin pipe is made of a tubular resin and operable to electrify a substance passing therethrough by contact and friction. The frictional electrification resin pipe comprises a first electrification part for positively electrifying the substance and a second electrification part for negatively electrifying the substance. In the frictional electrification resin pipe, at least one of the first electrification part and the second electrification part has a charge control agent, for promoting the electrification, in a surface of the resin.

In the above-described configuration, while circulating through the frictional electrification resin pipe, the substance which contacts the first electrification part is positively electrified and the substance which contacts the second electrification part is negatively electrified. The positively electrified substance and the negatively electrified substance mutually attract each other mainly due to the Coulomb force and are flocculated, thereby forming the substance masses (clusters). The charge control agent is provided in the surface of at least one of the first electrification part and the second electrification part and promotes the electrification of the contacted substance. In a case where one of the first electrification part and the second electrification part contains no charge control agent, the one of the first electrification part and the second electrification part, which contains no charge control agent, is made of a resin, such as the polypropylene and the polyamide, which has a frictional electrification effect. In addition, the first electrification part and the second electrification part may be provided so as to be arranged in an axial direction and may be formed so as to respectively have arch-shaped cross sections and provided so as to be arranged in a circumferential direction.

The present invention is characterized in that in the frictional electrification resin pipe having the above-described configuration, particulates of the charge control agent are kneaded in one of the first electrification part and the second electrification part. In the above-mentioned configuration, a powdery or liquefied charge control agent is kneaded in a dissolved resin, whereby the particulates of the charge control agent is kneaded in the resin.

In addition, the present invention is characterized in that in the frictional electrification resin pipe having the above-described configuration, a density of the charge control agent in an inner surface side is higher than a density of the charge control agent in an outer surface side.

The present invention is characterized in that in the frictional electrification resin pipe having the above-described configuration, the resins of which the first electrification part and the second electrification part are made are same as each other. The first electrification part and the second electrification part in this configuration are simultaneously formed through two-color molding or the like.

The present invention is characterized in that in the frictional electrification resin pipe having the above-described configuration, the particulates of the charge control agent are fixedly adhered to the inner surface of one of the first electrification part and the second electrification part. In the above-described configuration, a powdery or liquefied charge control agent are spread on the surface of the tubular resin and a layer of the particulates of the charge control agent is formed on the surface of the resin.

The present invention is characterized in that in the frictional electrification resin pipe having the above-described configuration, the inner surface of one of the first electrification part and the second electrification part is dissolved, has the charge control agent fixedly adhered therein, and has a softening temperature lower than a decomposition temperature of the charge control agent. In the above-described configuration, a temperature of the inner surface of the resin forming the one of the first electrification part and the second electrification part is increased and the inner surface is molten. At this time, due to a high decomposition temperature of the charge control agent, the charge control agent is not decomposed, and the charge control agent is fixedly adhered to the inner surface of the resin.

The present invention is characterized in that in the frictional electrification resin pipe having the above-described configuration, protrusions are provided on the inner surface of one of the first electrification part and the second electrification part, to which the charge control agent is fixedly adhered, and the inner surface is dissolved by causing a heating part to contact the protrusions. In the above-described configuration, the heating part is caused to contact the protrusions formed on the inner surface of the one of the first electrification part and the second electrification part and the protrusions are dissolved, whereby the heating part is closely attached to the whole inner surface of the one of the first electrification part and the second electrification part.

The present invention is characterized in that the frictional electrification resin pipe having the above-described configuration is formed so as to be tubular by jointing the first electrification part and the second electrification part having arch-shaped cross sections.

The present invention is characterized in that a frictional electrification resin pipe is made of a tubular resin and operable to electrify a substance, which passes therethrough and is subjected to friction, through contacting and the friction, the frictional electrification resin pipe having a charge control agent in a surface of the resin. In the above-described configuration, the substance which passes through the frictional electrification resin pipe having the charge control agent and contacts the frictional electrification resin pipe is positively or negatively electrified. The charge control agent may be fixedly adhered to a side of the inner surface of the tubular resin and may be kneaded in the side of the inner surface thereof.

The present invention is characterized in that in the frictional electrification resin pipe having the above-described configuration, a density of the charge control agent on a side of the inner surface is higher than a density of the charge control agent on a side of an outer surface.

A vacuum cleaner according to the present invention is characterized in that the frictional electrification resin pipe having the above-described configuration is disposed in a gas duct thereof, through which dust circulates, and the dust is positively electrified by a first electrification part and the dust is negatively electrified by a second electrification part.

In the above-described configuration, while circulating through the frictional electrification resin pipe, the dust which contacts the first electrification part is positively electrified and the dust which contacts the second electrification part is negatively electrified. The positively electrified dust and the negatively electrified dust mutually attract each other mainly due to the Coulomb force and are flocculated, thereby forming the dust masses (clusters). The dust which has been grown to be large particulates in clusters is collected by a filter-type or a cyclone-type dust collecting unit.

A vacuum cleaner according to the present invention is characterized in that a plurality of the frictional electrification resin pipes each having the above-described configuration are disposed in a gas duct thereof, through which dust circulates, and the dust is positively electrified by one of the frictional electrification resin pipes and the dust is negatively electrified by another of the frictional electrification resin pipes.

In the above-described configuration, while circulating through the frictional electrification resin pipe, the dust which contacts one of the frictional electrification resin pipes is positively electrified and the dust which contacts the other frictional electrification resin pipe is negatively electrified. The positively electrified dust and the negatively electrified dust mutually attract each other mainly due to the Coulomb force and are flocculated, thereby forming the dust masses (clusters).

### EFFECT OF THE INVENTION

As described above, according to the present invention, while realizing a simple configuration, the dust flocculating duct which is capable of increasing the number of times when particulates of dust mutually collide with one another, thereby facilitating flocculation, reducing the number of the particulates, and increasing apparent diameters of the particulates can be provided.

As described above, according to the present invention, the electrification gas passage member which has a simple configuration and is capable of electrifying and flocculating the dust without reducing a suction flow amount and a vacuum cleaner including the same can be provided.

In addition, according to the present invention, since the frictional electrification resin pipe includes the first electrification part for positively electrifying a substance subjected to friction and the second electrification part for negatively electrifying the substance subjected to the friction, the substance subjected to the friction can be made to be the clusters. Accordingly, the dust can be easily collected by using the filter-type or cyclone-type dust collecting unit. In addition, since at least one of the first and second electrification parts contains the charge control agent for promoting the electrification, the frictional electrification resin pipe which has a high strength and a simple configuration can be formed. Accordingly, the frictional electrification resin pipe can be formed easily and at a low cost.

In addition, according to the present invention, since the particulates of the charge control agent are kneaded in the first or second electrification part and, the frictional electrification resin pipe having the charge control agent which is exposed on a surface thereof can be easily formed through molding.

In addition, according to the present invention, the density of the charge control agent on the side of the inner surface is higher than the density of the charge control agent on the side of the outer surface, whereby the effect of electrifying the substance subjected to the friction can be maintained and a reduction in the charge control agent is enabled. Accordingly, the frictional electrification resin pipe can be obtained at a further low cost.

In addition, according to the present invention, since the materials of which the first and second electrification parts and are made are the same resin, the first and second electrification parts can be easily and simultaneously formed, thereby allowing the frictional electrification resin pipe to be formed at a further low cost.

In addition, according to the present invention, the particulates of the charge control agent are fixedly adhered to the inner surface of the first electrification part or the second electrification part, whereby the effect of electrifying the substance subjected to the friction can be maintained and a reduction in the charge control agent is enabled. Accordingly, the frictional electrification resin pipe can be obtained at a further low cost.

In addition, according to the present invention, the inner surface of the first electrification part or the second electrification part, whose softening temperature is lower than the decomposition temperature of the charge control agent, is molten and has the charge control agent fixedly adhered thereto, thereby preventing performance degradation of the charge control agent and easily distributing the charge control agent on the inner surface of the frictional electrification resin pipe.

In addition, according to the present invention, the inner surface is molten by closely attaching the heating part to the protrusions provided on the inner surface of the first electrification part or the second electrification part, to which the charge control agent is fixedly adhered, thereby closely attaching the whole inner surface of the frictional electrification resin pipe to the heating part and allowing the whole inner surface of the frictional electrification resin pipe to be evenly heated. Accordingly, the charge control agent can be evenly distributed and the substance subjected to the friction, whose electrification is insufficient, can be decreased.

In addition, according to the present invention, the frictional electrification resin pipe is formed by jointing the first electrification part and the second electrification part having the arch-shaped cross sections so as to be tubular, whereby the substance subjected to the friction, which passes therethrough, can be positively and negatively electrified in an even manner.

In addition, according to the present invention, the frictional electrification resin pipe has on the surface thereof the charge control agent for promoting the electrification, thereby ensuring a high strength and allowing the substance subjected to the friction to be easily electrified. Moreover, the frictional electrification resin pipe can be simplified and formed easily and at a low cost.

In addition, in the vacuum cleaner according to the present invention, the frictional electrification resin pipe having the first electrification part and the second electrification part is disposed in the gas duct therein, through which the dust circulates, thereby allowing the dust to be the clusters and to be easily collected.

In addition, in the vacuum cleaner according to the present invention, the frictional electrification resin pipe for positively electrifying the dust and the frictional electrification resin pipe for negatively electrifying the dust are disposed in the gas duct therein, thereby allowing the dust to be the clusters and to be easily collected.

### BRIEF DESCRIPTION OF THE DRAWINGS

Fig. 1 is a schematic diagram illustrating a gas flow inside a cylindrical pipe.
Fig. 2 is a diagram illustrating a configuration of a first frictional electrification part and a second frictional electrification part of a frictional electrification passage part of one embodiment according to the present invention.
Fig. 3 is a diagram illustrating assembly of the first frictional electrification part and the second frictional electrification part of the frictional electrification passage part according to the one embodiment of the present invention.
Fig. 4 shows a cross sectional view of the frictional electrification passage part, taken from line A-A' in Fig. 3.
Fig. 5 is a diagram illustrating a manner in another case, in which the dust mass is formed according to the present invention.
Fig. 6 is a schematic diagram illustrating a manner in which particulates are flocculated in a case where a gas flow inside a passage has a laminar flow velocity distribution.
Fig. 7 is a schematic diagram illustrating an influence which a velocity gradient exerts on particulates having large diameters in a case where a gas flow inside the passage has the laminar flow velocity distribution.
Fig. 8 is a schematic diagram illustrating an influence which the velocity gradient exerts on particulates having small diameters in a case where the gas flow inside the passage has the laminar flow velocity distribution.
Fig. 9 is a diagram showing a triboelectric series indicating easiness of electrification of materials.
Fig. 10 is a diagram illustrating a whole of a vacuum cleaner which comprises a dust flocculating duct according to the present invention.
Fig. 11 is a diagram illustrating a whole of a vacuum cleaner in an embodiment 1-1-2 according to the present invention, which comprises a dust flocculating duct according to the present invention.
Fig. 12 is an explanatory diagram illustrating a configuration of a main body of the vacuum cleaner according to the present invention.
Fig. 13 shows a cross-sectional view of a connecting pipe in which a frictional electrification passage part is disposed.
Fig. 14 shows a cross-sectional view of a joining section in the embodiment 1-1-2 according to the present invention.
Fig. 15 shows a perspective view in which an important part of a frictional electrification passage part of an embodiment 1-2-1 is viewed in a perspective manner.
Fig. 16 shows an elevation view illustrating the important part of the frictional electrification passage part of the embodiment 1-2-1.
Fig. 17 shows a cross-sectional side view of the frictional electrification passage part of the embodiment 1-2-1.
Fig. 18 shows a perspective view in which an important part of a collision promotion passage part of an embodiment 1-2-2 is viewed in a perspective manner.
Fig. 19 shows an elevation view illustrating the important part of the collision promotion passage part of the embodiment 1-2-2.
Fig. 20 shows a cross-sectional side view of the collision promotion passage part of the embodiment 1-2-2.
Fig. 21 is a schematic diagram illustrating one arrangement of the protrusions in the embodiment 1-2-2.
Fig. 22 is a schematic diagram illustrating another arrangement of the protrusions in the embodiment 1-2-2.
Fig. 23 is a schematic diagram illustrating further another arrangement of the protrusions in the embodiment 1-2-2.
Fig. 24 is a schematic diagram illustrating still further another arrangement of the protrusions in the embodiment 1-2-2.
Fig. 25 is a schematic diagram illustrating yet further another arrangement of the protrusions in the embodiment 1-2-2.
Fig. 26 is a diagram illustrating an arrangement of neighboring protrusions in the collision promotion passage part of the embodiment 1-2 -2.
Fig. 27 shows a perspective view illustrating an important part of a frictional electrification passage part and/or a collision promotion passage part of an embodiment 1-2-3 according to the present invention.
Fig. 28 shows an elevation view illustrating the important part of the frictional electrification passage part and/or the collision promotion passage part of the embodiment 1-2-3 according to the present invention.
Fig. 29 shows a cross-sectional side view illustrating the frictional electrification passage part and/or the collision promotion passage part of the embodiment 1-2-3.
Fig. 30 is a schematic diagram illustrating a gas flow around a protrusion in the frictional electrification passage part and/or the collision promotion passage part of the embodiment 1-2-3.
Fig. 31 is a schematic diagram illustrating vortices occurring around the protrusion.
Fig. 32 is a schematic diagram illustrating a view of the vortices generated due to the protrusion in the embodiment 1-2-3 according to the present invention. Fig. 32 (A) shows an elevation view in which the passage is viewed from a front side and Fig. 32 (B) shows a side view in which the passage is viewed from a lateral side.
Fig. 33 shows a perspective view illustrating an important part of a frictional electrification passage part and/or a collision promotion passage part of an embodiment 1-2-4 according to the present invention.
Fig. 34 shows an elevation view illustrating the important part of the frictional electrification passage part and/or the collision promotion passage part of the embodiment 1-2-4.
Fig. 35 shows a cross-sectional side view illustrating the frictional electrification passage part and/or the collision promotion passage part of the embodiment 1-2-4.
Fig. 36 is a schematic diagram illustrating a gas flow around a protrusion in the frictional electrification passage part and/or the collision promotion passage part of the embodiment 1-2-4.
Fig. 37 shows perspective view illustrating an important part of a frictional electrification passage part and/or a collision promotion passage part of an embodiment 1-2-5 according to the present invention.
Fig. 38 shows an elevation view illustrating the important part of the frictional electrification passage part and/or the collision promotion passage part of the embodiment 1-2-5.
Fig. 39 shows a cross-sectional side view illustrating the frictional electrification passage part and/or the collision promotion passage part of the embodiment 1-2-5.
Fig. 40 is a schematic diagram illustrating a view of vortices generated around the protrusions in the frictional electrification passage part and/or the collision promotion passage part of the embodiment 1-2-5.
Fig. 41 shows a perspective view in which an important part of a frictional electrification passage part and/or a collision promotion passage part of an embodiment 1-2-6 according to the present invention is viewed in a perspective manner.
Fig. 42 shows an elevation view illustrating the important part of the frictional electrification passage part and/or the collision promotion passage part of the embodiment 1-2-6.
Fig. 43 is a diagram illustrating a protrusion in the embodiment 1-2 -6. Fig. 43 (A) shows a bottom view of the protrusion. Fig. 43 (B) shows a side view of the protrusion. Fig. 43 (C) shows an elevation view of the protrusion.
Fig. 44 is a schematic diagram illustrating a gas flow around the protrusion of the embodiment 1-2-6.
Fig. 45 is a schematic diagram illustrating a view of the vortices generated due to the protrusions in the embodiment 1-2-6 according to the present invention.
Fig. 46 shows a perspective view in which an important part of the frictional electrification passage part and/or the collision promotion passage part of the embodiment 1-2-6 according to the present invention, in which protrusions each having another shape are disposed, is viewed in a perspective manner.
Fig. 47 shows an elevation view illustrating the important part of the frictional electrification passage part and/or the collision promotion passage part of the embodiment 1-2-6 according to the present invention, in which the protrusions each having the another shape are disposed.
Fig. 48 shows a cross-sectional side view illustrating the frictional electrification passage part and/or the collision promotion passage part of the embodiment 1-2-6 according to the present invention, in which the protrusions each having the another shape are disposed.
Fig. 49 shows a perspective view in which an important part of a frictional electrification passage part and/or a collision promotion passage part of an embodiment 1-2-7 according to the present invention is viewed in a perspective manner.
Fig. 50 shows an elevation view illustrating the important part of the frictional electrification passage part and/or the collision promotion passage part of the embodiment 1-2-7.
Fig. 51 shows a cross-sectional side view of the frictional electrification passage part and/or the collision promotion passage part of the embodiment 1-2-7.
Fig. 52 is a diagram illustrating an overhead view (A) and a lateral view (B) of a shape of each of the protrusions in the embodiment 1-2-7.
Fig. 53 shows a perspective view in which an important part of a frictional electrification passage part and/or a collision promotion passage part of an embodiment 1-2-8 is viewed in a perspective manner.
Fig. 54 shows an elevation view illustrating the important part of the frictional electrification passage part and/or the collision promotion passage part of the embodiment 1-2-8.
Fig. 55 shows a cross-sectional side view illustrating the important part of the frictional electrification passage part and/or the collision promotion passage part of the embodiment 1-2-8.
Fig. 56 is a diagram illustrating a whole of an electrification gas passage member of an embodiment 2-1 according to the present invention.
Fig. 57 is a diagram illustrating a whole of an electrification gas passage member of an embodiment 2-2 according to the present invention.
Fig. 58 is a diagram illustrating a duct of an embodiment 2-3 according to the present invention, into which an electrification gas passage member is incorporated.
Fig. 59 is a diagram illustrating a connecting pipe of a vacuum cleaner, as an embodiment 2-4 according to the present invention.
Fig. 60 is a diagram illustrating an extension pipe of a vacuum cleaner, as an embodiment 2-5 according to the present invention.
Fig. 61 is a diagram illustrating a whole of a vacuum cleaner, as an embodiment 2-6 according to the present invention.
Fig. 62 is an explanatory diagram illustrating a configuration of an electrification duct as one embodiment according to the present invention in a case where protuberances are provided on the inner surface.
Fig. 63 is a diagram illustrating a detailed shape of each of the protuberances shown in Fig. 67.
Fig. 64 is a diagram illustrating a whole of the electrification duct of the embodiment 3-1 according to the present invention.
Fig. 65 is an explanatory diagram illustrating an embodiment 4-3 according to the present invention.
Fig. 66 is an explanatory diagram illustrating an embodiment 4-4 according to the present invention.
Fig. 67 illustrates an embodiment 4-5 according to the present invention and is an explanatory diagram illustrating a configuration of an inner surface side of an extension pipe.
Fig. 68 is a diagram explaining a detailed shape of a protuberance shown in Fig. 67.
Fig. 69 is a diagram illustrating a whole of an electrification gas passage member of an embodiment 4-6 according to the present invention.
Fig. 70 is a diagram illustrating a whole of an electrification gas passage member of an embodiment 4-7 according to the present invention.
Fig. 71 is a diagram illustrating a whole of an electrification gas passage member of an embodiment 4-8 according to the present invention.
Fig. 72 is a diagram illustrating a whole of an electrification gas passage member of an embodiment 4-9 according to the present invention.
Fig. 73 is a diagram illustrating a whole of an electrification gas passage member of an embodiment 4-10 according to the present invention.
Fig. 74 is a diagram illustrating a whole of an electrification gas passage member of an embodiment 4-11 according to the present invention.
Fig. 75 is a diagram illustrating the whole of the electrification gas passage member of the embodiment 4-11 which is viewed in a direction opposite to a direction in which the electrification gas passage member is viewed in Fig. 74.
Fig. 76 is a diagram illustrating a whole of an electrification gas passage member of an embodiment 4-12 according to the present invention.
Fig. 77 is a diagram illustrating a whole of an electrification gas passage member of an embodiment 4-13 according to the present invention.
Fig. 78 shows a side view illustrating a vacuum cleaner of an embodiment 5-1 according to the present invention.
Fig. 79 shows a perspective view illustrating a frictional electrification resin pipe of the embodiment 5-1 according to the present invention.
Fig. 80 shows a side view illustrating a cross section of the frictional electrification resin pipe of the embodiment 5-1 according to the present invention and showing a state in which the frictional electrification resin pipe is molded.
Fig. 81 shows a perspective view illustrating a frictional electrification resin pipe of an embodiment 5-2 according to the present invention in a vacuum cleaner.
Fig 82 shows a cross-sectional view showing a process for molding the frictional electrification resin pipe of the embodiment 5-2 according to the present invention in the vacuum cleaner.
Fig 83 shows a cross-sectional view showing a process for molding the frictional electrification resin pipe of the embodiment 5-2 according to the present invention in the vacuum cleaner.
Fig 84 shows a cross-sectional view showing a process for molding the frictional electrification resin pipe of the embodiment 5-2 according to the present invention in the vacuum cleaner.
Fig 85 shows a cross-sectional view showing a process for molding the frictional electrification resin pipe of the embodiment 5-2 according to the present invention in the vacuum cleaner.
Fig. 86 shows a side view illustrating a cross-sectional view showing a state in which a first electrification part of an embodiment 5-3 according to the present invention is molded.
Fig. 87 shows a side view illustrating a cross-sectional view showing a state in which a frictional electrification resin pipe of an embodiment 5-4 according to the present invention is molded.
Fig. 88 shows a perspective view illustrating a frictional electrification resin pipe of an embodiment 5-5 according to the present invention in a vacuum cleaner.
Fig. 89 is a flow chart showing processes for manufacturing the frictional electrification resin pipe of the embodiment 5-5 according to the present invention in the vacuum cleaner.
Fig. 90 is a perspective view illustrating a first electrification part of the frictional electrification resin pipe of the embodiment 5-5 according to the present invention in the vacuum cleaner, in an injection molding process.
Fig. 91 shows a cross-sectional view illustrating a first electrification part of the frictional electrification resin pipe of the embodiment 5-5 according to the present invention in the vacuum cleaner, in a charge control agent adhesion process.
Fig. 92 shows a cross-sectional view illustrating the first electrification part of the frictional electrification resin pipe of the embodiment 5-5 according to the present invention in the vacuum cleaner, in a charge control agent deposit process.
Fig. 93 is a schematic diagram illustrating a whole of a conventional vacuum cleaner, as a comparison machine, which comprises a cyclone dust collecting chamber.
Fig. 94 is a schematic diagram illustrating vortices generated around protrusions.
Fig. 95 is a schematic diagram illustrating vortices generated around protrusions.
Fig. 96 is a schematic diagram illustrating vortices generated around protrusions.
Fig. 97 is a schematic diagram illustrating a whole of a conventional vacuum cleaner, as a comparison machine, which comprises a cyclone dust collecting chamber.
Fig. 98 is a schematic diagram illustrating a whole of a vacuum cleaner of the embodiment 4-1 according to the present invention.
Fig. 99 is a diagram showing a result of an experiment in which relationships between sizes and numbers of particulates contained in an exhaust gas, with respect to the conventional vacuum cleaner and the vacuum cleaner according to the present invention, were examined.

### EXPLANATION OF REFERENCE NUMERALS

10: first frictional electrification part (first electrification part), 11: second frictional electrification part (second electrification part), 12: frictional electrification passage part (gas duct, electrification duct), 15A, 15B, 16A, 16B, 17A, 17B: fine dust, 18: inlet, 19: outlet, 19A: dust mass, 40, 50, 60, 70, 80, 90, 120: frictional electrification passage part and/or collision promotion passage part, 100: collision promotion passage part, 110: frictional electrification passage part, 41, 51, 61, 71, 81, 91, 101, 111, 121: passage, 43, 53, 63a, 63b, 63c, 63d, 73a, 73b, 83, 93, 103, 113, 123: protrusion, 161: frictional electrification passage part, 162: collision promotion passage part, 200 :electrification gas passage member (frictional electrification passage part, electrification duct), 201: first electrification part, 201a: protrusion, 202: second electrification part, 202a: protrusion, 203: exterior frame, 500: vacuum cleaner, 501:suction inlet, 502: extension pipe, 503: connecting pipe, 503a: handle, 504: suction hose, 505: joining section, 506: vacuum cleaner main body, 511: extension pipe small part, 512: extension pipe large part, 521: first electrification part, 522: second electrification part, 531: connecting pipe main body, 532: attachment, 552: electrification part, 561: dust collecting unit, 567: electric gas blower, 600: connecting pipe, 601: connecting pipe main body, 602: attachment, 603: depression, 700: electrification gas passage member, 701: first electrification part, 701a: depression, 702: second electrification part, 702a: depression, 703: exterior frame, 703a: protrusion, 802, 803: protuberances, 1015: particulate group, 1220: joining member, 1320: hose, 1420, 1421: cylindrical pipe, 1100, 1200, 1300, 1400, 1500, 1600, 1700, 1800: electrification gas passage member, 1110, 1210a, 1210b, 1310a, 1310b, 1410a, 1410b, 1510a, 1510b, 1610a, 1610b, 1620a, 1620b, 1630a, 630b, 1710, 1810: first electrification part, 1111, 1211a, 1211b, 1311a, 1311b, 1411a, 1411b, 1511a, 1511b, 1611a, 1611b, 1621a, 1621b, 1631a, 1631b, 1711, 1811: second electrification part, 2001: vacuum cleaner, 2002: suction hose, 2003: connecting pipe, 2004: suction inlet body, 2005: cyclone dust collecting unit, 2006: main body unit, 2007: electric gas blower, 2008: frictional electrification resin pipe, 2008a: weld line, 2010: joining member, 2011: first electrification part, 2011a, 2012a: electrification layer, 2011b, 2012b: reinforcement layer, 2011c, 2012c: particulates, 2011d, 2012d: base material, 2012: second electrification part, 2013: protrusion, 2015: horn, 2021: fixed molding die, 2022: movable molding die, 2023 through 2028: injection nozzle.

### BEST MODE FOR CARRYING OUT THE INVENTION

Hereinafter, an embodiment of the present invention will be described with reference to drawings.

Fig. 2 through Fig. 5 are diagrams each illustrating a manner in which dust is electrified by frictional electrification parts of a frictional electrification passage part according to an embodiment of the present invention and is flocculated.

Fig. 2 is a diagram illustrating a configuration of the first and second frictional electrification parts of the frictional electrification passage part according to the one embodiment of the present invention.

As shown in Fig. 2, the first frictional electrification part (first electrification part) 10 and the second frictional electrification part (second electrification part) 11 have half-pipe shapes obtained by halving a cylindrical pipe in an axial direction. The first frictional electrification part 10 is made of a material which allows the dust to be easily positively electrified. The second frictional electrification part 11 is made of a material which allows the dust to be easily negatively electrified. These half-pipe shapes may be modified in accordance with electrification performance and functions of components.

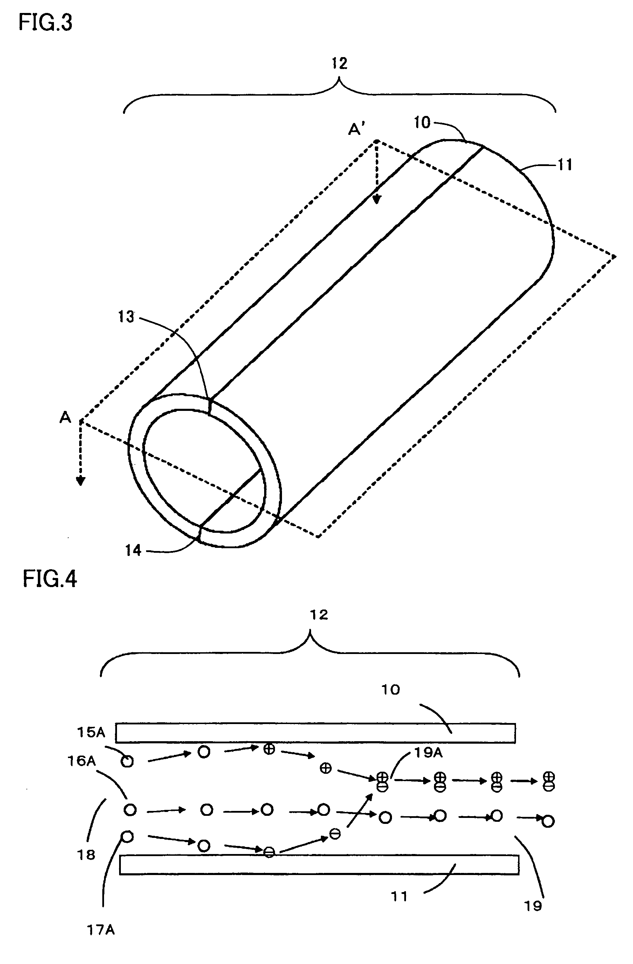

Fig. 3 is a diagram illustrating assembly of the first and second frictional electrification parts of the frictional electrification passage part according to the one embodiment of the present invention.

As shown in Fig. 3, the first frictional electrification part 10 and second frictional electrification part 11 shown in Fig. 2 can be assembled to be the frictional electrification passage part (gas duct, electrification duct) 12 shown in Fig. 3, allowing an inside thereof to be kept in a sealed manner and gas to flow. It is supposed that a plane which is perpendicular to a plane including one joint surface 13 and another joint surface 14 of the first frictional electrification part 10 and the second frictional electrification part 11 of the frictional electrification passage part 12 is a cross section A-A'.

Fig. 4 shows a cross sectional view of the frictional electrification passage part, taken from line A-A' in Fig. 3.

Fig. 4 is a diagram illustrating a manner in which the fine dust is electrified according to the present invention. Hereinafter, with reference to Fig. 4, a state where the dust is electrified will be described.

When a gas flow is generated inside the frictional electrification passage part 12, fine dust 15A, fine dust 16A, and fine dust 17A, as the dust, each having a size of approximately several microns are transported from an inlet 18 toward an outlet 19 of the gas duct 12. When the fine dust 15A is transported in the vicinity of the first frictional electrification part 10 and contacts the first frictional electrification part 10, the fine dust 15A is positively electrified by action of frictional electrification. When the fine dust 17A is transported in the vicinity of the second frictional electrification part 11 and contacts the second frictional electrification part 11, the fine dust 17A is negatively electrified by the action of frictional electrification. The fine dust 15A positively electrified as mentioned above and fine dust 17A negatively electrified as mentioned above are mixed in the gas duct 12. Since the dust 15A and the dust 17A mutually suck each other due to an electrostatic force, the dust 15A and the dust 17A adsorbs each other, thereby forming a dust mass 19A. The gas duct 12 and the electrification part are made so as to be appropriately long, whereby the dust mass 19A contacts again the first frictional electrification part 10 and the second frictional electrification part 11 and thereby, the dust mass 19A is further electrified. In such a manner, the electrification and the adsorption of the fine dust 15A, the fine dust 17A, and the dust mass 19A are repeated, thereby further increasing a size of the dust mass 19A. In Fig. 3, it is illustrated that when the fine dust collides with the first frictional electrification part 10 or the second frictional electrification part 11 one time, the adsorption is carried out one time. However, by appropriately setting a length and a diameter of the gas duct 12, the contact of the fine dust with the first frictional electrification part 10 or the second frictional electrification part 11 can be carried out a plurality of times. In addition, by appropriately selecting a material, an amount of the electrification resulting when the fine dust 15A and the fine dust 17A contact the first frictional electrification part 10 and the second frictional electrification part 11 can be selected to be set.

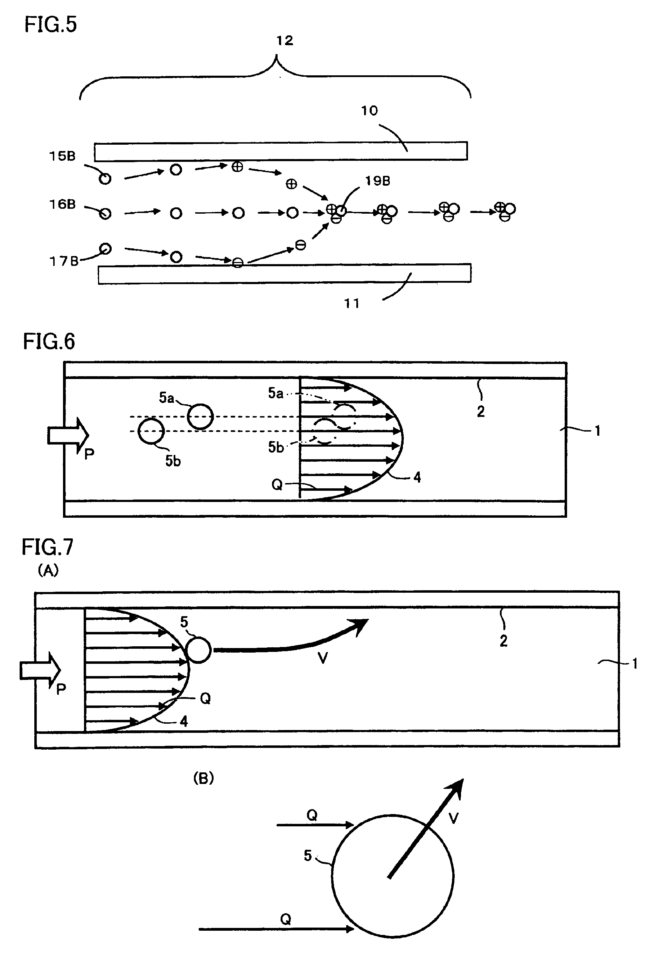

Fig. 5 is a diagram illustrating a manner in another case, in which the dust mass is formed according to the present invention.

As shown in Fig. 5, as similarly to in Fig. 4, the fine dust 15B and the fine dust 17B contact the first frictional electrification part 10 and the second frictional electrification part 11, mutually adsorb each other due to suction action of static electricity or the gas flow, further suck the fine dust 16B which is floating in the vicinity therearound and is not electrified or slightly electrified by the air, thereby forming a large dust masses (clusters) 19B.

The frictional electrification passage part according to the present invention includes the above-described first and second frictional electrification parts.

Next, flocculation of the dust in a collision promotion passage part according to the embodiment of the present invention will be described.

Fig. 6 is a schematic diagram illustrating a manner in which particulates are flocculated in a case where the gas flow inside a passage has a laminar flow velocity distribution.

As shown in Fig. 6, the gas P flows into the passage 1 in a direction indicated by an arrow. When the gas flow Q inside the passage 1 is laminar, a variation in the velocity of the gas flow Q occurs due to an influence of friction of the gas with an inner surface of the wall 2 of the passage 1 and an influence of a viscosity of gas passing through the passage 1, whereby a velocity gradient 4 among boundary layers develops. Dust 5a which flows into the passage 1 together with the gas P and dust 5b which flows into the passage 1 behind the dust 5a approaches each other due to differences of the velocities of the gas flow Q as indicated by a long dashed double-short dashed line and the particulates mutually contact one another and are flocculated.

In a case where a flow inside the passage 1 is a turbulent flow, not only because a velocity distribution of the turbulent flow is uneven but also because follow-up properties of the particulates, resulting when the particulates circulate in accordance with a temporal variation in the velocity of the turbulent flow, vary depending on an inertial force of each of the particulates, the particulates are flocculated. It is considered that the uneven velocity distribution of the turbulent flow occurs when a phenomenon similar to in the case of the laminar flow partially occurs.

In each case, since in a mechanism of increasing a probability with which the particulates in the dust mutually contact one another, shearing of the flow is dominant, the mutual flocculation of the particulates is promoted by actively providing the gas flow with the velocity distribution.

However, when the flow in the passage is the laminar flow, a magnitude and a direction of a force which the velocity distribution exerts on the particulates vary depending on diameters of the particulates. Therefore, the particulates having various sizes are not evenly distributed inside the passage and a bias in the distribution occurs in accordance with the diameters of the particulates. The above-mentioned particulate diameter distribution occurring inside the passage exerts an influence on the probability with which the particulates mutually contact one another. This will be described hereinafter.

Fig. 7 is a schematic diagram illustrating an influence which a velocity gradient exerts on particulates having large diameters in a case where the gas flow inside the passage has the laminar flow velocity distribution.

As shown in Fig. 7, since a velocity of the gas flow Q is high around a central portion of the passage 1, drag occurring on a particulate 5 is also large. On the other hand, since the velocity of the gas flow Q decreases in accordance with a decrease in a distance to the wall 2 of the passage 1, drag occurring on the particulate 5 is also small. When the diameter of the particulate 5 in the dust, which flows inside the passage 1 together with the gas P, is large, the particulate 5 is strongly influenced by the velocity gradient 4 generated inside the passage 1. In other words, since drag of the particulate 5, which acts on the side of the central portion of the passage 1 is large and drag of the particulate 5, which acts on the side of the wall 2 of the passage 1 is small, a rotative force applied from the central portion to the wall side of the passage 1 is exerted on the particulate 5 due to a difference between the drags occurring on the central portion side and the wall side. As a result, the particulate 5 moves in a direction V, namely, a direction toward the wall 2 of the passage 1. As a result, the particulates having the large diameters are collected on the side of the wall 2 of the passage 1.

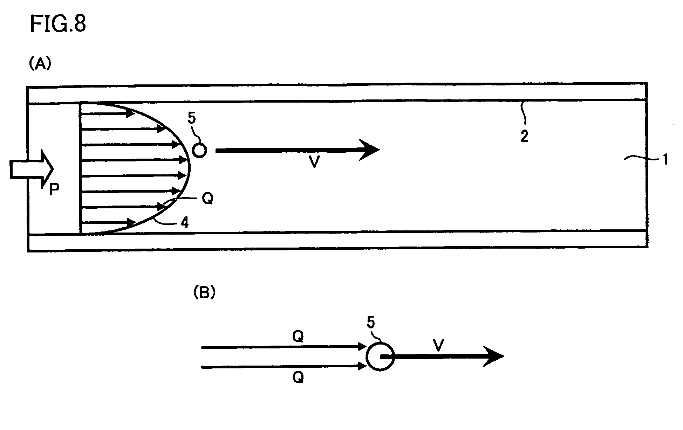

Fig. 8 is a schematic diagram illustrating an influence which the velocity gradient exerts on particulates having small diameters in a case where the gas flow inside the passage has the laminar flow velocity distribution.

As shown in Fig. 8, when a diameter of the particulate 5 is small, there is only a little difference among velocities of the gas flow Q surrounding the particulate 5. Therefore, an influence of the velocity gradient 4 generated inside the passage 1, which is exerted on the particulate 5, is weak, and the particulate 5 moves straight forward in a direction V without largely changing the direction in which the particulate 5 moves forward when the particulate enters the passage 1. Therefore, the particulates having relatively small diameters are collected in the central portion of the passage 1.

As a result, a probability with which the particulates having the small diameters in the central portion of the passage 1 mutually contact one another is reduced. Further, the particulates respectively having the diameters which are different from each other are away from each other, that is, the particulates having the small diameters are in the central portion of the passage 1 and the particulates having the large diameters are around the wall 2 of the passage 1. Therefore, a probability with which the particulates having large surface areas and the large diameters and the particulates having the small diameters contact one another is also reduced, whereby an overall probability with which the particulates mutually contact one another is reduced.

In consideration of these, it can be said that in order to enhance an efficiency at which the particulates are mutually flocculated, the following three points are important.

(1) To form a field of a turbulent flow velocity.

(2) To actively provide a velocity distribution.

(3) To make a particulate diameter distribution even.

In order to concurrently realize all of these three points, it is considered that a part for generating turbulence in the gas flow, namely, an air vortex generating part, is provided in the duct.

On the other hand, it is considered that when the particulates mutually collide with one another, the particulates having mutually collided with one another are flocculated due to forces generated among the particulates. It is considered that since in general, each of these forces is in inverse proportion to the power of each of the distances among the particulates, a value of each of the forces becomes extremely large in accordance with a decrease in each of the distances among the particulates. Therefore, it is considered that because in order to disperse the particulates which have mutually collided with one another once and have been flocculated, an external force exceeding each of the forces generated upon the collision of the particulates is thought to be required, a state of the flocculation continues to be maintained.

Further, because a degree to which each of the above-mentioned forces is exerted as an attractive force increases in accordance with an increase in a size of each of the particulates, it further hardly occurs that the particulates having the small diameters, which have collided with the particulates having the large diameters and have been flocculated, are dispersed.

In addition, when the mutual flocculation of the particulates occurs, because the particulates having the apparently large diameters increase, a probability with which the particulates mutually contact one another further increases.

The dust flocculating duct according to the present invention includes: the above-described frictional electrification passage part for friction-electrifying the dust; and the above-described collision promotion passage part for promoting the formation of the dust masses (clusters) by causing the particulates of the dust, which have been electrified by the frictional electrification passage part, to mutually collide with one another.

In the dust flocculating duct according to the present invention, the dust composed of a specific substance is transported by the gas flow from an upstream side to a downstream side through an inside of the frictional electrification passage part which is formed by disposing the first frictional electrification part, made of a first material which has a sufficiently larger contact potential difference than that of the dust, and the second frictional electrification part, made of a second material which has a sufficiently smaller contact potential difference than that of the dust, in parallel with each other.

Thus, the dust which has collided with and contacted the first frictional electrification part made of the first material is deprived of electrons by the first material having the higher contact potential difference than that of the dust, is positively charged, and therefore, is positively electrified. In addition, the dust which has collided with and contacted the second frictional electrification part made of the second material deprives the second material, having the lower contact potential difference than that of the dust, of electrons, is negatively charged, and therefore, is negatively electrified.

These positively electrified dust and negatively electrified dust, while adsorbing dust which is not electrified, grow to be a dust mass (small cluster). Further, the dust masses (small clusters) having opposite charges mutually collide with and contact one another due to the Coulomb force (attractive force) and grow to be further large dust masses (large clusters).

This is a flocculation effect of the dust, attained by the above-described configuration. This allows the dust, having grown as the further large dust masses in clusters, to be more efficiently separated or collected by, for example, a centrifugal separator or a filter which is provided further downstream of the passage, than the dust which has not become clusters.

At this time, it is concerned that when a velocity of the gas flow at which the dust is transported increases, an inertial force is exerted more dominantly on each of the dust masses than the Coulomb force, and despite the sufficient electrification of the dust, the dust or the dust masses hardly collide with and contact one another or the dust, or because the dust masses do not collide with and contact one another to a certain extent, the dust masses do not grow so as to have certain sizes.

In order to effectively solve this problem, it is required to increase the number of times when the dust or the dust masses mutually collide with and contact one another by generating a vortex or turbulence in the gas flow. For example, it can be considered that a collision promotion passage part including collision promotion components (for example, components having protrusions which generate intense vortices) is provided on a side of further downstream of the frictional electrification passage part.

At this time, however, when there is a bent portion in a passage portion or there is a sufficiently long distance between the frictional electrification passage part and the collision promotion passage part, careless selection of a material of the collision promotion components (for example, components having protrusions which generate intense vortices on the downstream side) may cause the following disadvantage.

For example, in a case where the collision promotion components made of the above-mentioned first material is provided on a side of further downstream of the frictional electrification passage part, it occurs that the first material deprives the dust of electrons as mentioned above, which is the property of the first material.

Therefore, for example, if the dust having no electrical charge or the dust masses which are caused to have no electrical charge due to neutralization of an electric charge, which is caused when the positively and negatively electrified pieces of dust mutually collide with each other and are flocculated, collide with and contact the collision promotion component made of the above-mentioned first material, the dust or the dust masses are positively electrified because the collision promotion components are made of the above-mentioned first material.

For example, if the dust or dust masses having already been positively electrified collide with and contact the collision promotion components made of the above-mentioned first material, the collision promotion components further deprive the dust or dust masses of the electrons because the collision promotion components are made of the above-mentioned first material and therefore, a positive electric charge amount in the dust or dust masses is increasingly boosted. Or if the dust or dust masses have already been positively electrified so as to have reached a saturation point, no electrons are transferred between the collision promotion components and the dust or dust masses.

For example, if the dust or dust masses having already been negatively electrified collide with and contacts the collision promotion components made of the above-mentioned first material, the collision promotion components further deprive the dust or dust masses, having been negatively electrified, of the electrons because the collision promotion components are made of the above-mentioned first material and decrease a negative electric charge amount by neutralizing the electric charge which the dust or dust masses have. As a result, the negative electric charge which the dust or dust masses have is decreased or in a case where the dust or dust masses are further deprived of the electrons, the dust or dust masses may be positively electrified.

In the above-mentioned case, among the particulates of the dust or the dust masses passing the collision promotion components, the number of the particulates of the dust or the dust masses having the positive electric charge increases and the number of the particulates of the dust or the dust masses having the negative electric charge decreases.

In the meantime, the particulates of the dust or dust masses having the positive electric charge repel one another due to repulsive forces and thereby, the flocculation caused by the collision is hampered, whereby among the particulates of the dust or dust masses passing the collision promotion components, the number of the particulates of the dust or dust masses having the positive electric charge increases and the number of the particulates of the dust or dust masses having the negative electric charge decreases. When an overall proportion of the particulates of the dust or dust masses having the positive electric charge increases, as a result, the flocculation effect, caused by the mutual collision and contact of the dust or dust masses, which is initially expected is adversely impaired.

Even if the collision promotion components are made of a material whose contact potential difference is not so large as that of the first material but when the collision promotion components are made of a material whose contact potential difference is larger than that of the dust, a disadvantage close to the above-described disadvantage arises though degrees of both of the disadvantages differ from each other.

In addition, similarly in a case where the collision promotion components made of the above-mentioned second material are provided on the side of further downstream of the frictional electrification passage part, it occurs that the second material is deprived of electrons by the dust as mentioned above, which is the property of the second material.

Therefore, for example, if the dust having not yet had any electrical charge or the dust masses which are caused to have no electrical charge due to neutralization of electric charge, which is caused when the dust and the dust mutually collide with each other and are flocculated, collide with and contact the collision promotion components made of the above-mentioned second material, the dust or the dust masses are negatively electrified because the collision promotion components are made of the above-mentioned second material.

For example, if the dust or dust masses having already been negatively electrified collide with and contact the collision promotion components made of the above-mentioned second material, the collision promotion components are further deprived of the electrons by the dust or dust masses because the collision promotion components are made of the above-mentioned second material and therefore, a negative electric charge amount in the dust or dust masses is increasingly boosted. Or if the dust or dust masses have already been negatively electrified so as to have reached a saturation point, no electrons are transferred between the collision promotion components and the dust or dust masses.

For example, if the dust or dust masses having already been positively electrified collide with and contact the collision promotion components made of the above-mentioned second material, the collision promotion components are further deprived of the electrons by the dust or dust masses having been positively electrified because the collision promotion components are made of the above-mentioned second material and decrease a positive electric charge amount by neutralizing the electric charge which the dust or dust masses have. As a result, the positive electric charge which the dust or dust masses have is decreased or in a case where the dust or dust masses further deprive the collision promotion components of the electrons, the dust or dust masses may be negatively electrified.

In the above-mentioned case, among the particulates of the dust or the dust masses passing the collision promotion components, the number of the particulates of the dust or the dust masses having the positive electric charge increases and the number of the particulates of the dust or the dust masses having the negative electric charge decreases.

In the meantime, the particulates of the dust or dust masses having the negative electric charge repel one another due to repulsive forces and thereby, the flocculation caused by the collision is hampered, whereby among the particulates of the dust or dust masses passing the collision promotion components, the number of the particulates of the dust or dust masses having the negative electric charge increases and the number of the particulates of the dust or dust masses having the positive electric charge decreases. When an overall proportion of the particulates of the dust or dust masses having the negative electric charge increases, as a result, the flocculation effect, caused by the mutual collision and contact of the dust or dust masses, which is initially expected is adversely impaired.

Even if the collision promotion components are made of a material whose contact potential difference is not so small as that of the second material but when the collision promotion components are made of a material whose contact potential difference is smaller than that of the dust, a disadvantage close to the above-described disadvantage arises though degrees of both of the disadvantages differ from each other.

In addition, while the dust or dust mass having been frictionally electrified by the frictional electrification passage part disposed on the upstream side is flowing downstream, a course in which the dust or dust mass moves is dependent on a flow current. Therefore, in general, it is extremely difficult to control the course. It is difficult to cause the dust or dust masses, having the electric charge, not to collide with and contact the collision promotion components. Or if new ingenuity which allows the dust or dust masses, having the electric charge, not to collide with and contact the collision promotion components is added, then, the collision promotion components provided on the downstream side generate vortices or turbulence in the gas flow, whereby the number of times when the particulates of the dust or dust masses mutually collide with and contact one another cannot be sufficiently increased.

Therefore, as a material of the collision promotion components provided in the collision promotion passage part, a third material having the substantially same contact potential difference as that of the dust is used.

This allows suppressing a transfer of the electrons when the dust or dust masses collides with the collision promotion components. This allows a promotion of the mutual collision of the particulates of the dust or dust masses having been positively and negatively electrified in a well-balanced manner by the frictional electrification passage part provided on the upstream side of the collision promotion passage part practically without changing the electric charge amount, thereby enabling further enhancement of the effect of flocculating the dust.

Since this allows the dust or dust masses to grow to be further large dust masses in clusters, the dust can be further efficiently separated or collected by, for example, a centrifugal separator or a filter which is provided further downstream of the passage, as compared with a case where the dust is not caused to pass the collision promotion passage part.

When there is no bent portion in the passage portion and a sufficiently short distance between the frictional electrification passage part and the collision promotion passage part, the same two kinds of materials as the materials of the frictional electrification passage part are selected as the materials of the collision promotion components. As a material of the collision promotion components provided immediately downstream of the first frictional electrification part made of the first material, the first material is selected and as a material of the collision promotion components provided immediately downstream of the second frictional electrification part made of the second material, the second material is selected, thereby allowing the dust or dust masses to be grow to be further large dust masses in clusters. Thus, the dust can be further efficiently separated or collected by, for example, a centrifugal separator or a filter which is provided further downstream of the passage.

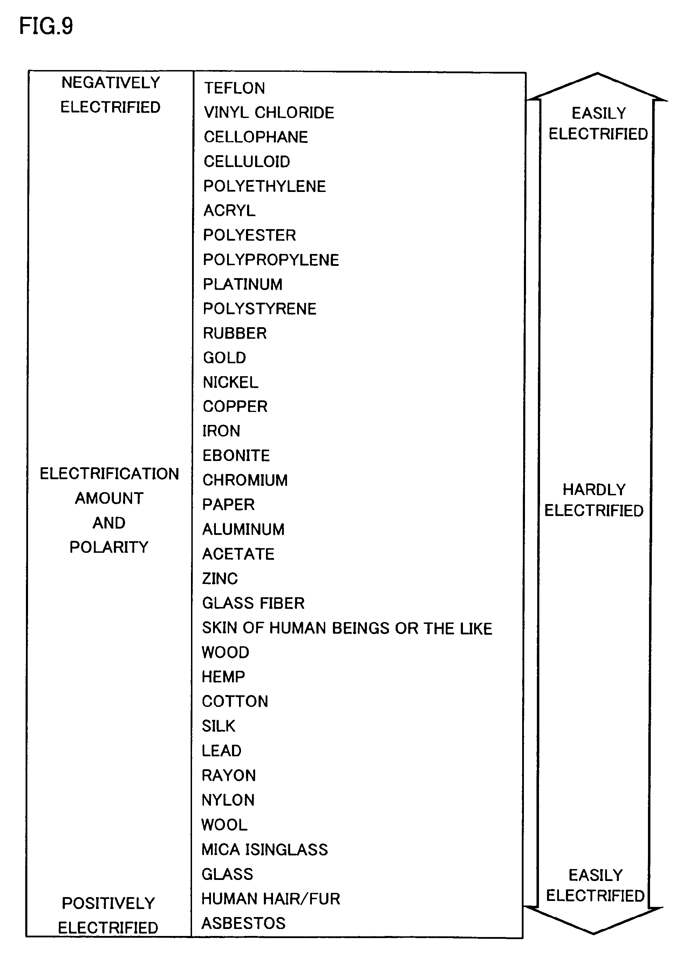

Fig. 9 is a diagram showing a triboelectric series indicating easiness of electrification of materials.

As shown in Fig. 9, among the materials shown in the triboelectric series, the materials listed on an upper side of the triboelectric series have high contact potential differences, that is, are easily negatively electrified and each cause a contacted counterpart to be easily positively electrified, and are listed in order of easiness of the negative electrification, with the most easily negatively electrified material listed in the uppermost line. On the other hand, among the materials shown in the triboelectric series, the materials listed on a lower side of the triboelectric series have low contact potential differences, that is, are easily positively electrified and each cause a contacted counterpart to be easily negatively electrified, and are listed in order of easiness of the positive electrification, with the most easily positively electrified material listed in the lowermost line.

Accordingly, as materials used for the frictional electrification passage part and the collision promotion passage part according to the present invention, the materials listed on the upper side of the triboelectric series shown in Fig. 9 can be used as a material having a large contact potential difference and the materials listed on the lower side of the triboelectric series shown in Fig. 9 can be used as a material having a small contact potential difference.

Based on the above-described consideration, an embodiment of the present invention will be described hereinafter.

### (Embodiment 1-1-1)

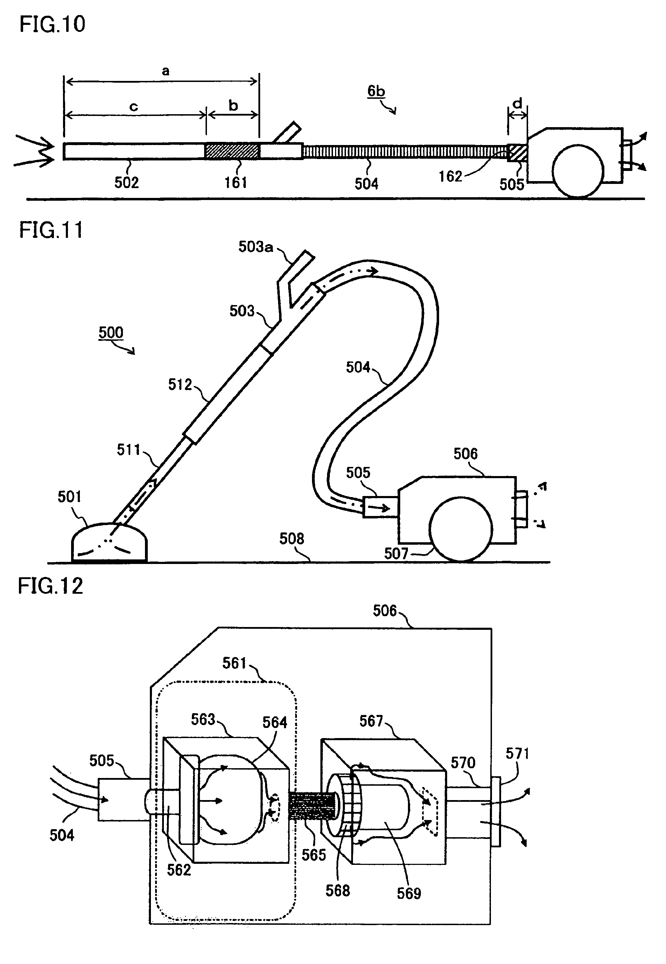

Fig. 10 is a diagram illustrating a whole of a vacuum cleaner in an embodiment 1-1-1 according to the present invention, which comprises a dust flocculating duct according to the present invention.

As shown in Fig. 10, the vacuum cleaner 6b comprises as a passage unit: an extension pipe 502; a suction hose 504; and a joining section 505. The extension pipe 502, the suction hose 504, and the joining section 505 are connected in order. The vacuum cleaner 6b comprises: a frictional electrification passage part 161 having a length b, which is located downstream of the extension pipe 502 so as to have a distance c from a tip of an upstream side of the extension pipe 502 having a length a; and a collision promotion passage part 162 having a length d in the joining section 505 which is located further downstream of the frictional electrification passage part 161. In the frictional electrification passage part 161, a first frictional electrification part for positively electrifying dust and a second frictional electrification part for negatively electrifying the dust are disposed so as to face each other and form a wall of the dust flocculating duct.

Since the frictional electrification passage part 161 is formed by using a functional material which allows particulates to be electrified, the frictional electrification passage part 161 electrifies the dust particulates by causing the dust particulates to collide with a wall surface and effectively enhances a probability with which the dust particulates collide with one another, by utilizing the Coulomb force generated among the electrified dust.

In such a manner, in the frictional electrification passage part 161, the probability with which the particulates mutually collide with one another is increased. The probability of contacting the inner wall surface is increased, and the number of electrified particulates and an electric charge amount of the particulates are increased.

In the collision promotion passage part 162, a collision probability is increased by effectively agitating the dust particulates and all of the dust particulates having been electrified in the frictional electrification passage part 161 are flocculated. The collision promotion passage part 162 is formed by using a material which hardly gives and receives any electric charge even when the particulates collide with the wall surface.

Among the particulates electrified in the frictional electrification passage part 161, the particulates which do not mutually collide with one another by the time when the particulates reach the collision promotion passage part 162 are also present. In addition, since an intensity of each of vortices decreases in accordance with an increase in a distance from the dust flocculating duct, a capability of the agitation is weakened and the probability with which the particulates mutually collide with one another is also reduced. Therefore, the collision promotion passage part 162 is provided as a part of the dust flocculating duct, which is not made of the functional material which easily electrifies the particulates, thereby enhancing the probability with which the particulates having been electrified in the frictional electrification passage part 161 mutually collide with one another and further promoting the flocculation of the particulates.

As described above, the particulates are rendered in a state of being electrified and are effectively caused to collide with one another, thereby allowing the particulates to be efficiently flocculated.

When the collision promotion passage part 162 is formed by using a functional material which exhibits an effect of newly electrifying the dust particulates having been electrified either positively or negatively in the frictional electrification passage part 161, in a case where the dust particulates are electrified so as to have the same polarity by the frictional electrification passage part 161 and the collision promotion passage part 162, an electric charge amount in the particulates is further increased and the Coulomb force which is further strong can be generated, whereas in a case where the dust particulates are electrified so as to have different polarities by frictional electrification passage part 161 and the collision promotion passage part 162, the electric charge of the particulates is neutralized.

As another example in which the electric charge of the particulates is neutralized, there is a case where a functional material which positively electrifies the particulates and a functional material which negatively electrifies the particulates are disposed in the passage unit in a direction, in which gas flows, in an evenly-spaced and alternate manner, and a swirling flow in the whole passage is generated with a swirling center around a center of the passage, which is arranged by providing protrusions. The dust particulates contact the wall surface which causes the particulates to be positively electrified and thereby, are positively electrified, and next, the positively electrified particulate contacts the wall surface which causes the particulates to be negatively electrified and thereby, are negatively electrified. As a result, the electric charge of the dust particulates is neutralized.

In addition, also in a case where the passage is divided into two portions in a direction parallel to a direction in which the gas flows inside the passage unit, and each of the functional materials which each electrify the particulates positively and negatively is disposed on each of the sides of the two portions with the same ratio of the disposed functional materials, and a swirling flow is generated by providing protrusions, similarly, the dust particulates first contacts the wall surface which causes the particulates to be positively electrified and thereby, are positively electrified, and next, the positively electrified particulate contacts the wall surface which causes the particulates to be negatively electrified and thereby, are negatively electrified. As a result, the electric charge of the dust particulates is neutralized.

However, as in the present embodiment, the collision promotion passage part 162 is formed by the material which hardly gives and receives the electric charge and all of the particulates are caused to mutually collide with one another by the action of the vortices generated by the collision promotion passage part without neutralizing in the collision promotion passage part 162 the electric charge of the dust particulates, which has been imparted by the frictional electrification passage part 161, thereby allowing the dust masses (clusters) to be effectively formed.

The frictional electrification passage part in an upstream portion of the dust flocculating duct is formed by disposing the first frictional electrification part made of the first material and the second frictional electrification part made of the second material in parallel with each other.

In addition, the collision promotion passage part includes the collision promotion components made of the third material.

The respective contact potential differences of the first material, the second material, and the third material are arranged so as to be that of the first material > that of the third material > that of the second material.

In a case where there is a restriction on selection of the materials, for example, such as a case where the materials have to be selected only from among three kinds of materials of polyethylene, polystyrene, and nylon, the polyethylene (PE) as the first material, the polystyrene (PS) as the second material, and the nylon (polyamide) as the third material are used, thereby comparatively well attaining the effect of the present invention.

As described above, even in the case where there is the restriction on the selection of the materials of the dust flocculating duct, the materials having the three different contact potential differences are selected and the above-mentioned magnitude relationship of the respective contact potential differences is arranged, thereby obtaining the dust flocculating duct having a high flocculation efficiency as compared with the conventional one.

As described above, the dust flocculating duct comprises: the extension pipe 502 through which the gas containing the dust flows; the frictional electrification passage part 161, which is disposed in the extension pipe 502, for frictionally electrifying the dust; and the collision promotion passage part 162, which is disposed in the joining section 505, for causing the particulates of the dust, which have been electrified in the frictional electrification passage part 161, to mutually collide with one another and thereby, for promoting the formation of the dust masses (clusters). The frictional electrification passage part 161 includes the first frictional electrification part made of the first material and the second frictional electrification part made of the second material. The collision promotion passage part is made of the third material. The contact potential difference of the first material is larger than the contact potential difference of the third material and the contact potential difference of the third material is larger than the contact potential difference of the second material.

By employing the above-described configuration, even in the case where there is the restriction on the selection of the materials of the dust flocculating duct, the materials having the three different contact potential differences are selected and the above-mentioned magnitude relationship of the respective contact potential differences is arranged, thereby obtaining the dust flocculating duct having the high flocculation efficiency as compared with the conventional one.

As described above, while realizing the simple configuration, the dust flocculating duct which is capable of increasing the number of times when the particulates of the dust mutually collide with one another, thereby facilitating the flocculation, reducing the number of the particulates, and increasing the apparent diameters of the particulates can be provided.

### (Embodiment 1-1-2)

Fig. 11 is a diagram illustrating a whole of a vacuum cleaner in an embodiment 1-1-2 according to the present invention, which comprises a dust flocculating duct according to the present invention. Fig. 12 is an explanatory diagram illustrating a configuration of a main body of the vacuum cleaner according to the present invention.

The embodiment 1-1-2 is different from the embodiment 1-1-1 in that a frictional electrification passage part is disposed in a connecting pipe. The other parts in the embodiment 1-1-2 are similar to those in the embodiment 1-1-1.

As shown in Fig. 11 and Fig. 12, in the vacuum cleaner 500, a suction inlet 501 connects to an extension pipe small part 511, an extension pipe large part 512, a connecting pipe 503 having a handle 503a, and a bendable suction hose 504 in order and communicates via a joining section 505 with a vacuum cleaner main body 506. In the vacuum cleaner main body 506, an electric gas blower 567, a dust collecting unit 561, a dust collecting case 563, a HEPA filter 570, a cord reel (not shown), a control circuit (not shown) for controlling a supply of an electric power to the electric gas blower 567, and the like are contained.

In Fig. 11 and Fig. 12, a flow of the air containing the dust is indicated by an arrow. Upon driving the electric gas blower 567, the air is sucked from the suction inlet 501, and the air containing the dust passes through the extension pipe small part 511, the extension pipe large part 512, the connecting pipe 503, the suction hose 504, and the joining section 505 and is transported to the vacuum cleaner main body 506. The dust sucked into the vacuum cleaner main body 506 passes through the dust collecting unit 561, the electric gas blower 567, and the HEPA filter 570 and is discharged from the exhaust outlet 571. Among the particulates of the dust which has been sucked from the suction inlet 501 as mentioned above, the particulates having large sizes are accumulated in the dust collecting unit 561. The air from which the dust has been removed and become clean passes through an inside of an electric motor 569 to cool the electric gas blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

An external diameter of the extension pipe small part 511 is substantially equal to an internal diameter of the extension pipe large part 512. The whole extension pipe can extend and contract so as to increase and decrease a length thereof by sliding the extension pipe small part 511 to an inside of the extension pipe large part 512, thereby allowing a user to perform cleaning in his or her suited condition.

In the vacuum cleaner 500, a frictional electrification passage part is disposed inside the connecting pipe 503 and a collision promotion passage part is disposed inside the joining section 505.

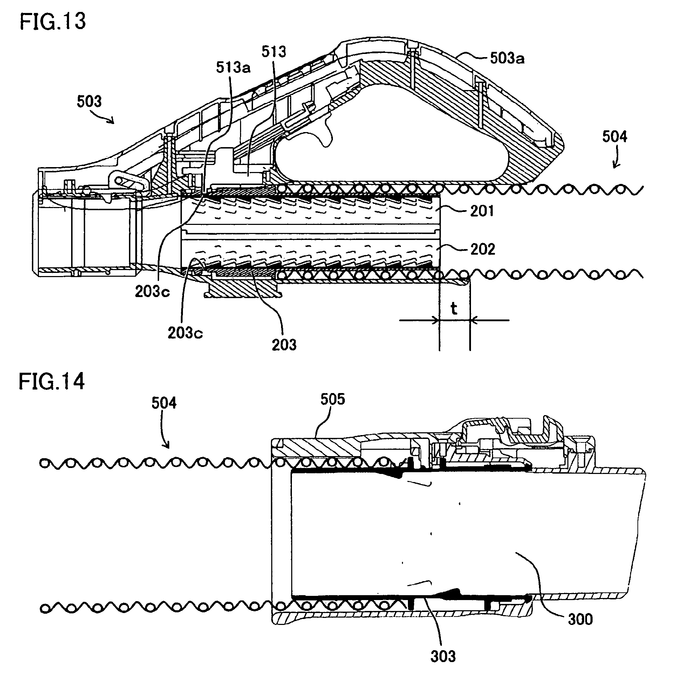

Fig. 13 shows a cross-sectional view of the connecting pipe in which the frictional electrification passage part is disposed.

As shown in Fig. 13, the frictional electrification passage part 200 (electrification gas passage member, electrification duct) is provided such that one end of a downstream side thereof is inserted so as to be covered by one end of an upstream side of the suction hose 504 and another end of an upstream side thereof is inserted to the connecting pipe 503. Here, the downstream end of the frictional electrification passage part 200 is held inside the connecting pipe 503 so as to have a depth t from the downstream end of the connecting pipe 503. This allows a curving degree to be restricted by the downstream end of the connecting pipe 503 even when the suction hose 504 is curved downward and allows a stress exerted on the frictional electrification passage part 200 to be drastically relieved. Accordingly, in order not to increase a pressure loss in the frictional electrification passage part 200, it is possible to increase an internal diameter of the frictional electrification passage part 200 or to configure the frictional electrification passage part 200 so as to have a double structure.

Since in order to relieve a stress exerted on the downstream end of the frictional electrification passage part 200, it is only required to increase the depth t, it can be considered to elongate the connecting pipe 503. However, if the connecting pipe 503 is elongated, a movable portion behind the handle 503a is away from the handle 503a, thereby reducing operability of the vacuum cleaner 500. The present inventors performed operations by using a variety of prototypes and as a result, discovered that the stress exerted on the frictional electrification passage part 200 can be sufficiently reduced by setting the depth t to be 19 mm when the internal diameter of the connecting pipe 503 is 58 mm; the external diameter of the frictional electrification passage part 200 is 46 mm; and the internal diameter of the frictional electrification passage part 200 is 42 mm. If a small allowance is taken, even by setting the depth t to be 12mm, the stress exerted on the downstream end of the frictional electrification passage part 200 can be considerably relieved.

On an exterior frame 203 of the frictional electrification passage part 200, a groove 203c is formed along a periphery thereof. The connecting pipe 503 is provided with a holding fixture 513 for holding the frictional electrification passage part 200 in an inside thereof. The holding fixture 513 is fixed in the connecting pipe 503. On the holding fixture 513, a protrusion (projection) 513a is formed and has a shape which allows a fit into the groove 203c. Accordingly, while the frictional electrification passage part 200 is connected to the suction hose 504 and held so as not to be disconnected from the connecting pipe 503, the frictional electrification passage part 200 is rotatable in a circumferential direction.

In addition, because of the configuration in which the one end of the downstream side of the frictional electrification passage part 200 is covered by the suction hose 504, great sealing performance is attained, the air does not leak even without configuring the first electrification part 201, the second electrification part 202, and the exterior frame 203 so as to be highly tightly sealed, and neither ultrasonic welding nor screwing is required. Thus, when the electrification duct 200 is produced, a reduction in a production time, enhancement of a production efficiency, a reduction in a production cost, and the like are attained, thereby enhancing a profitability.

Fig. 14 shows a cross-sectional view of the joining section 505 in the embodiment 1-1-2 according to the present invention.

As shown in Fig. 14, an exterior frame 303 of a collision promotion passage part 300 is inserted so as to be covered by one end of a downstream side of the suction hose 504 and another end of the exterior frame 303 is inserted into the joining section 505. Because of the configuration in which an end of an upstream side of the collision promotion passage part 300 is covered by the suction hose 504, great sealing performance is attained and the air does not leak (without requiring the ultrasonic welding, the screwing, and the like). Thus, a reduction in a production time, enhancement of a production efficiency, a reduction in a production cost, and the like are attained, thereby enhancing a profitability.

Upon driving the electric gas blower 567, a fan 568 generates a suction gas flow, the gas containing the dust is fed via the suction hose 504 and the joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, when the dust contained in the suction gas passes through the frictional electrification passage part 200 disposed in the connecting pipe 503, the dust contained in the suction gas is electrified and flocculated. Since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

Each of the frictional electrification passage parts and each of the collision promotion passage parts in the above-described embodiment 1-1-1 and the above-described embodiment 1-1-2 may be each of frictional electrification passage parts and each of collision promotion passage parts in the below-described embodiment 1-1-A, embodiment 1-1-B, and embodiment 1-1-C, respectively.

### (Embodiment 1-1-A)

In a case where dust to be flocculated is composed of a specific substance, a dust collecting device, which is operable to suck and collect the dust composed of the specific substance, comprises: a suction inlet for sucking the dust together with the air; a passage part for transporting the dust in a gas flow, that is, an air current, to a downstream side; a driving source, which communicates with the passage part, for generating the gas flow; a dust collecting unit, which is disposed in the passage part, for separating the air and the dust and accumulating the dust; and an exhaust outlet for externally discharging the air separated from the dust. In the dust collecting device, a dust flocculating duct for flocculating the dust is disposed, in the passage part, upstream of the dust collecting unit; an upstream portion of the dust flocculating duct forms a frictional electrification passage part; and a downstream portion thereof forms a collision promotion passage part.

The frictional electrification passage part which is the upstream portion of the dust flocculating duct is formed by disposing a first frictional electrification part made of a first material having a sufficiently larger contact potential difference than that of the dust composed of the above-mentioned specific substance and a second frictional electrification part made of a second material having a sufficiently smaller contact potential difference than that of the dust composed of the above-mentioned specific substance, in parallel with each other.

The first frictional electrification part includes: a wall surface made of the first material; and a plurality of protrusions made of the first material, which integrally project from the wall surface. The second frictional electrification part includes: a wall surface made of the second material; and a plurality of protrusions made of the second material, which integrally project from the wall surface.

Shapes of the first frictional electrification part and the second frictional electrification part are the same as each other and the materials of the first frictional electrification part and the second frictional electrification part are different from each other. For example, the shapes of the first frictional electrification part and the second frictional electrification part are obtained by cutting a cylindrical pipe into two in an axial direction, having the plurality of protrusions on inner surfaces thereof. The first frictional electrification part and the second frictional electrification part are jointed on a cut surface, forming one tube and constituting the frictional electrification passage part.

The collision promotion passage part which is the downstream portion of the dust flocculating duct includes: a wall surface made of a third material having the substantially same contact potential difference as that of the dust composed of the above-mentioned specific substance; and a plurality of collision promotion components made of the third material, which integrally project from the wall surface. The collision promotion components are protrusions made of the third material and have shapes so as to generate intense vortices on a downstream side due to the air flow.

For example, in a case where the dust to be flocculated is an iron powder, for example, a combination of polypropylene (PP) as the first material, nylon (polyamide) as the second material, and iron as the third material is used, thereby allowing the effect of the present invention to be attained.

This allows the dust, composed of the specific substance, to be effectively flocculated, causes the dust to grow so as to be large dust masses in clusters, and allows the dust to be collected by the dust collecting unit, thereby obtaining the dust flocculating duct having an extremely high dust collecting efficiency, as compared with the conventional one.

As described above, in the dust flocculating duct, the frictional electrification passage part includes: the first frictional electrification part made of the material having the larger contact potential difference than that of the predetermined dust circulating through the passage; and the second frictional electrification part having the smaller contact potential difference than that of the predetermined dust circulating through the passage, and the collision promotion passage part is made of the material having the substantially same contact potential difference as that of the predetermined dust circulating through the passage.

This allows the dust, composed of the specific substance, to be effectively flocculated, and causes the dust to grow so as to be large dust masses in clusters, thereby obtaining the dust flocculating duct having an extremely high dust collecting efficiency, as compared with the conventional one.

In addition, in the dust flocculating duct, the frictional electrification passage part has the wall forming the frictional electrification passage part and the protrusions are formed on the inner wall surface.

This allows the gas flow, inside the frictional electrification passage part, to be agitated and a probability, with which the dust contacts the frictional electrification parts, to be increased, thereby allowing the number of the electrified particulates of the dust and an electric charge amount in the dust to be increased.

In addition, in the dust flocculating duct, the collision promotion passage part has the wall forming the collision promotion passage and the protrusions are formed on the inner wall surface.

This allows the particulates of the dust to effectively collide with one another.

### (Embodiment 1-1-B)

In a case where dust to be flocculated is composed of a plurality of substances, a dust flocculating duct is operable to suck and collect the dust composed of the plurality of substances. The dust flocculating duct of the present embodiment is different from the dust flocculating duct in the embodiment 1-1-A in its materials.

In other words, a frictional electrification passage part which is an upstream portion of the dust flocculating duct is formed by disposing a first frictional electrification part made of a first material having a larger contact potential difference than the largest contact potential difference among contact potential differences which the above-mentioned dust composed of the plurality of substances has and a second frictional electrification part made of a second material having a smaller contact potential difference than the smallest contact potential difference among the contact potential differences which the above-mentioned dust composed of the plurality of substances has, in parallel with each other.

In addition, a collision promotion passage part which is a downstream portion of the dust flocculating duct includes: a wall surface made of a third material having the substantially same contact potential difference as an average contact potential difference of the contact potential differences which the above-mentioned dust composed of the plurality of substances has; and a plurality of collision promotion components made of the third material, which integrally project from the wall surface.

For example, if the dust to be flocculated is composed of the plurality of substances, for example, skin of a human being or the like, fluffy dust such as cotton, and paper scraps, for example, a combination of polypropylene (PP) as the first material, nylon (polyamide) as the second material, a glass-fiber-filled resin as the third material is used, thereby attaining the effect of the present invention.

This allows the dust, composed of the plurality of substances, to be effectively flocculated, causes the dust to grow so as to be large dust masses in clusters, and allows the dust to be collected by the dust collecting unit, thereby obtaining the dust flocculating duct having an extremely high dust collecting efficiency, as compared with the conventional one.

As described above, in the dust flocculating duct, the frictional electrification passage part includes: the first frictional electrification part made of the first material having the larger contact potential difference than the largest contact potential difference among the contact potential differences which the above-mentioned dust, which circulates through the passage, composed of the plurality of substances has; and the second frictional electrification part made of the second material having the smaller contact potential difference than the smallest contact potential difference among the contact potential differences which the above-mentioned dust, which circulates through the passage, composed of the plurality of substances has, and the collision promotion passage part is made of the material having the substantially same contact potential difference as the average contact potential difference of the contact potential differences which the dust, which circulates through the passage, has.

This allows the dust, composed of the plurality of substances, to be effectively flocculated, and causes the dust to grow so as to be large dust masses in clusters, thereby obtaining the dust flocculating duct having an extremely high dust collecting efficiency, as compared with the conventional one.

In addition, even in a case where composition of the dust to be flocculated is unknown, this allows the dust to be effectively flocculated and causes the dust to grow so as to be large dust masses in clusters, thereby obtaining the dust flocculating duct having an extremely high dust collecting efficiency, as compared with the conventional one.

In addition, in the dust flocculating duct, the frictional electrification passage part has the wall forming the frictional electrification passage part and the protrusions are formed on the inner wall surface.

This allows the gas flow, inside the frictional electrification passage part, to be agitated and a probability, with which the dust contacts the frictional electrification parts, to be increased, thereby allowing the number of the electrified particulates of the dust and an electric charge amount in the dust to be increased.

In addition, in the dust flocculating duct, the collision promotion passage part has the wall forming the collision promotion passage part and the protrusions are formed on the inner wall surface.

This allows the particulates of the dust to effectively collide with one another.

### (Embodiment 1-1-C)

In a case where composition of dust to be flocculated is unknown, a dust flocculating duct is operable to suck and collect the dust composed of a plurality of substances. The dust flocculating duct of the present embodiment is different from the dust flocculating duct of the embodiment 1-1-A in its materials.

In other words, a frictional electrification passage part which is an upstream portion of the dust flocculating duct is formed by disposing a first frictional electrification part made of a first material having the largest contact potential difference among contact potential differences which materials usable for the frictional electrification passage part have and a second frictional electrification part made of a second material having the smallest contact potential difference among the contact potential differences which the materials usable for the frictional electrification passage part have, in parallel with each other.

In addition, a collision promotion passage part which is a downstream portion of the dust flocculating duct includes: a wall surface made of a third material having an average contact potential difference of the contact potential differences of the above-mentioned first material and the above-mentioned second material; and a plurality of collision promotion components made of the third material, which integrally project from the wall.

For example, a combination of polytetrafluoroethylene as the first material, glass as the second material, and aluminum as the third material is used, thereby attaining the effect of the present invention.

Even in a case where the composition of the dust to be collected is unknown, this allows the dust to be effectively flocculated, and causes the dust to grow so as to be large dust masses in clusters, thereby obtaining the dust flocculating duct having an extremely high dust collecting efficiency, as compared with the conventional one.

As described above, in the dust flocculating duct, the frictional electrification passage part includes: the first frictional electrification part made of the material having the larger contact potential difference than the largest contact potential difference among the contact potential differences which the above-mentioned dust, which circulates through the passage, composed of the plurality of substances has; and the second frictional electrification part made of the material having the smaller contact potential difference than the smallest contact potential difference among the contact potential differences which the above-mentioned dust, which circulates through the passage, composed of the plurality of substances has, and the collision promotion passage part is made of the material having the substantially same contact potential difference as the average contact potential difference of the contact potential differences which the dust, which circulates through the passage, has.

This allows the dust, composed of the plurality of substances, to be effectively flocculated, and causes the dust to grow so as to be large dust masses in clusters, thereby obtaining the dust flocculating duct having an extremely high dust collecting efficiency, as compared with the conventional one.

In addition, even in a case where composition of the dust to be flocculated is unknown, this allows the dust to be effectively flocculated and causes the dust to grow so as to be large dust masses in clusters, thereby obtaining the dust flocculating duct having an extremely high dust collecting efficiency, as compared with the conventional one.

In addition, in the dust flocculating duct, the frictional electrification passage part has the wall forming the frictional electrification passage part and the protrusions are formed on the inner wall surface.

This allows the gas flow, inside the frictional electrification passage part, to be agitated and a probability, with which the dust contacts the frictional electrification part, to be increased, thereby allowing the number of the electrified particulates of the dust and an electric charge amount in the dust to be increased.

In addition, in the dust flocculating duct, the collision promotion passage part has the wall forming the collision promotion passage part and the protrusions are formed on the inner wall surface.

This allows the particulates of the dust to effectively collide with one another.

With respect to each of the frictional electrification passage parts and each of the collision promotion passage parts of the above-described embodiments, each of the below-described embodiments 1-2-1 through 1-2-8 is applicable, respectively.

### (Embodiment 1-2-1)

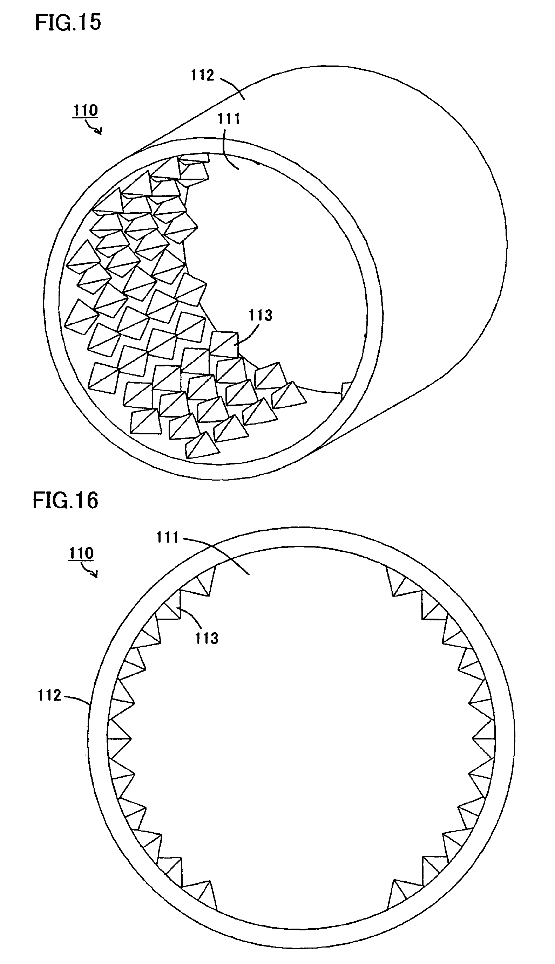

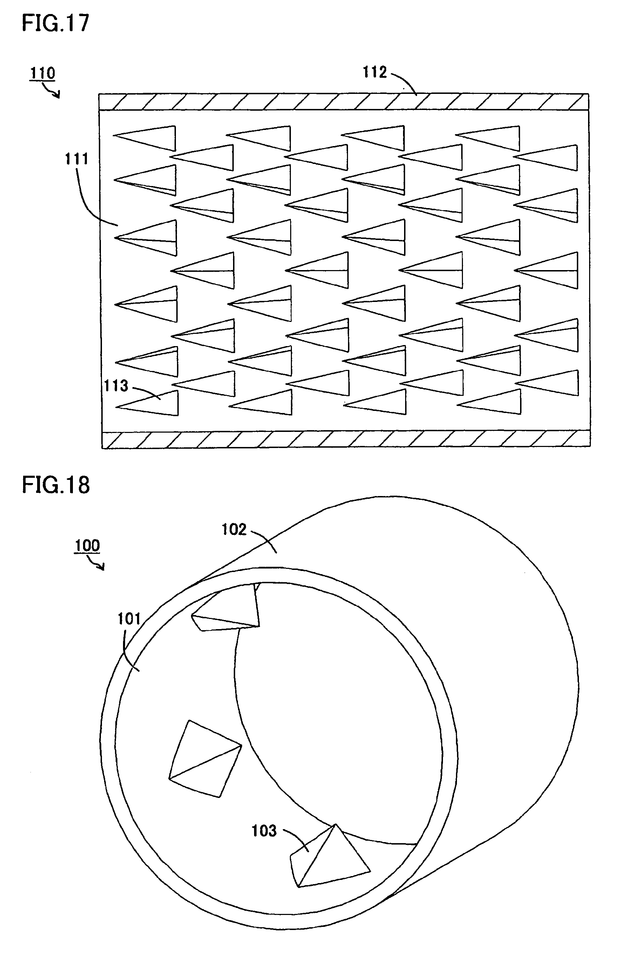

Fig. 15 shows a perspective view in which an important part of a frictional electrification passage part of an embodiment 1-2-1 is viewed in a perspective manner. Fig. 16 shows an elevation view illustrating an important part of a dust flocculating duct of the embodiment 1-2-1. Fig. 17 shows a cross-sectional side view of the dust flocculating duct of the embodiment 1-2-1.

As shown in Fig. 15 through Fig. 17, in the embodiment 1-2-1 according to the present invention, a plurality of protrusions 113 are provided on a wall 112 of a passage 111. The protrusions 113 are of triangular pyramid shapes each having a length, in a flow direction, of JM=(1/4)D; and a height of a triangular pyramid of NM=(1/16)D.

In the frictional electrification passage part 110 of the embodiment 1-2-1, twin vortices are generated due to the protrusions 113. An intensity of the twin vortices generated due to one of the protrusions 113 is reduced as compared with a case where a size of a protrusion is large. However, since a large number of the protrusions 113 are provided, agitation substantially similar to in the case where the size of the protrusion is large can be imparted to a flow.

In a case where sizes of particulates to be flocculated are mainly in micrometer order, a phenomenon that particularly in an area from the wall surface of the passage 111 having a diameter D to a position which is (1/8)D distant from the wall surface, a density of distribution of the particulates to be flocculated is high is observed. However, in the embodiment 1-2-1, since the plurality of protrusions 113 are disposed in a multistage manner so as to each have the height (1/16)D, in the area from the wall surface of the passage 111 having the diameter D to the position (1/8)D, where the density of distribution of the particulates to be flocculated is particularly high, there is a limitation that only a half of such an area can be actively agitated.

The protrusions 113 in the embodiment 1-2-1 have the following advantage: each of the protrusions 113 has the height of (1/16)D, thereby markedly reducing a pressure loss.

Furthermore, in the embodiment 1-2-1, owing to the height of (1/16)D which each of the protrusions 113 has, the twin vortices generated due to the protrusions 113 exert an influence on a velocity boundary layer which develops on the wall 112 of the passage 111 of the frictional electrification passage part 110, thereby attaining an effect that a thickness of the velocity boundary layer is decreased.

In general, in the vicinity of the wall surface in the passage, due to a viscosity of a fluid circulating through the passage, the velocity boundary layer develops. A flow velocity in the boundary layer is low as compared with that in a middle portion of the passage and a resistance against a flow in the boundary layer is high. In other words, when the boundary layer develops and the thickness of the boundary layer increases, an area of a region which allows an easy flow decreases and an behavior observed as if an apparent area of a cross section of the passage decreased is exhibited. Accordingly, when the boundary layer develops and the thickness of the boundary layer increases, the pressure loss of the passage increases.

Because the twin vortices generated due to the protrusions 113 in the embodiment 1-2-1 are small in scale and generated in the vicinity of the wall surface, the twin vortices generated due to the protrusions 113 suppress the development of the above-mentioned boundary layer, thereby decreasing the resistance against the flow around the wall surface of the passage and drastically reducing the pressure loss in the passage 111.

For example, in a case where a diameter D of the passage 111 is 40 mm and a representative velocity of the flow is 25 m/second at ordinary temperatures and pressures, the experimental result showed a relationship: (a pressure loss due to a portion in which turbulence occurs) < (an effect of suppressing the development of the boundary layer due to the portion in which turbulence occurs) and despite the presence of the large number of the protrusions 113, the frictional electrification passage part 110 having a smaller pressure loss than that of a duct having no protrusions was obtained.

In addition, also in a case where a foreign substance or the like is mixed in the fluid circulating through the frictional electrification passage part 110, because the height of each of the protrusions 113 is low, the foreign substance is hardly caught by the protrusions 113.

Accordingly, through using the frictional electrification passage part 110 of the embodiment 1-2-1, sufficient flocculation performance is attained owing to the agitation by the large number of the twin vortices and further, a pipe line frictional resistance can be reduced, thereby obtaining the frictional electrification passage part 110 which allows the pressure loss to be drastically reduced. In addition, for example, also in a case the foreign substance or the like is likely to be mixed in the flow, a failure that the foreign substance is caught by the protrusions 113 and causes clogging can be substantially completely prevented, thereby obtaining the frictional electrification passage part 110 which realizes extremely high reliability.

Moreover, by forming the protrusions 113 such that respective sides of which each of the protrusions 113 is made up are made round so as to each have a radius of one mm, the clogging of the dirt can be drastically reduced. Furthermore, by eliminating any acute-angle groove, the dust flocculating duct having excellent maintainability can be configured.

### (Embodiment 1-2-2)

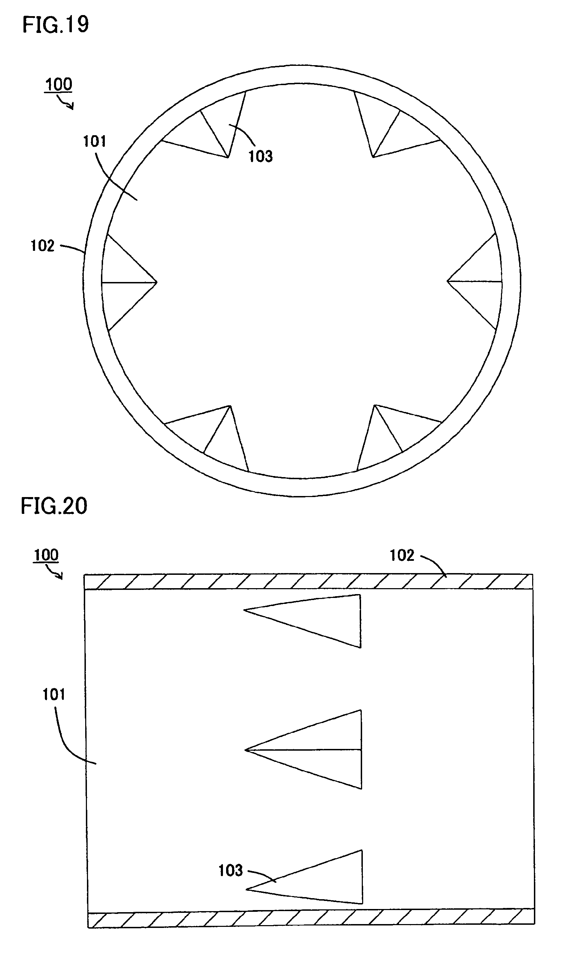

Fig. 18 shows a perspective view in which an important part of a collision promotion passage part of an embodiment 1-2-2 is viewed in a perspective manner. Fig. 19 shows an elevation view illustrating an important part of a dust flocculating duct of the embodiment 1-2-2. Fig. 20 shows a cross-sectional side view of the dust flocculating duct of the embodiment 1-2-2.

As shown in Fig. 18 through Fig. 20, in a collision promotion passage part 100 of the embodiment 1-2-2, a plurality of protrusions 103 are provided on an inner surface of a wall 102 of a passage 101. Each of the protrusions 103 is formed so as to be of a triangular pyramid shape. When viewed from an upstream side, the plurality of protrusions 103 are disposed so as not to overlap one another and the neighboring protrusions 103 are disposed in an evenly-spaced manner. In addition, a configuration of the plurality of protrusions 103 may be provided such that the plurality of protrusions 103 are not disposed on a plane in a direction perpendicular to a flow direction.

In the collision promotion passage part 100 of the embodiment 1-2-2, twin vortices are generated due to the protrusions 103. However, because the number of the protrusions 103 is small and the plurality of protrusions 103 are disposed so as not to overlap one another when viewed from the upstream side, many parts of a flow circulating along the wall 102 of the passage 101 each meet one of the protrusions 103 once and a part, which circulates between one of the protrusions 103 and another of the protrusions 103, of the many parts of the flow never meets any one of the protrusions 103. Therefore, in the collision promotion passage part 100 of the embodiment 1-2-2, agitation which can be imparted to the flow is drastically reduced.

However, the collision promotion passage part 100 of the embodiment 1-2-2 has an advantage that a method of molding the collision promotion passage part 100 is extremely easy. In other words, when viewed from the upstream side, the plurality of protrusions 103 are disposed so as not to overlap one another and the neighboring protrusions 103 are disposed in an evenly-spaced manner. Therefore, for example, in a case where the collision promotion passage part 100 is formed through resin-molding, a molding die is configured such that the upstream side of the collision promotion passage part 100 is set on a movable side of the molding die and a downstream side of the collision promotion passage part 100 is set on a fixed side of the molding die, thereby allowing the collision promotion passage part 100 to be integrally molded without requiring a complicated configuration of the molding die.

In addition, for example, in a case where a foreign substance (for example, something like a milk bottle cap) which is of a plate-like shape and has an area approximate to an area of a cross section of the passage 101 or the like is mixed in a fluid circulating through the collision promotion passage part 100, when a plurality of turbulence generating parts are disposed so as to be present in the plane in the direction perpendicular to the flow direction, an edge of the plate-like shaped foreign substance having the area approximate to the area of the cross section of the passage is highly likely to be caught concurrently by the plurality of protrusions and thereby, a failure that the dust flocculating duct is clogged with the foreign substance is likely to occur. However, in the embodiment 1-2-2, since the configuration of the plurality of protrusions 103 is provided such that the plurality of protrusions 103 are not disposed so as to be present in the plane in the direction perpendicular to the flow direction, the plate-like shaped foreign substance, having the area approximate to the area of the cross section of the passage 101, or the like is hardly caught by the plurality of protrusions.

Accordingly, not only moldability of the collision promotion passage part 100 of the embodiment 1-2-2 is excellent but also for example, in the case where the plate-like shaped foreign substance, having the area approximate to the area of the cross section of the passage, or the like is likely to be mixed in the flow, the failure that the foreign substance is caught by the turbulence generating parts and thereby, the dust flocculating duct is clogged with the foreign substance can be prevented. As described above, the dust flocculating duct having both the extremely high moldability and extremely high reliability can be obtained.

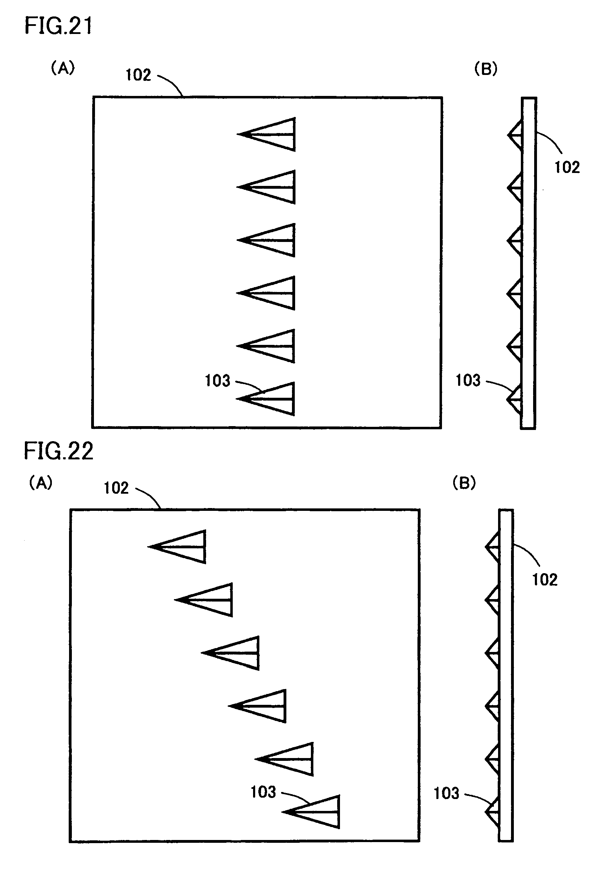

Fig. 21 through Fig. 25 are schematic diagrams illustrating other arrangements of the protrusions in the embodiment 1-2-2. In each of Fig. 21 through Fig. 25, a diagram (A) with the protrusions viewed in a direction perpendicular to a direction of a passage and a schematic diagram (B) with the protrusions viewed from the upstream side of the flow are shown.

As shown in Fig. 21, a plurality of protrusions 103 are disposed on an inner circumferential surface in the direction perpendicular to the flow. In a case where the protrusions are disposed so as to be close to one another or in a cylindrical-shaped duct, when the plurality of protrusions 103 are disposed in a plane in the direction perpendicular to the flow, preferably each with approximately 90 degrees of an interior angle on the cross section of the passage, both extremely high moldability and extremely high reliability can be concurrently attained.

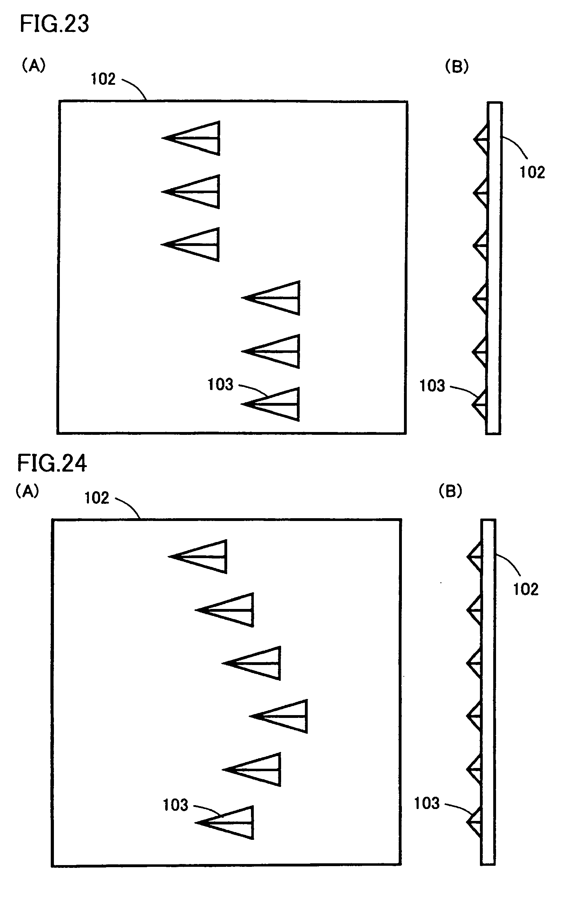

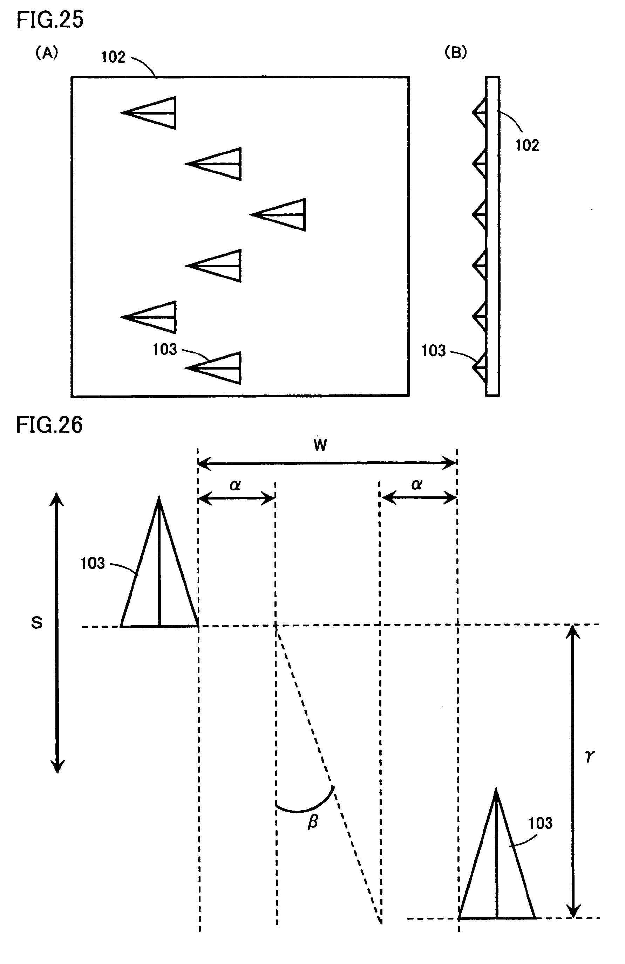

As shown in Fig. 22, a configuration of the protrusions 103 is provided such that neighboring protrusions 103 are slightly displaced from each other to avoid mutual overlapping of the neighboring protrusions 103, thereby preventing the duct from being clogged with the foreign substance due to the protrusions. As a configuration which allows the same effect as mentioned above to be attained, as shown in Fig. 23, a configuration is provided such that the protrusion are divided into several groups and the groups are mutually displaced from one another in the direction of the flow. As shown in Fig. 24 and Fig. 25, a sawtooth-like arrangement can be shown in an illustrative manner. By employing any of these arrangements of the protrusions 103, extremely high moldability can be attained.

Fig. 26 is a diagram illustrating an arrangement of neighboring protrusions in the dust flocculating duct of the embodiment 1-2-2.

As shown in Fig. 26, when the protrusions 103 are disposed so as not to overlap one another in a projection plane which is viewed from a direction parallel to the direction of the flow and a distance between the neighboring protrusions 103 is supposed to be W, W is expressed by the following equation.

W = 2α + ytanβ (note: α, β, and γ are any positive integers.)
With respect to the protrusions 103, it is supposed that α and β are greater than or equal to 3 mm, respectively, and γ (mm) is any number.

When the collision promotion passage part 100 is produced by using a molding die which is separated in a direction S parallel to the gas flow, the passage 101 and the protrusions 103 can be simultaneously molded. This allows a molding cost to be drastically reduced. Regarding the distance between the protrusions 103, by ensuring a lower limit of W, the protrusions can be disposed so as not to overlap one another in the projection plane perpendicular to the gas flow and a strength in portions of the molding die, which come between the protrusions, can be ensured.

### (Embodiment 1-2-3)

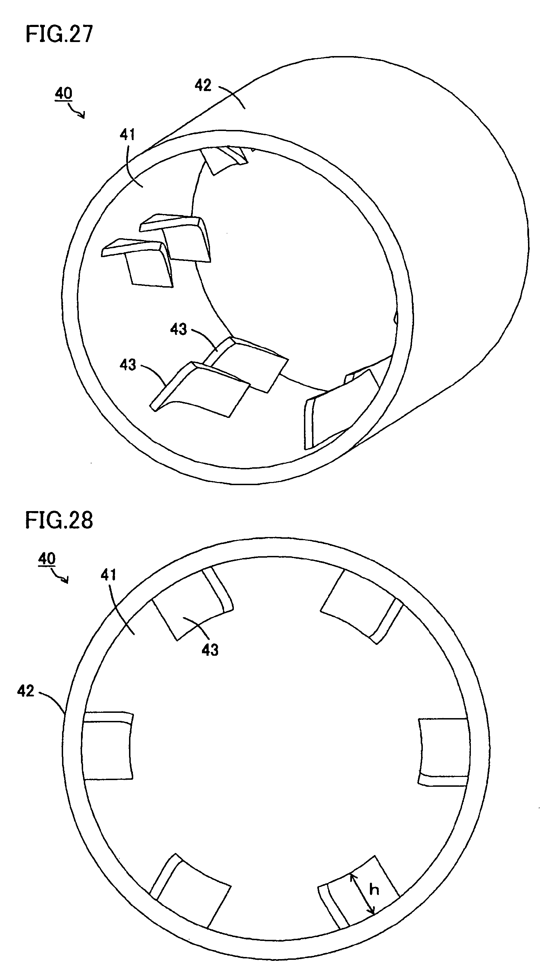

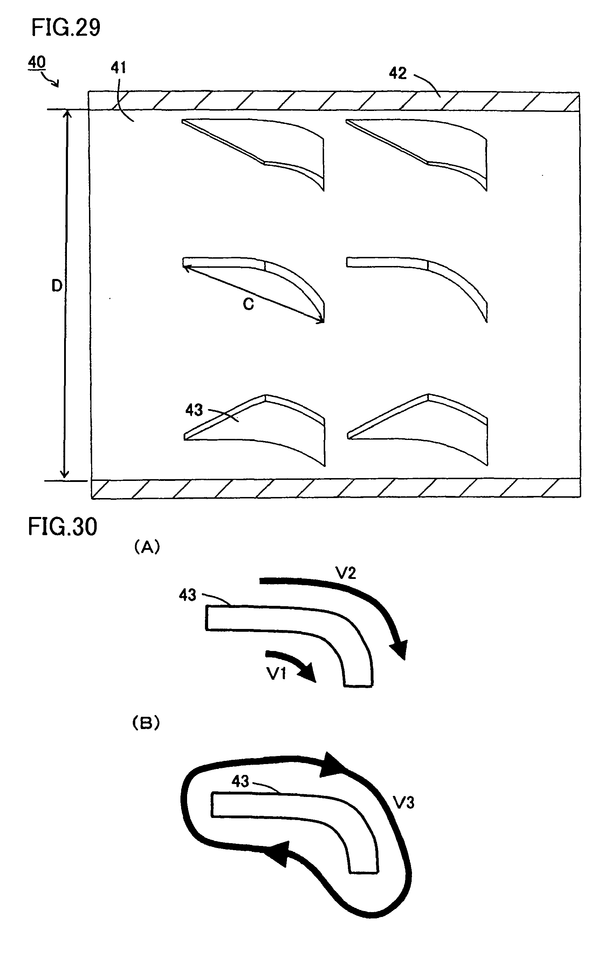

Fig. 27 shows a perspective view illustrating an important part of a frictional electrification passage part and/or a collision promotion passage part of an embodiment 1-2-3 according to the present invention. Fig. 28 shows an elevation view illustrating the important part of the frictional electrification passage part and/or the collision promotion passage part of the embodiment 1-2-3. Fig. 29 shows a cross-sectional side view illustrating the frictional electrification passage part and/or the collision promotion passage part of the embodiment 1-2-3.

As shown in Fig. 27 through Fig. 29, the frictional electrification passage part and/or the collision promotion passage part 40 includes: a passage 41; a wall 42; and a plurality of protrusions 43 as vortex generating parts. The passage 41 is formed by a cylindrical-shaped wall 42. The protrusions 43 are wing-shaped. The protrusion 43 is of a shape in which when a representative length of a passage width on a plane perpendicular to the flow direction of the passage 41 (a length of a side in case of a square passage and a diameter in a case of a circular passage) is supposed to be D, a chord length C is (3/8)D; a stagger angle (an angle formed between a wing chord and the flow direction) is 22.5 degrees which is formed in a counterclockwise manner when the protrusion 43 is viewed from an upstream side to a downstream side; a maximum warping position is located 0.65C from an anterior edge; a portion thereof on the downstream side is convexed; and a height h is (1/8)D. The protrusions 43 are disposed in a grouping manner. In one group, six protrusions 43 are disposed in an evenly spaced manner so as to be present in the same plane perpendicular to the flow direction, that is, the six protrusions 43 are disposed so as to be evenly spaced, each with 60 degrees of an interior angle on a cross section of the collision promotion passage part 40, on the inner surface of the wall 42 of the cylindrical pipe shaped passage 41.

Fig. 30 is a schematic diagram illustrating a gas flow around a protrusion in the frictional electrification passage part and/or the collision promotion passage part of the embodiment 1-2-3.

As shown in Fig. 30 (A), a flow velocity V1 of a flow along a depression side surface of the wing-shaped protrusion 43 is slightly lower than a flow velocity of a fluid circulating through the passage 41 because the flow is stemmed by collision of the flow against the protrusion 43. Conversely, a flow velocity V2 of a flow along a projection side surface of the protrusion 43 is slightly higher than the flow velocity of the fluid passing through the inside the passage. Therefore, as shown in Fig. 30 (B), when a relative velocity in an area surrounding the protrusion 43 with reference to the flow velocity of the fluid circulating through the passage 41 is considered, a circulation V3 which circulates around the protrusion 43 from an upstream side to a downstream side of the passage 41 on a projection side surface of the protrusion 43 and from the downstream side to the upstream side of the passage 41 on a depression side surface of the protrusion 43 occurs.

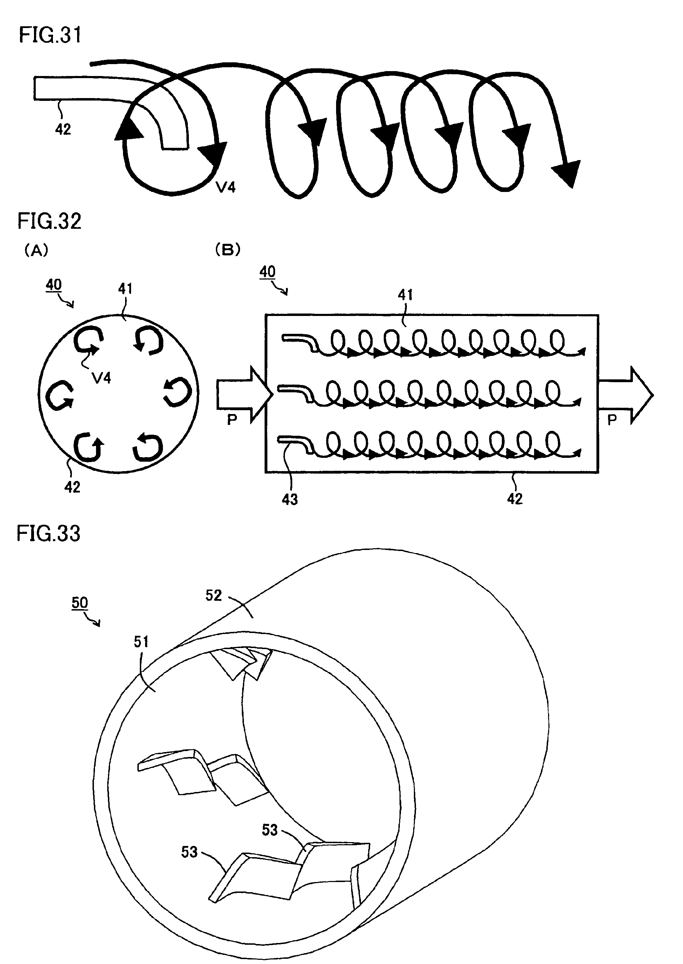

Fig. 31 is a schematic diagram illustrating vortices occurring around the protrusion.

As shown in Fig. 31, due to the circulation V3 shown in Fig. 30 (B) around the protrusion 43, an intense horseshoe vortex V4 occurs from a wing tip of the protrusions 43 having the wing shape. The horseshoe vortex V4 moves downstream along the wall 42 of the passage 41 on the downstream side of the protrusions 43. This horseshoe vortex V4 imparts an intense swirl to the flow circulating downstream of the protrusion 43.

In the frictional electrification passage part and/or the collision promotion passage part 40 of the embodiment 1-2-3, since a wing height h of the protrusion 43 is (1/8)D, a diameter of the horseshoe vortex V4 immediately after the occurrence of the horseshoe vortex V4 is (1/8)D or slightly larger than (1/8)D though depending on the flow velocity of the fluid circulating through the passage 41. As mentioned above, in the case where the sizes of particulates to be flocculated are mainly in micrometer order, the phenomenon that particularly in the area from an inner surface of the wall 42 of the passage 41 having a diameter D to a position which is (1/8)D distant from the inner surface of the wall 42, the density of distribution of the particulates to be flocculated is high is observed. Therefore, the protrusion 43 is set such that the area from the inner surface of the wall 42 of the passage 41 to the position which is (1/8)D distant from the inner surface of the wall 42, where the density of distribution of the particulates to be flocculated is high, is particularly actively agitated by the horseshoe vortex V4.

As described above, in the frictional electrification passage part and/or the collision promotion passage part 40, because the height of the protrusion 43 from the wall 42 is one eighth of a representative length of a cross section which is perpendicular to a direction of the flow of the gas passing through the passage 41, a foreign substance is hardly caught by the protrusion 43.

Fig. 32 is a schematic diagram illustrating a view of the vortices generated due to the protrusion in the embodiment 1-2-3 according to the present invention. Fig. 32 (A) shows an elevation view in which the passage is viewed from a front side and Fig. 32 (B) shows a side view in which the passage is viewed from a lateral side.

As shown in Fig. 32, in the frictional electrification passage part and/or the collision promotion passage part 40, when a gas P enters the passage 41, since the protrusions 43 are disposed at six positions of the inner surface of the wall 42 of the passage 41, six horseshoe vortices V4 which swirl in the same direction occur in a substantially even-spaced manner in the vicinity of the inner surface of the wall 42 of the passage 41. In addition, since the neighboring vortices swirl in the same direction, when a flow line vector on a plane perpendicular to the direction of the flow is considered, one side of a flow in a plane, on which the vortices neighbor each other, swirls from a central portion of the passage in a direction toward the wall surface, another side thereof swirls from the wall surface of the passage in a direction toward the central portion of the passage, and the one side and the another side of the flow collide with each other. Thus, a probability with which the particulates of the fine dust transported by the flows of the respective vortices collide with one another is further enhanced.

As described above, in the frictional electrification passage part and/or the collision promotion passage part 40, the plurality of protrusions 43 are disposed, thereby generating a large number of the vortices inside the passage 41 and allowing the effect of dust flocculation to be enhanced.

As described above, in the frictional electrification passage part and/or the collision promotion passage part 40, the vortex generating part includes the protrusions 43, and the protrusions 43 are formed so as to project from the inner surface of the wall 42, allowing the velocities of the gas passing around the protrusions 43 to be uneven.

By employing the above-described configuration, the dust circulating through the frictional electrification passage part and/or the collision promotion passage part 40 sequentially undergoes: a stage at which the dust is caused by the gas flow to enter the inside the passage 41; a stage at which the dust is transported through the passage 41 by the gas flow traveling forward; a stage at which the dust is caught up in vortical flows, occurring downstream of the protrusions 43 which project from the wall 42 of the passage 41, and circulates; a stage at which the plurality of particulates of the dust mutually collide with one another due to the vortical flows; a stage at which the plurality of particulates of dust having collided with one another grow to be dust masses (clusters); and a stage at which the dust masses are transported through the passage 41 by the gas flow.

As described above, by employing such a simple configuration, the frictional electrification passage part and/or the collision promotion passage part 40 which are/is capable of facilitating the flocculation by increasing the number of times when the particulates in the dust mutually collide with one another, of decreasing the number of particulates, and of increasing the apparent diameters of the particulates can be provided.

### (Embodiment 1-2-4)

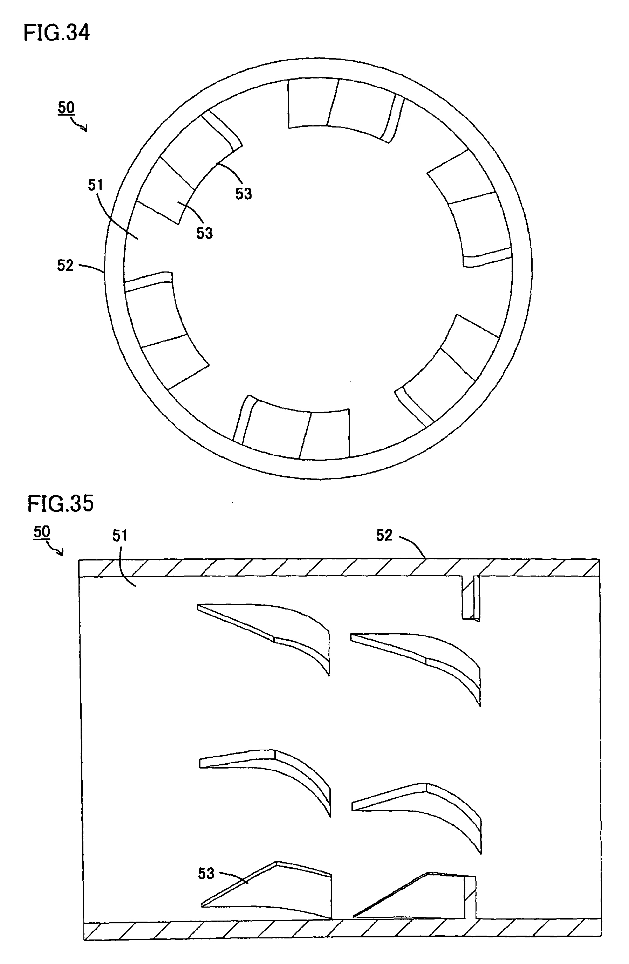

Fig. 33 shows a perspective view illustrating an important part of a frictional electrification passage part and/or a collision promotion passage part of an embodiment 1-2-4 according to the present invention. Fig. 34 shows an elevation view illustrating the important part of the frictional electrification passage part and/or the collision promotion passage part of the embodiment 1-2-4. Fig. 35 shows a cross-sectional side view illustrating the frictional electrification passage part and/or the collision promotion passage part of the embodiment 1-2-4.

As shown in Fig. 33 through Fig. 35, in the frictional electrification passage part and/or the collision promotion passage part 50 of the embodiment 1-2-4, protrusions 53 are disposed, instead of the protrusions 43 in the embodiment 1-2-3. Each of the protrusions 53 is of a wing shape which is the same as the shape of each of the protrusions 43 in the embodiment 1-2-3 but the protrusions 53 are disposed in a manner different from the manner in which the protrusions 43 are disposed.

In the frictional electrification passage part and/or the collision promotion passage part 50, pairs of protrusions 53, each of which neighbors each other in a direction of a passage, are disposed from an upstream side toward a downstream side of the passage in a step-like manner. The pairs of protrusions 53 disposed in the step-like manner are disposed such that the two protrusions 53 of each of the pairs partially overlap each other when viewed from the upstream side. In other words, the pairs of protrusions 53 disposed in the step-like manner are disposed such that if a virtual line of a gas flow is drawn so as to span from a terminal end of one of the pair of protrusions 53, which is disposed on the upstream side, toward the downstream, the virtual line intersects another of the pair of protrusions 53, which is disposed on the downstream side. The other parts of the frictional electrification passage part and/or the collision promotion passage part 50 of the embodiment 1-2-4 are the same as those of the frictional electrification passage part and/or the collision promotion passage part 40 of the embodiment 1-2-3.

In the frictional electrification passage part and/or the collision promotion passage part 50 of the embodiment 1-2-4, a horseshoe vortex V5 which has occurred on the one of the pair of protrusions 53, which is disposed on the upstream side, is further intensified on the another of the pair of protrusions 53, which is disposed on the downstream side, whereby a further intense horseshoe vortex V6 is generated. While the vortices are moving downstream, the vortices gradually attenuate. However, since the vortices generated in the frictional electrification passage part and/or the collision promotion passage part 50 are more intense than the vortices generated in the frictional electrification passage part and/or the collision promotion passage part 40, a distance (outreach) from a point at which the attenuation of the vortices starts to a point at which the attenuation of the vortices finishes is long, whereby influences of the vortices can be exerted on the further downstream. In the vicinity of a wall 52 of the passage 51, six horseshoe vortices which swirl in the same direction occur in a substantially even-spaced manner.

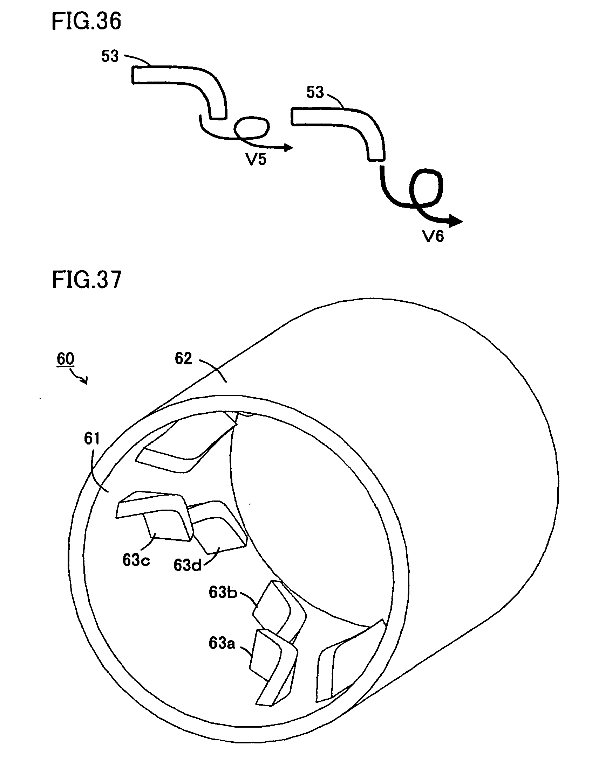

Fig. 36 is a schematic diagram illustrating a gas flow around a protrusion in the frictional electrification passage part and/or the collision promotion passage part of the embodiment 1-2-4.

As shown in Fig. 36, since the pairs of the protrusions 53 are disposed in the step-like manner, a horseshoe vortex V5 generated on the upstream side is caught up in a vortex generated on the protrusion 53 downstream side, thereby allowing an intense horseshoe vortex V6 to be effectively generated.

Further, since the neighboring vortices swirl in the same direction, when flow line vectors on a plane perpendicular to the direction of the flow are considered, one vector of a flow in a plane, on which the vortices neighbor each other, swirls from a central portion of the passage in a direction toward the wall surface and another vector thereof swirls from the wall surface of the passage in a direction toward the central portion of the passage. In such a manner, the one vector and the another vector of the flow collide with each other. Thus, a probability with which the particulates of the fine dust transported by the flows of the respective vortices collide with one another is further enhanced.

Accordingly, by using the frictional electrification passage part and/or the collision promotion passage part 50 of the embodiment 1-2-4, the further intense vortices can be generated. Therefore, the outreach of each of the vortices is long and thereby, the probability with which the particulates of the fine dust transported by the flow can be further increased, whereby a capability of flocculating the dust can be drastically enhanced. In addition, friction of the flow is reduced in the frictional electrification passage part and/or the collision promotion passage part 50 of the embodiment 1-2-4 as compared with the frictional electrification passage part and/or the collision promotion passage part 40 of the embodiment 1-2-3, thereby allowing a reduction in a pressure loss.

In the frictional electrification passage part and/or the collision promotion passage part 50 of the embodiment 1-2-4, the pressure loss is equal to that in the frictional electrification passage part and/or the collision promotion passage part 40 of the embodiment 1-2-3. However, the probability with which the particulates of the fine dust collide with one another is increased by approximately 30 % as compared with the probability attained by the frictional electrification passage part and/or the collision promotion passage part 40 of the embodiment 1-2-3. By using the frictional electrification passage part and/or the collision promotion passage part 50 of the embodiment 1-2-4, a dust flocculating duct which achieves further high performance can be obtained.

### (Embodiment 1-2-5)

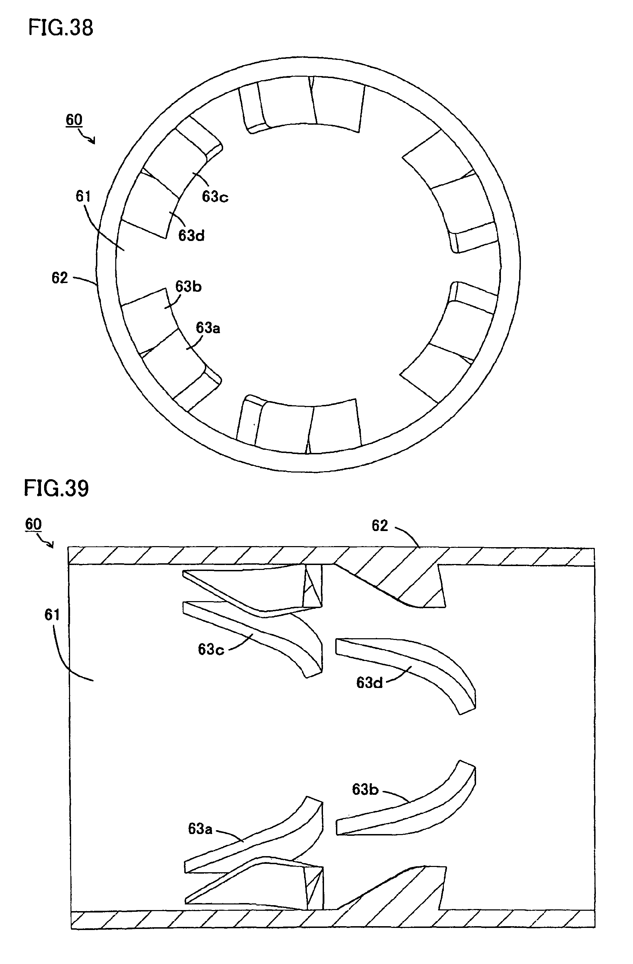

Fig. 37 shows perspective view illustrating an important part of a frictional electrification passage part and/or a collision promotion passage part of an embodiment 1-2-5 according to the present invention. Fig. 38 shows an elevation view illustrating the important part of the frictional electrification passage part and/or the collision promotion passage part of the embodiment 1-2-5. Fig. 39 shows a cross-sectional side view illustrating the frictional electrification passage part and/or the collision promotion passage part of the embodiment 1-2-5.

As shown in Fig. 37 through Fig. 39, in the frictional electrification passage part and/or the collision promotion passage part 60 of the embodiment 1-2-5, quartets, each of which is composed of a protrusion 63a, a protrusion 63b, a protrusion 63c, and a protrusion 63d, are disposed, instead of the protrusions 53 in the embodiment 1-2-4. Each of the protrusions (63a, 63b, 63c, and 63d) is of the same shape as that of the protrusion 53, namely, the wing shape and the number of the protrusions (63a, 63b, 63c, and 63d) disposed is the same as the number of the protrusions 53 disposed. However, the protrusion 63a and protrusion 63c which neighbor each other are disposed so as to form stagger angles (each of which is an angle formed between a wing chord and a direction of a flow) in a manner opposite to each other; and the protrusion 63b and the protrusion 63d which neighbor each other are also disposed in the same manner as mentioned above. In other words, the protrusions (63a, 63b, 63c, and 63d) have curved shapes so as to form depressions. Two protrusions which neighbor each other in a direction intersecting a direction of a gas flow are disposed such that two depressions of the two protrusions face each other. On a wall 62 of a passage 61, three protrusions 63a are disposed in a circumferential direction of the cross section perpendicularly intersecting the direction of the gas flow in an evenly spaced manner, each with a stagger angle of 22.5 degrees which is formed in a clockwise manner when each of the protrusions 63a is viewed from an upstream side to a downstream side; respectively between the protrusion 63a, three protrusion 63c are disposed in an evenly spaced manner, each with a stagger angle of 22.5 degrees which is formed in a counterclockwise manner when each of the protrusions 63c is viewed from the upstream side to the downstream side. On each of the downstream sides of the protrusions 63a and the protrusions 63c, three protrusion 63b are disposed in the circumferential direction of the cross section perpendicularly intersecting the direction of the gas flow in an evenly spaced manner, each with a stagger angle of 22.5 degrees which is formed in a clockwise manner when each of the protrusions 63b is viewed from the upstream side to the downstream side; and respectively between the three protrusions 63b, three protrusion 63d are disposed, each with a stagger angle of 22.5 degrees which is formed in a counterclockwise when each of the protrusion 63d is viewed from the upstream side to the downstream side. Along the direction of the gas flow, each of the protrusion 63b is disposed on a downstream side of each of the protrusion 63a, and each of the protrusion 63d is disposed on a downstream side of each of the protrusion 63c. The four protrusions are disposed such that a distance between the depressions of the protrusion 63a and the protrusion 63c is larger than a distance between the depressions of the protrusion 63b and the protrusion 63d.

In the frictional electrification passage part and/or the collision promotion passage part 60 of the embodiment 1-2-5, the same horseshoe vortices as those generated on the protrusions 43 in the embodiment 1-2-3 are generated on the protrusions (63a, 63b, 63c, and 63d) and the horseshoe vortices move downstream along a downstream portion of a wall 62 of a passage 61, thereby imparting intense swirls to a flow circulating downstream of the protrusions.

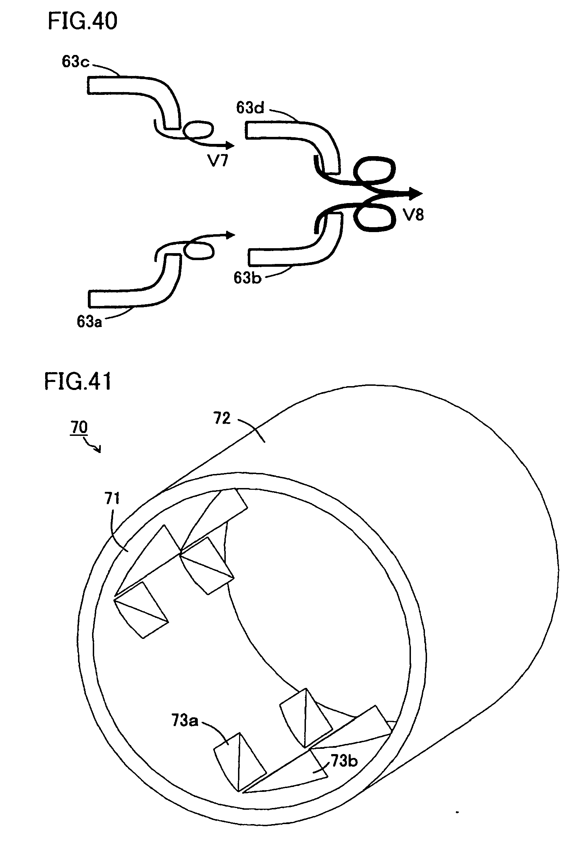

Fig. 40 is a schematic diagram illustrating a view of the vortices generated around the protrusions in the frictional electrification passage part and/or the collision promotion passage part of the embodiment 1-2-5.

As shown in Fig. 40, inside the passage 61 of the frictional electrification passage part and/or the collision promotion passage part 60 of the embodiment 1-2-5, 12 protrusions are disposed so as to each mutually face toward opposite directions. Therefore, in the vicinity of an inner surface of the wall 62 of the passage 61, six horseshoe vortices V7 are generated. Pairs of neighboring vortices of the six horseshoe vortices V7 each swirl in respectively opposite directions. The horseshoe vortices V7 generated on the protrusion 63a and the protrusion 63c on the upstream side are caught up in a gas flow passing between the protrusion 63b and the protrusion 63d on the downstream side, and thereby, an intense horseshoe vortex V8 is generated. Further, since the protrusion 63b and the protrusion 63d are disposed so as to face toward the opposite directions, the vortices generated between the protrusion 63b and the protrusion 63d on the downstream side act so as to mutually intensify each other, thereby allowing the further intense horseshoe vortex V8 to be generated.

In addition, since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the passage 61 in the embodiment 1-2-5, a pressure loss due to the vortices is reduced as compared with the passage 51 in the embodiment 1-2-4.

As described above, in the frictional electrification passage part and/or the collision promotion passage part 60, each of the protrusions (63a, 63b, 63c, and 63d) is of the shape which has a curved portion so as to form the depression, and the two protrusions which neighbor in the direction intersecting the direction of the gas flow are disposed such that the two depressions of the two neighboring face toward each other, whereby the vortices generated on the neighboring protrusion move downstream while swirling in the opposite directions. Therefore, in the plane on which the vortices neighbor each other, the gas flows which form these vortices travel in the same direction. Accordingly, the vortices generated on the neighboring protrusions smoothly converge, thereby reducing the frictional resistance caused by the viscosity of the flow. Thus, the pressure loss inside the passage 61 can be reduced.

Accordingly, through using the frictional electrification passage part and/or the collision promotion passage part 60 of the embodiment 1-2-5, a friction of the flow can be reduced as compared with the frictional electrification passage part and/or the collision promotion passage part 40 of the embodiment 1-2-3, thereby allowing the pressure loss to be further reduced. A probability with which the particulates of the fine dust collide with one another due to the friction of the flow is reduced by approximately 5 % as compared with the frictional electrification passage part and/or the collision promotion passage part 40 of the embodiment 1-2-3. However, the pressure loss is reduced by approximately 10 % as compared with the frictional electrification passage part and/or the collision promotion passage part 40 of the embodiment 1-2-3. Therefore, the embodiment 1-2-5 realizes the frictional electrification passage part and/or the collision promotion passage part 60 attaining higher performance than that attained by the frictional electrification passage part and/or the collision promotion passage part 40 of the embodiment 1-2-3.

### (Embodiment 1-2-6)

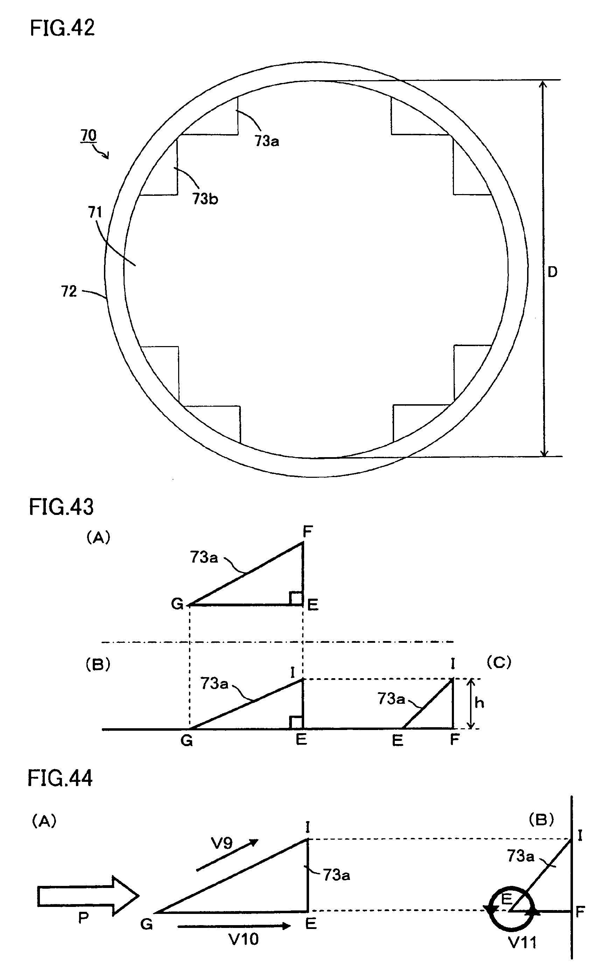

Fig. 41 shows a perspective view in which an important part of a frictional electrification passage part and/or a collision promotion passage part of an embodiment 1-2-6 according to the present invention is viewed in a perspective manner. Fig. 42 shows an elevation view illustrating the important part of the frictional electrification passage part and/or the collision promotion passage part of the embodiment 1-2-6.

As shown in Fig. 41 and Fig. 42, in the frictional electrification passage part and/or the collision promotion passage part 70 of the embodiment 1-2-6 according to the present invention, a plurality of protrusions 73a and a plurality of protrusions 73b are disposed on an inner surface of a wall 72 of a passage 71, instead of the protrusions 43 in the embodiment 1-2-3. Each of the protrusions 73a and protrusions 73b has a triangular bottom.

Fig. 43 is a diagram illustrating the protrusion in the embodiment 1-2-6. Fig. 43 (A) shows a bottom view of the protrusion. Fig. 43 (B) shows a side view of the protrusion. Fig. 43 (C) shows an elevation view of the protrusion. It is supposed that an upstream side of the passage is a front side.

As shown in Fig. 43, the bottom of the protrusion 73a is of a right triangle EFG whose respective sides has lengths with EF : FG : GE = 1 : 2 : √3. The bottom EFG of the protrusion 73a is jointed to an inner surface of a wall 72 of a passage 71 such that among respective apices of the right triangle, the apex G having an angle of 30 degrees is disposed on an upstream side of a flow and the side EF spanning between the apex having an angle of 60 degrees and the apex having an angle of 90 degrees is disposed so as to be perpendicular to a flow direction. The remaining one apex I of the protrusion 73a is formed so as to project into the passage 71 from the wall 72.

The protrusion 73a is of a shape in which when a respresentative length of a passage width on a plane perpendicular to the flow direction of the passage 71 (a length of a side in case of a square passage and a diameter in a case of a circular passage) is supposed to be D, a length GE in the flow direction is (3/8)D; an angle formed by the flow direction and a hypotenuse is 30 degrees in a clockwise manner when the protrusion 73a is viewed from the upstream side to a downstream side; and a height h of the protrusion 73a is (1/8)D. In a shape of the protrusion 73b which neighbors the protrusion 73a, an angle formed by the flow direction and a hypotenuse is 30 degrees in a counterclockwise manner when the protrusion 73a is viewed from the upstream side to the downstream side. On the wall 72 of the passage 71, four protrusions 73a are disposed in an evenly-spaced manner; four protrusions 73b are disposed respectively between the two protrusions 73a; and the protrusions 73a and the protrusions 73b are disposed so as to each face toward opposite directions.

Fig. 44 is a schematic diagram illustrating a gas flow around the protrusion of the embodiment 1-2-6.

As shown in Fig. 44, a flow velocity V9 of a flow along a hypotenuse GI of the protrusion 73a is slightly lower than a flow velocity P of a fluid circulating through the passage 71 because the flow is stemmed by collision of the flow against the protrusion 73a. On the other hand, a flow velocity V10 of a flow along the side GE, in the flow direction, of the protrusion 73a is the substantially same as the flow velocity P of the fluid circulating through the inside the passage 71. Therefore, when a relative velocity in an area surrounding the protrusion 73a with reference to the flow velocity of the fluid circulating through the passage 71 is considered, a circulation which circulates around the protrusion 73a from the upstream side to the downstream side of the passage 71 on the side GE in the flow direction and from the downstream side to the upstream side of the passage 71 on a hypotenuse FG occurs. Due to this circulation, a horseshoe vortex V11 is generated from the apex of the protrusion 73a which is triangular pyramid-shaped and the horseshoe vortex V11 moves downstream along a downstream portion of the wall 72 of the passage 71. This horseshoe vortex 11 imparts a swirl to the flow circulating downstream of the protrusion 73a. Although also on the protrusion 73b, a horseshoe vortex is formed as similarly to on the protrusion 73a, a direction in which the horseshoe vortex swirls on the protrusion 73b is opposite to the direction in which the horseshoe vortex on the protrusion 73a swirls.

In the embodiment 1-2-6, since each of the heights h of the protrusion 73a and the protrusion 73b is (1/8)D, a diameter of the horseshoe vortex V11 immediately after the occurrence of the horseshoe vortex is (1/8)D or slightly larger than (1/8)D though depending on the flow velocity of the fluid circulating through the passage 71. As mentioned above, in the case where the sizes of particulates to be flocculated are mainly in micrometer order, the phenomenon that particularly in the area from the wall 72 of the passage 71 having the diameter D to a position which is (1/8)D distant from the wall 72, the density of distribution of the particulates to be flocculated is high is observed. Therefore, the protrusions 73a and the protrusions 73b in the embodiment 1-2-6 actively agitate the gas passing the area from the wall 72 of the passage 71 to the position which is (1/8)D distant from the wall 72, where the density of distribution of the particulates to be flocculated is high, by generating the horseshoe vortices.

As described above, in the frictional electrification passage part and/or the collision promotion passage part 70, because each of the heights of the protrusion 73a and the protrusion 73b from the wall 72 is one eighth of a representative length of a cross section which is perpendicular to a direction of the flow of the gas passing through the passage 71, a foreign substance is hardly caught by the protrusion 73a and the protrusion 73b.

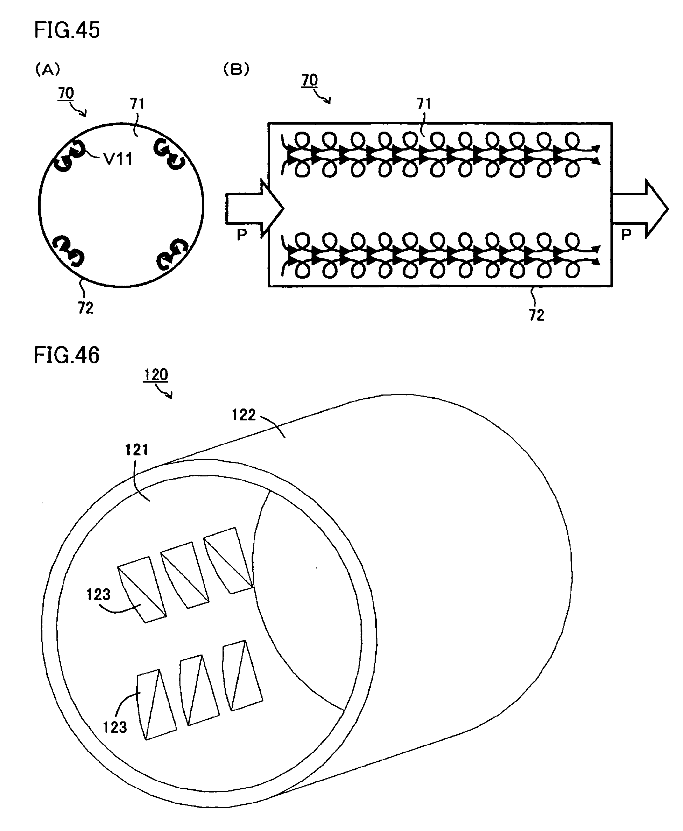

Fig. 45 is a schematic diagram illustrating a view of the vortices generated due to the protrusions in the embodiment 1-2-6 according to the present invention. Fig. 45 (A) shows a view in which the passage is viewed from a front side and Fig. 45 (B) shows a view in which the passage is viewed from a lateral side.

As shown in Fig. 45, in the vicinity of the wall 72 of the passage 71, eight horseshoe vortices V11 are generated and pairs of neighboring vortices of the eight horseshoe vortices V7 each swirl in respectively opposite directions. Since the neighboring vortices each swirl in the opposite directions, when flow line vectors on a plane perpendicular to the direction of the flow are considered, one vector of a flow in a plane, on which the vortices neighbor each other, swirls from a central portion of the passage in a direction toward the wall surface and another vector thereof also swirls in the same direction; and the one vector thereof swirls from the wall surface of the passage in a direction toward the central portion of the passage and the another vector thereof also swirls in the same direction. Therefore, the vectors of the flow can smoothly converge, thereby decreasing a frictional resistance caused by a viscosity of the flow. Thus, in the frictional electrification passage part and/or the collision promotion passage part 70 in the embodiment 1-2-6, a pressure loss due to the vortices is reduced.

In a case where a rod-like foreign substance having a length of D and a thickness of 0.05D is mixed in a fluid circulating through the passage 71, since when each of the protrusions of the dust flocculating duct is of, for example, a shape having a curved portion, each of the protrusions has a depression on a upstream side thereof and a projection on a downstream side thereof, one end of the rod-like foreign substance is caught by one of the gas vortex generating parts and another end of the rod-like foreign substance is caught by another of the gas vortex generating part, whereby a failure that the dust flocculating duct is clogged with the foreign substance is likely to occur. On the other hand, in the frictional electrification passage part and/or the collision promotion passage part 70 of the embodiment 1-2-6, the protrusion 73a has no depression and on each of the protrusion 73a and the protrusion 73b, an oblique surface is formed, instead of the depressed surface of the protrusion 43 in the embodiment 1-2-3, whereby the above-mentioned rod-like foreign substance or the like is hardly caught by the protrusions.

As described above, in the frictional electrification passage part and/or the collision promotion passage part 70, an area of a cross section of each of the protrusions 73a and the protrusions 73b in a direction perpendicular to the direction of the gas flow is small on the upstream side and large on the downstream side. This causes a foreign substance to be hardly caught by the protrusions 73a and the protrusions 73b.

Accordingly, by using the frictional electrification passage part and/or the collision promotion passage part 70 of the embodiment 1-2-6, the substantially same effect as that attained by the embodiment 1-2-4 can be attained. Moreover, for example, in a case where the rod-like foreign substance or the like is likely to be mixed in the flow, since the failure that the rod-like foreign substance is caught by the turbulence generating parts can be prevented, a highly reliable dust flocculating duct can be obtained as compared with the dust flocculating ducts of the embodiment 1-2-3 through the embodiment 1-2-5.

The shape of each of the protrusions in the frictional electrification passage part and/or the collision promotion passage part 70 of the embodiment 1-2-6 may be of a shape shown in Fig. 46 through Fig. 48.

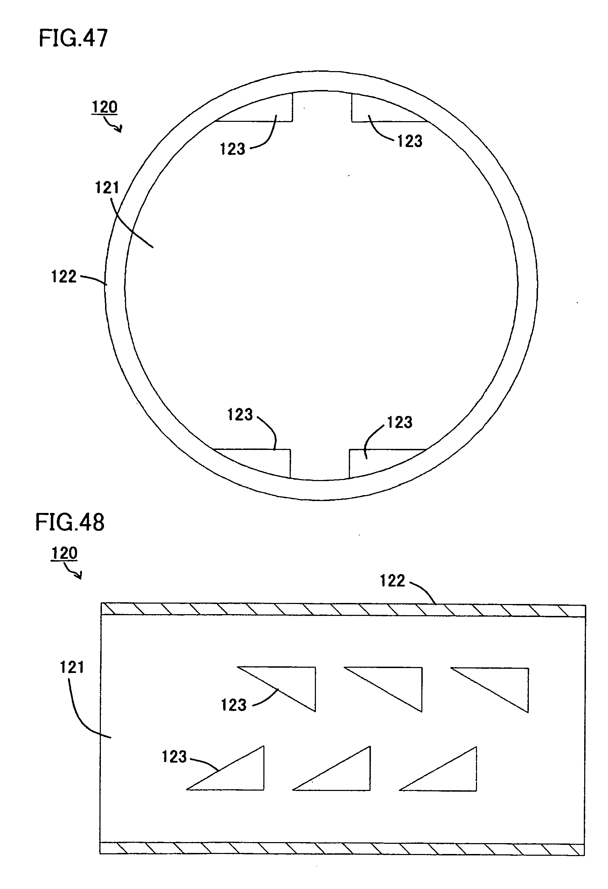

Fig. 46 shows a perspective view in which an important part of the frictional electrification passage part and/or the collision promotion passage part of the embodiment 1-2-6 according to the present invention, in which protrusions each having another shape are disposed, is viewed in a perspective manner. Fig. 47 shows an elevation view illustrating the important part of the frictional electrification passage part and/or the collision promotion passage part of the embodiment 1-2-6 according to the present invention, in which the protrusions each having the another shape are disposed. Fig. 48 shows a cross-sectional side view illustrating the frictional electrification passage part and/or the collision promotion passage part of the embodiment 1-2-6 according to the present invention, in which the protrusions each having the another shape are disposed.

As shown in Fig. 46 through Fig. 48, in a passage 121 of the frictional electrification passage part and/or the collision promotion passage part 120, protrusions 123 are disposed on an inner surface of a wall 122 of the passage 121.

### (Embodiment 1-2-7)

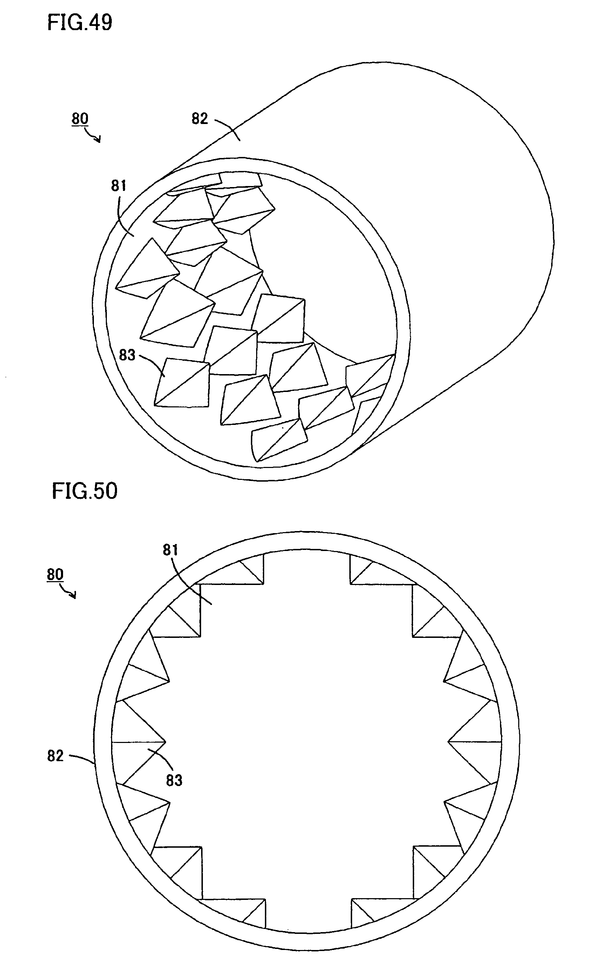

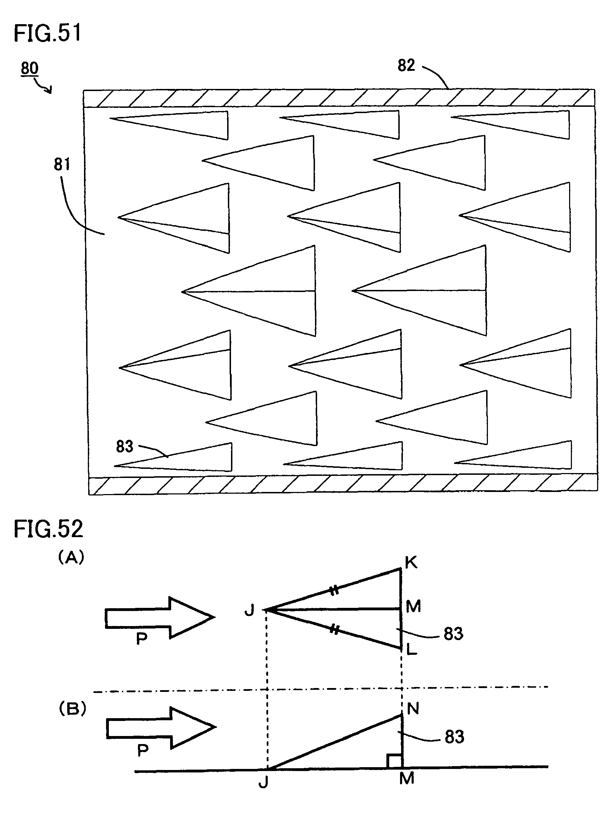

Fig. 49 shows a perspective view in which an important part of a frictional electrification passage part and/or a collision promotion passage part of an embodiment 1-2-7 according to the present invention is viewed in a perspective manner. Fig. 50 shows an elevation view illustrating the important part of the frictional electrification passage part and/or the collision promotion passage part of the embodiment 1-2-7. Fig. 51 shows a cross-sectional side view of the frictional electrification passage part and/or the collision promotion passage part of the embodiment 1-2-7.

As shown in Fig. 49 through Fig. 51, in the embodiment 1-2-7, a plurality of protrusions 83 are disposed, instead of the protrusions 73a and the protrusions 73b in the embodiment 1-2-6. Each of the protrusions 83 is of a triangular pyramid shape.

Fig. 52 is a diagram illustrating an overhead view (A) and a lateral view (B) of a shape of each of the protrusions in the embodiment 1-2-7.

As shown in Fig. 52, each of the protrusions 83 is of a triangular pyramid-shape whose bottom JKL is of an isosceles triangle with a base KL : a height JM = 1 : 2. The bottom JKL is jointed to a wall surface of the passage such that the smallest angle J of the isosceles triangle of the bottom is disposed on an upstream side of a flow and the base KL is disposed so as to be perpendicular to a flow direction. When an apex of the triangular pyramid-shaped protrusion is supposed to be N, the protrusion is formed such that a perpendicular spanning from the apex N to the isosceles triangle of the bottom passes M, that is, such that NM is perpendicular to JM and KL, respectively. The protrusion is of a shape in which when a representative length of a passage width on a plane perpendicular to a flow direction of a passage 81 (a length of a side in case of a square passage and a diameter in a case of a circular passage) is supposed to be D, a length JM in the flow direction is (1/2)D; and a triangular pyramid height NM is (1/8)D.

In addition, on an inner surface of a wall 82 of a passage 81, a large number of protrusions 83 are disposed in a regular manner. In the frictional electrification passage part and/or the collision promotion passage part 80, the plurality of protrusions 83 are disposed at intervals of (3/2)JM in the flow direction and at intervals of (3/2)KL in a direction perpendicular to the flow direction. The plurality of protrusions 83 are disposed such that with respect to one of the protrusions 83, another of the protrusions 83 is disposed so as to be (3/4)JM displaced from the one of the protrusions 83 in the flow direction and further another of the protrusions 83 is disposed so as to be (3/4)KL displaced from the one of the protrusions 83 in the direction perpendicular to the flow direction; and the other protrusions 83 are disposed in the same manner. In other words, the plurality of protrusions 83 are disposed in a manner of the so-called staggered arrangement and in a multistage manner such that when it is supposed that one pitch in the flow direction is (3/2)JM and one pitch in the direction perpendicular to the flow direction is (3/2)KL, the protrusions 83 are disposed so as to be 0.5 pitch displaced, each in the flow direction and the direction perpendicular to the flow direction, from one another.

When these protrusions 83 are viewed from an upstream side in a perspective manner, the plurality of protrusions 83 are disposed so as not to completely overlap one another but such that neighboring protrusions 83 only partially overlap each other. The other parts of the embodiment 1-2-7 are the same as those of the embodiment 1-2-4.

In the frictional electrification passage part and/or the collision promotion passage part 80 of the embodiment 1-2-7, a flow circulating in the vicinity of the inner surface of the wall 82 of the passage 81 is lifted up to a side of an apex N with respect to the bottom of the triangular pyramid due to slopes of surfaces JNK and JNL of the protrusion 83 which is triangular pyramid-shaped and is wound up to a side of a central portion of the passage, generating weak twin vortices on a downstream side of the apex N. The flow circulating through the frictional electrification passage part and/or the collision promotion passage part 80 of the embodiment 1-2-7 is sequentially agitated such that the flow is agitated by weak twin vortices, generated by the protrusion 83 which the flow first meets, and circulates downstream; the flow is agitated again by weak twin vortices, generated by the protrusion 83 which the flow next meets, and circulates further downstream; and the flow is agitated further again by weak twin vortices, generated by the protrusion 83 which the flow further next meets. Such agitation is repeated at the plurality of protrusions 83. As mentioned above, in the case where the sizes of particulates to be flocculated are mainly in micrometer order, a phenomenon that particularly in an area from the wall 82 of the passage 81 having the diameter D to a position which is (1/8)D distant from the wall 82, a density of distribution of the particulates to be flocculated is high is observed. Therefore, the plurality of protrusions 83 disposed in the multistage manner in the embodiment 1-2-7 actively agitate the area from the wall 82 of the passage 81 to the position which is (1/8)D distant from the wall 82, where the density of distribution of the particulates to be flocculated is high, by using the plurality of twin vortices.

As described above, in the frictional electrification passage part and/or the collision promotion passage part 80, because each of the heights of the protrusions 83 from the wall 82 is less than or equal to one eighth of a representative length of a cross section which is perpendicular to the direction of the flow of the gas passing through the passage 81, a foreign substance is hardly caught by the protrusions 83.

In addition, when the plurality of protrusions 83 are viewed from the upstream side in the perspective manner, the plurality of protrusions 83 are disposed so as not to completely overlap one another but such that the neighboring protrusions 83 only partially overlap each other. Therefore, the flow circulating along the wall 82 of the passage 81 invariably meets the protrusions 83. Thereafter, the flow circulating along the wall 82 of the passage 81 passes through the frictional electrification passage part and/or the collision promotion passage part 80 while circulating downstream and accordingly meeting the protrusions 83 repeatedly.

As described above, in the frictional electrification passage part and/or the collision promotion passage part 80, the plurality of protrusions 83 are disposed along the direction in which the gas flows in the passage 81 so as to partially overlap one another when viewed from the upstream side to the downstream side of the passage 81 in the perspective manner. This allows the gas flowing through the passage 81 to easily pass around the protrusions 83, thereby enabling efficient generation of the vortices.

Accordingly, in the frictional electrification passage part and/or the collision promotion passage part 80 of the embodiment 1-2-7, the gas flow circulating in the area from the wall 82 of the passage 81 to the position which is (1/8)D distant from the wall 82 can be most efficiently agitated and the number of the generated twin vortices can be increased.

As described above, in the frictional electrification passage part and/or the collision promotion passage part 80, the plurality of protrusions 83 are disposed along the direction in which the gas flows in the passage 81 so as to partially overlap one another when viewed from the upstream side to the downstream side of the passage 81 in the perspective manner. This allows the gas flowing through the passage 81 to easily pass around the protrusions 83, thereby enabling efficient generation of the vortices.

In addition, in a case where a foreign substance or the like (for example, a cloth-like or mesh-like material such as a handkerchief and pantyhose), for example, which is of a soft cloth-like material and has a size substantially equal to the diameter of the passage 81 is mixed in a fluid circulating through the frictional electrification passage part and/or the collision promotion passage part 80, when each of the protrusions in the dust flocculating duct is of a shape having a curved portion or a rectangular portion, the cloth-like foreign substance is easily caught by the gas vortex generating parts, whereby a failure that the dust flocculating duct is clogged with the foreign substance is likely to occur. In the embodiment 1-2-7, since the protrusions 83 are formed as the smooth triangular pyramid-shaped protrusions on the upstream side of the flow, the above-mentioned cloth-like foreign substance or the like is hardly caught by the protrusions 83.

Accordingly, by using the frictional electrification passage part and/or the collision promotion passage part 80 of the embodiment 1-2-7, sufficient flocculation performance can be attained through the agitation by the large number of twin vortices. Moreover, for example, in a case where the cloth-like foreign substance or the like is likely to be mixed in the flow, since the failure that the cloth-like foreign substance is caught by the turbulence generating parts can be prevented, a highly reliable dust frictional electrification passage part and/or collision promotion passage part 80 can be obtained as compared with the dust flocculating ducts of the embodiment 1-2-3 through the embodiment 1-2-6.

### (Embodiment 1-2-8)

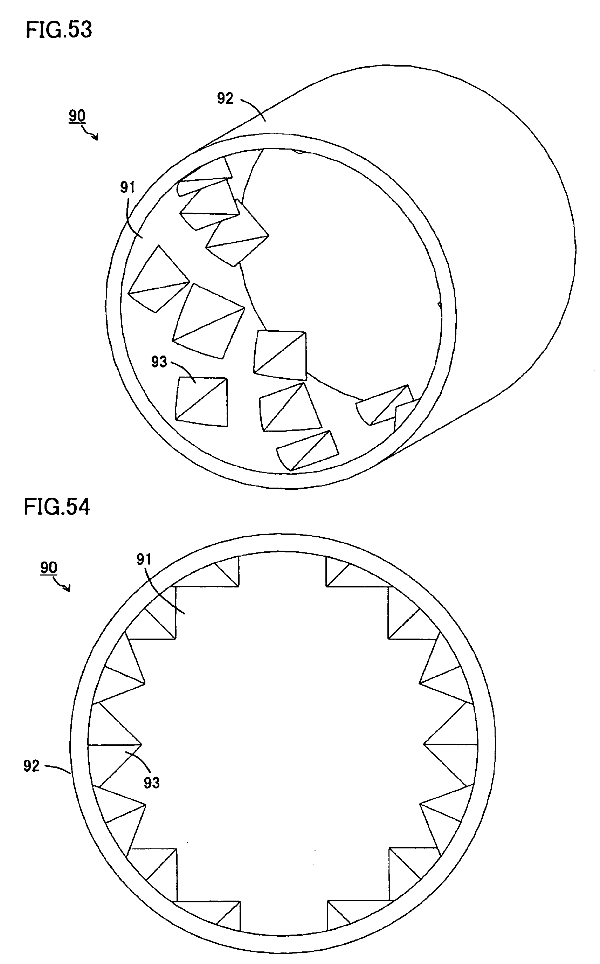

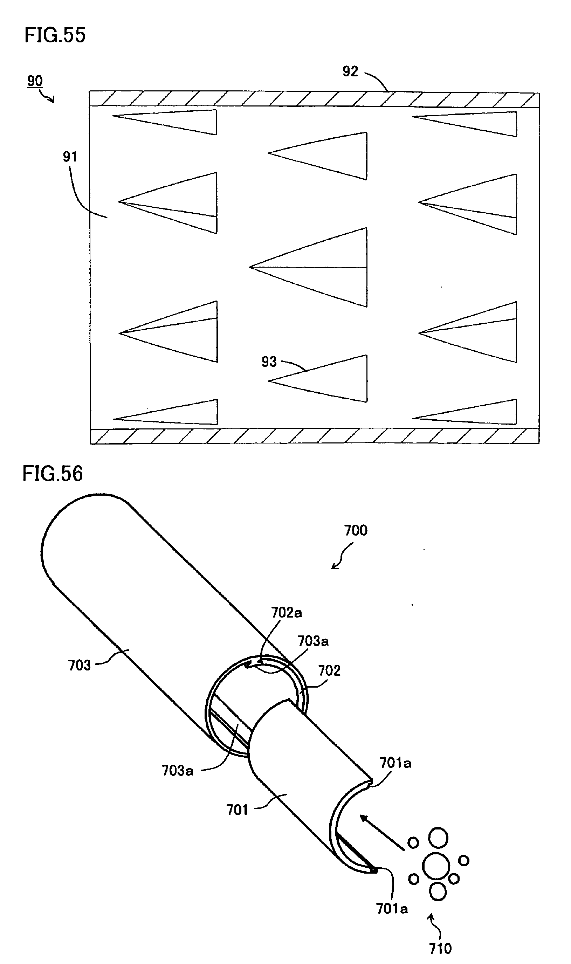

Fig. 53 shows a perspective view in which an important part of a frictional electrification passage part and/or a collision promotion passage part of an embodiment 1-2-8 is viewed in a perspective manner. Fig. 54 shows an elevation view illustrating the important part of the frictional electrification passage part and/or the collision promotion passage part of the embodiment 1-2-8. Fig. 55 shows a cross-sectional side view illustrating the important part of the frictional electrification passage part and/or the collision promotion passage part of the embodiment 1-2-8.

As shown in Fig. 53 through Fig. 55, in the frictional electrification passage part and/or the collision promotion passage part 90 of the embodiment 1-2-8, a plurality of protrusions 93 are disposed on an inner surface of a wall 92 of a passage 91, instead of the protrusions 83 in the embodiment 1-2-7. Each of the protrusions 93 is of the same shape as that of each of the protrusions 83 in the embodiment 1-2-7, namely, a triangular pyramid shape but the protrusions 93 are arranged or disposed in a different manner. In other words, in the embodiment 1-2-8, the protrusions 93 of which number is one third of the number of the protrusions 83 in the embodiment 1-2-7 are disposed in a manner corresponding to the manner in which the protrusions 83 are arranged when viewed from an upstream side in a perspective manner. In other words, when viewed from the upstream side in the perspective manner, the plurality of protrusions 93 are disposed so as not to completely overlap one another but such that neighboring protrusions 93 partially overlap each other. In addition, the protrusions 93 are disposed such that the number of protrusions 93 which are present on a plane perpendicular to a flow direction is as small as possible and the plurality of the protrusions 93 disposed so as to be present on the plane perpendicular to the flow direction are disposed so as to be as distant from one another as possible. The other parts are the same as those of the embodiment 1-2-7.

In the frictional electrification passage part and/or the collision promotion passage part 90 of the embodiment 1-2-8 according to the present invention, the substantially same twin vortices as those generated on the protrusions 83 of the embodiment 1-2-7 are generated on the protrusions 93. When the plurality of protrusions 93 are viewed from an upstream side in a perspective manner, the plurality of protrusions 93 are disposed so as not to completely overlap one another but such that neighboring protrusions 83 only partially overlap each other. Therefore, the flow circulating along the wall 92 of the passage 91 invariably passes the protrusions 93. However, since the number of the protrusions 93 is one third of the number of the protrusions 83 in the embodiment 1-2-7, the number of times when the flow circulating along the wall 92 of the passage 91 meets the turbulence protrusion 93 is one third of the number of times in the embodiment 1-2-7 and the number of the twin vortices generated is also one third of the number of vortices generated in the embodiment 1-2-7, thereby reducing a probability with which the particulates to be flocculated collide with one another.

However, the protrusions 93 in the embodiment 1-2-8 have the below-described advantage. In the frictional electrification passage part and/or the collision promotion passage part 80 of the embodiment 1-2-7, the large number of the protrusions 83 are disposed so as to be present on the plane perpendicular to the flow direction. An area of the passage 81 on the plane perpendicular to the flow direction and at positions of surfaces ΔNKL of the protrusions 83 decreases by (the number of the protrusions 83 disposed so as to be present on the same plane perpendicular to the flow direction) × (areas of the surfaces ΔNKL) from an area of the passage 81 on the other plane perpendicular to the flow direction. Therefore, since the larger the number of the protrusions 83 disposed so as to be present on the same plane perpendicular to the flow direction is, the smaller the area of the passage on the same plane perpendicular to the flow direction is, a pressure loss in the frictional electrification passage part and/or the collision promotion passage part 80 increases. In contrast to this, in the frictional electrification passage part and/or the collision promotion passage part 90 of the embodiment 1-2-8, the protrusions 93 are disposed such that the number of protrusions 93 which are present on the plane perpendicular to the flow direction is as small as possible and the plurality of the protrusions 93 disposed so as to be present on the plane perpendicular to the flow direction are disposed so as to be as distant from one another as possible. Therefore, a decrease in an area of the passage at positions where the protrusions 93 are present is small, a pressure loss in the frictional electrification passage part and/or the collision promotion passage part 90 is also small by just that much.

In other words, for example, when a length of the passage 91 in a flow direction in the embodiment 1-2-8 is tripled and the number of the protrusions 93 disposed in the embodiment 1-2-8 is set to be the same as the number of the protrusions 83 disposed in the embodiment 1-2-7, the probability in the embodiment 1-2-8 with which the particulates to be flocculated collide with one another is substantially equal to that in the frictional electrification passage part and/or the collision promotion passage part 80 of the embodiment 1-2-7. However, because an area of the inner surface of the wall 92, where the protrusions 93 are disposed, decreases to a small extent, the pressure loss in the frictional electrification passage part and/or the collision promotion passage part 90 whose length is tripled is also small.

Accordingly, by using the frictional electrification passage part and/or the collision promotion passage part 90 of the embodiment 1-2-8, a great effect of reducing the pressure loss can be attained. For example, by using the frictional electrification passage part and/or the collision promotion passage part 90 whose length is tripled, the pressure loss can be reduced without deteriorating performance of flocculation caused when the particulates collide with one another, as compared with the pressure loss in the frictional electrification passage part and/or the collision promotion passage part 80 of the embodiment 1-2-7. Therefore, for example, in a case where an output and a static pressure rise of a driving source (for example, a fan, a blower, or the like) for generating a flow circulating in the passage 91 are small or where the driving source is susceptible to the pressure loss, performance of a whole system including the driving source, the frictional electrification passage part and/or the collision promotion passage part 90 is enhanced.

The shape of each of the protrusions in the present invention is not limited to the shape of each of the protrusions described in each of the above-described embodiments. The shape of each of the protrusions may be of a cylindrical column, a cone, a polygonal column, a polygonal pyramid, an elliptic cone, or the like.

Hereinafter, an embodiment 2-1 through an embodiment 2-6 according to the present invention will be described with reference to drawings.

Fig. 2 through Fig. 5 are diagrams illustrating a manner in which dust is electrified and flocculated by electrification parts of an electrification gas passage member of each of the embodiments according to the present invention.

Fig. 2 is a diagram illustrating a configuration of first and second electrification parts of an electrification gas passage member of the one embodiment according to the present invention.

As shown in Fig. 2, the first electrification part (first frictional electrification part) 10 and the second electrification part (second frictional electrification part) 11 have half-pipe shapes obtained by halving a cylindrical pipe in an axial direction. The first frictional electrification part 10 is made of a material which allows the dust to be easily positively electrified. The second frictional electrification part 11 is made of a material which allows the dust to be easily negatively electrified. These half-pipe shapes may be modified in accordance with electrification performance and functions of components.

Fig. 3 is a diagram illustrating assembly of the first and second electrification parts of the electrification gas passage member according to the one embodiment of the present invention.

As shown in Fig. 3, the first electrification part 10 and second electrification part 11 shown in Fig. 2 can be assembled to be the gas duct (frictional electrification passage part, electrification pipe) 12 shown in Fig. 3, allowing an inside thereof to be kept in a sealed manner and gas to flow. It is supposed that a plane which is perpendicular to a plane including one joint surface 13 and another joint surface 14 of the electrification part 10 and the second electrification part 11 of the gas duct 12 is a cross section A-A'.

Fig. 4 shows a cross sectional view of the gas duct, taken from line A-A' in Fig. 3.

Fig. 4 is a diagram illustrating a manner in which the fine dust is electrified according to the present invention. Hereinafter, with reference to Fig. 4, a state where the dust is electrified will be described.

When a gas flow is generated in a passage through connection with a gas blower, fine dust 15A, fine dust 16A, and fine dust 17A, as the dust, each having a size of several microns are transported from an inlet 18 toward an outlet 19 of the gas duct 12. When the fine dust 15A is transported in the vicinity of the first electrification part 10 and then, contacts the first electrification part 10, the fine dust 15A is positively electrified by action of frictional electrification. When the fine dust 17A is transported in the vicinity of the second electrification part 11 and then, contacts the second electrification part 11, the fine dust 17A is negatively electrified by the action of frictional electrification. The fine dust 15A positively electrified and fine dust 17A negatively electrified as mentioned above are mixed in the gas duct 12, and the dust 15A and the dust 17A mutually suck each other due to an electrostatic force and thereby, adsorbs each other, thereby forming a dust mass 19A. The gas duct 12 and the electrification part are made so as to be appropriately long, whereby the dust mass 19A contacts again the first electrification part 10 and the second electrification part 11 and thereby, the dust mass 19A is further electrified. In such a manner, the electrification and the adsorption of the fine dust 15A, the fine dust 17A, and the dust mass 19A are repeated, thereby further increasing a size of the dust mass 19A. In Fig. 4, it is illustrated that when the fine dust collides with the first electrification part 10 or the second electrification part 11 one time, the adsorption is carried out one time. However, by appropriately setting a length and a diameter of the gas duct 12, the contact of the fine dust with the first electrification part 10 or the second electrification part 11 can be carried out a plurality of times. In addition, by appropriately selecting a material, an amount of the electrification resulting when the fine dust 15A and the fine dust 17A contact the first electrification part 10 and the second electrification part 11 can be selected to be set.

Fig. 5 is a diagram illustrating a manner in another case, in which the dust mass is formed according to the present invention.

As shown in Fig. 5, as similarly to in Fig. 4, the fine dust 15B and the fine dust 17B contact the first electrification part 10 and the second electrification part 11, mutually adsorb each other due to suction action of static electricity or the gas flow, further suck the fine dust 16B which is floating in the vicinity therearound and is not electrified or slightly electrified by the air, thereby forming a large dust masses (clusters) 19B.

The electrification gas passage member according to the present invention includes the above-described first and second electrification parts. Hereinafter, the electrification gas passage member according to the present invention will be described.

### Embodiment 2-1)

( Fig. 56 is a diagram illustrating a whole of an electrification gas passage member of an embodiment 2-1 according to the present invention.

As shown in Fig. 56, the electrification gas passage member 700 includes a first electrification part 701, a second electrification part 702, and an exterior frame 703. Shown in Fig. 56 is a state in which the second electrification part 702 has been fitted into the exterior frame 703 and the first electrification part 701 has not yet been fitted into the exterior frame 703. As dust, particulates 710 flows into the electrification gas passage member 700 in a direction indicated by an arrow shown in Fig. 56.

The first electrification part 701 and the second electrification part 702 have half-pipe shapes obtained by halving a cylindrical pipe in an axial direction. The exterior frame 703 is a cylindrical pipe having an internal diameter larger than an external diameter of a cylindrical pipe formed by joining two half-pipes of the first electrification part 701 and the second electrification part 702. The first electrification part 701 is made of polytetrafluoroethylene or polypropylene and allows the particulates 710 to be sufficiently positively contact-electrified. The second electrification part 702 is made of polyamide and allows the particulates 710 to be sufficiently negatively contact-electrified. The exterior frame 703 is made of an ABS resin with excellent processability.

In order to ensure a sufficient contact electrification amount, it is required to form an electrification part by using a material which is capable of sufficiently contact-electrifying the particulates. However, in general, such a material is not necessarily a material which is excellent in industrial processability, a strength, and a gloss. Therefore, when the sufficient contact electrification amount is tried to be ensured, the material may become inferior in the processability, the strength, and the like. As far as an electrification gas passage member is produced by using a single material, there arises a problem that the electrification gas passage member may have advantages and disadvantages. However, as in the present embodiment, materials to be used are determined by selecting the materials which are suited to perform functions required of respective members and the electrification gas passage member 700 is formed by combining a plurality of members, thereby allowing the production of the electrification gas passage member 700 which is excellent in appearance such as the gloss and in the strength and is capable of sufficiently electrifying the dust.

As fitting parts disposed along a direction of a gas flow, depressions 701a are formed on an edge face along an axial direction of the half-pipe in the first electrification part 701; depressions 702a are formed on an edge face along the axial direction of the half-pipe in the second electrification part 702; and protrusions (projections) 703a are formed on upper and lower portions of an inner wall surface of the exterior frame 703 along an axial direction of the cylindrical pipe.

The first electrification part 701 is inserted into the exterior frame 703 by fitting the depressions 701a to the protrusions 703a of the exterior frame 703 and is attached inside the exterior frame 703. The second electrification part 702 is inserted into the exterior frame 703 by fitting the depressions 702a to the protrusions 703a of the exterior frame 703 and is attached inside the exterior frame 703. In such a manner, the electrification gas passage member 700 is assembled. In the electrification gas passage member 700, the first electrification part 701 and the second electrification part 702 are disposed so as to face each other in a horizontal direction.

When the particulates 710 whose mean electrification amount is neutral flows into the electrification gas passage member 700, one part of the particulates 710 collides with the inner wall of the first electrification part 701 and is positively electrified. At this time, the inner wall of the first electrification part 701 is negatively electrified. Another part of the particulates 710 collides with the inner wall of the second electrification part 702 and is negatively electrified. At this time, the inner wall of the second electrification part 702 is positively electrified. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of particulates.

In the electrification gas passage member 700, the first electrification part 701 and the second electrification part 702 are disposed so as to face each other in the horizontal direction. Therefore, even if a variation in a distribution of the particulates of the dust in a vertical direction occurs due to a gravitational force, the electrification of the particulates of the dust becomes well-balanced.

As described above, in the electrification gas passage member 700 as a gas passage member, an inlet and an outlet communicate with each other to form a gas passage and the gas flow passes through the gas passage through the connection with the gas blower. The gas passage member includes the first electrification part 701 for positively contact-electrifying the dust and the second electrification part 702 for negatively contact-electrifying the dust. When the dust is transported through the gas passage by the gas flow, the dust contacts the first electrification part 701 or the second electrification part 702 and is positively or negatively electrified, whereby the positively or negatively electrified dust is caused to form the dust masses (clusters). The electrification gas passage member 700 includes the exterior frame 703 disposed outside of the first electrification part 701 and the second electrification part 702. The first electrification part 701 and the second electrification part 702 are disposed so as to be fitted into the exterior frame 703.

When the dust is transported by the gas flow through the gas passage, the dust contacts the first electrification part 701 for positively electrifying the dust or the second electrification part 702 for negatively electrifying the dust and is positively or negatively electrified, whereby the positively or negatively electrified dust can be caused to form the dust masses (clusters). This causes the positively or negatively electrified dust to mutually adsorb each other by utilizing static electricity action, thereby allowing the masses (clusters) of the dust to be formed. These dust masses are caused to grow so as to have appropriate sizes, thereby allowing a mass (weight) of each of the dust masses (clusters) to be increased and a size of each of the clusters to be increased.

Furthermore, the electrification gas passage member 700 includes the exterior frame 703 disposed outside of the first electrification part 701 and the second electrification part 702. The first electrification part 701 and the second electrification part 702 are disposed so as to be fitted into the exterior frame 703, whereby the disposition of the first electrification part 701 and the second electrification part 702 with respect to the gas passage can be determined and the first electrification part 701 and the second electrification part 702 can be easily fitted at accurate positions. The exterior frame 703, the first electrification part 701, and the second electrification part 702 can be formed so as to be made of the different materials, whereby the exterior frame 703, the first electrification part 701, and the second electrification part 702 can be respectively formed by using the appropriate materials which are suited to perform the functions required of the exterior frame 703, the first electrification part 701, and the second electrification part 702.

By employing the above-described configuration, the electrification gas passage member 700 which has a simple configuration and is capable of electrifying and flocculating the dust without reducing a suction flow amount can be provided.

In the electrification gas passage member 700, the exterior frame 703 has the protrusions 703a for fitting the first electrification part 701 and the second electrification part 702 into the exterior frame 703; the first electrification part 701 has the depressions 701a for fitting the first electrification part 701 into the exterior frame 703; and the second electrification part 702 has the depressions 702a for fitting the second electrification part 702 into the exterior frame 703. The protrusions 703a, the depressions 701a, and the depressions 702a are disposed along the direction of the gas flow.

By employing the above-described configuration, the disposition of the first electrification part 701 and the second electrification part 702 with respect to a circumferential direction of the gas passage can be determined. In addition, the first electrification part 701 and the second electrification part 702 are disposed so as to face each other in the horizontal direction, whereby the electrification becomes well-balanced.

In the present embodiment, by fitting the protrusions 703a, the depressions 701a, and the depressions 702a as the fitting parts, the disposition of the electrification parts with respect to the circumferential direction of the gas passage is determined. However, the disposition of the electrification parts may be determined by making a cross section of the gas passage elliptical.

### (Embodiment 2-2)

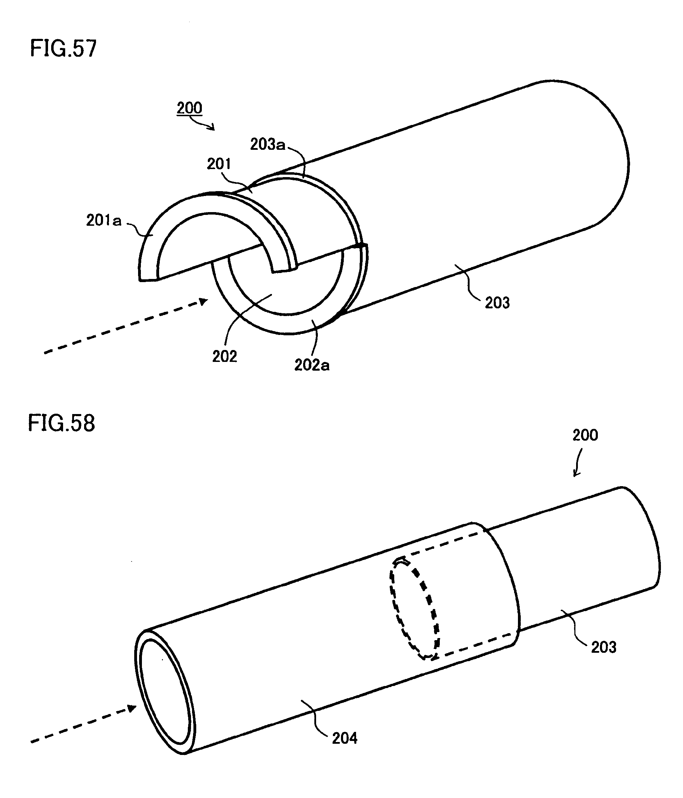

Fig. 57 is a diagram illustrating a whole of an electrification gas passage member of an embodiment 2-2 according to the present invention.

As shown in Fig. 57, the electrification gas passage member 200 (frictional electrification passage part, electrification duct) includes a first electrification part 201, a second electrification part 202, and an exterior frame 203. Shown in Fig. 57 is a state in which the second electrification part 202 has been fitted into the exterior frame 203 and the first electrification part 201 has not yet been fitted into the exterior frame 203. An arrow shown in Fig. 57 indicates a direction of a gas flow and a direction in which the electrification members are inserted into the exterior frame 203.

The first electrification part 201 and the second electrification part 202 have half-pipe shapes obtained by halving a cylindrical pipe in an axial direction. The exterior frame 203 is a cylindrical pipe having an internal diameter larger than an external diameter of a cylindrical pipe formed by joining two half-pipes of the first electrification part 201 and the second electrification part 202. The first electrification part 201 is made of polytetrafluoroethylene or polypropylene and allows particulates to be sufficiently positively contact-electrified. The second electrification part 202 is made of polyamide and allows the particulates to be sufficiently negatively contact-electrified. The exterior frame 203 is made of an ABS resin with excellent processability.

As fitting parts disposed along a circumferential direction of the exterior frame 203, a protrusion (a projection or a flange part) 201a is formed on an edge face perpendicular to an axial direction of the half-pipe of the first electrification part 201 and a protrusion (a projection or a flange part) 202a is formed on an edge face perpendicular to an axial direction of the half-pipe of the second electrification part 202.

The first electrification part 201 is inserted into the exterior frame 203 and the protrusion 201a is fitted to an edge face 203a of the exterior frame 203, which is perpendicular to the axial direction of the exterior frame 203, whereby the first electrification part 201 is attached inside the exterior frame 203. The second electrification part 202 is inserted into the exterior frame 203 and the protrusion 202a is fitted to the edge face 203a of the exterior frame 203, which is perpendicular to the axial direction of the exterior frame 203, whereby the second electrification part 202 is attached inside the exterior frame 203. In such a manner, the electrification gas passage member 200 is assembled. On a boundary between the protrusion 201a of the first electrification part 201 and the protrusion 202a of the second electrification part 202, a sealing agent whose chief ingredient is silicon is applied for the purposes of sealing and retaining of the shape.

When the dust whose mean electrification amount is neutral flows into the electrification gas passage member 200, one part of the dust collides with the inner wall of the first electrification part 201 and is positively electrified. At this time, the inner wall of the first electrification part 201 is negatively electrified. Another part of the dust collides with the inner wall of the second electrification part 202 and is negatively electrified. At this time, the inner wall of the second electrification part 202 is positively electrified. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of particulates.

As described above, in the electrification gas passage member 200, the first electrification part 201 has the protrusion 201a for fitting the first electrification part 201 into the exterior frame 203 and the second electrification part 202 has the protrusion 202a for fitting the second electrification part 202 into the exterior frame 203. The protrusion 201a, and the protrusion 202a are disposed along a circumferential direction of the exterior frame 203.

By employing the above-described configuration, the disposition of the first electrification part 201 and the second electrification part 202 with respect to a direction of a gas flow of a gas passage can be determined and even if a wind pressure in the gas passage is increased or even if any influence of a kind of a fluid is exerted, shifting of the disposition of the first electrification part 201 and the second electrification part 202 in a direction of the gas flow can be avoided.

### (Embodiment 2-3)

Fig. 58 is a diagram illustrating a duct of an embodiment 2-3 according to the present invention, into which an electrification gas passage member is incorporated.

As shown in Fig. 58, the electrification gas passage member 200 of the embodiment 2-2 is inserted into and fixed to the duct 204. An arrow shown in Fig. 58 indicates a direction of a gas flow. The electrification gas passage member 200 is incorporated into the duct 204 such that the protrusion 201a and the protrusion 202a are disposed on an upstream side. The duct 204 is, for example, an extension pipe or the like of a vacuum cleaner. The arrow shown in Fig. 58 indicates the direction of the gas flow.

The protrusion 201a and the protrusion 202a cover clearances among the first electrification part 201, the second electrification part 202, and the exterior frame 203 on the upstream side of the gas flow. When such an electrification gas passage member 200 is inserted into and incorporated to the duct 204 having an internal diameter larger than an external diameter of the exterior frame 203 and the gas containing dust is circulated, it is made difficult for the gas containing the dust to flow between the exterior frame 203 of the electrification gas passage member 200 and the electrification parts.

Therefore, the first electrification part 201 and the second electrification part 202 are formed such that an external diameter of an end portion of the electrification gas passage member 200 on the upstream side with respect to the gas flow is larger than an internal diameter of the exterior frame.

By employing the above-described configuration, the clearances among the exterior frame 203, the first electrification part 201, and the second electrification part 202 can be covered on the upstream side with respect to the direction of the gas flow , thereby avoiding accumulation of the dust in the clearances among the exterior frame 203, the first electrification part 201, and the second electrification part 202 and preventing an increase in a pressure loss.

### (Embodiment 2-4)

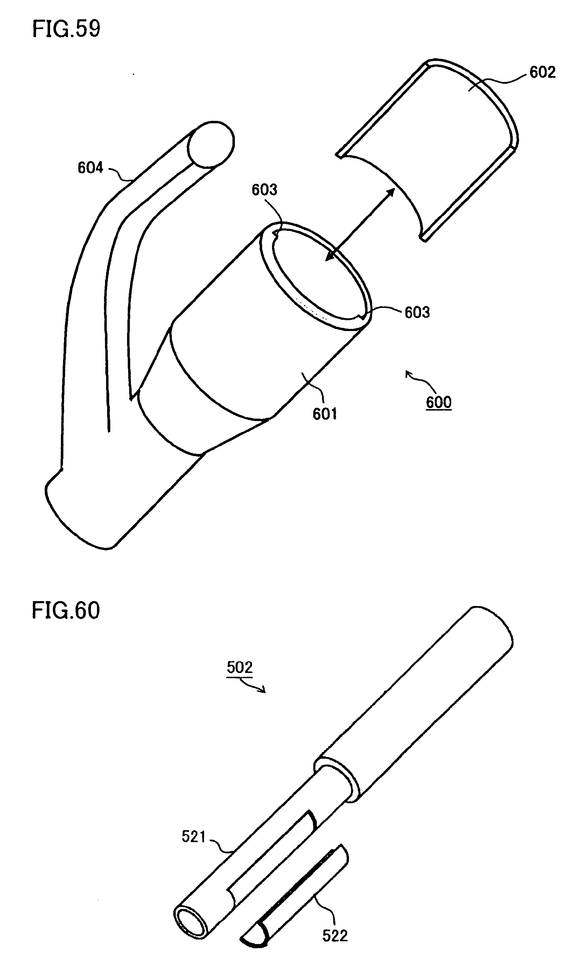

Fig. 59 is a diagram illustrating a connecting pipe of a vacuum cleaner, as an embodiment 2-4 according to the present invention.

As shown in Fig. 59, the connecting pipe 600 as an electrification gas passage member of the vacuum cleaner comprises a connecting pipe main body 601 as an exterior frame and an attachment 602 as a second electrification part, and a first electrification part is formed so as to be integrated with the connecting pipe main body 601. On the connecting pipe main body 601, a depression 603 is formed as a fitting part. The attachment 602 is inserted into and fixed to the connecting pipe main body 601 by being fitted into the depression 603. The connecting pipe main body 601 includes a handle 604. Shown in Fig. 59 is a state in which the attachment 602 has not yet been fitted into the connecting pipe main body 601. An arrow shown in Fig. 59 indicates a direction in which the attachment 602 is inserted into the connecting pipe main body 601.

In the present embodiment, a part of an air circulating duct of the connecting pipe 600 in the vacuum cleaner is formed as the attachment 602 which can be inserted into a gas passage and is exchangeable. The attachment 602 is inserted into the connecting pipe main body 601, thereby forming a sealed gas passage part. In such a manner, the connecting pipe 600 can be assembled by using a plurality of components. As materials of the attachment 602 and the connecting pipe main body 601, respective materials which are capable of electrifying dust so as to have different polarities are selected and a gas flow containing dust is caused to pass through the connecting pipe 600, thereby allowing fine dust to grow so as to be dust masses. The connecting pipe main body 601 and the attachment 602 may be made of one kind of a material, and by kneading a functional material for electrification in such one kind of the material, positive and negative electrification is also enabled.

When the dust whose mean electrification amount is neutral flows into the connecting pipe 600, one part of the dust collides with the inner wall of the connecting pipe main body 601 and is positively electrified. At this time, the inner wall of the connecting pipe main body 601 is negatively electrified. Another part of the dust collides with the inner wall of the attachment 602 and is negatively electrified. At this time, the inner wall of the attachment 602 is positively electrified. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of particulates.

In a case where the electrification gas passage member is produced by fitting the first electrification part and the second electrification part into an exterior frame, the number of components and the number of assembly processes are increased and working time required for the assembly is increased, thereby leading to an increase in a manufacturing cost. Therefore, as in the present embodiment, one of the electrification parts and the exterior frame are formed in an integrated manner, thereby allowing such a problem to be solved.

The gas passage part may be configured to include and connect a plurality of joining parts such as a suction inlet, an extension pipe, a connecting pipe, and a suction hose of the vacuum cleaner, thereby allowing partial replacement of these components.

As described above, the electrification parts for causing the dust to be positively and negatively electrified are provided in the extension pipe or the connecting pipe part of the vacuum cleaner. By employing the above-described configuration, in a case where the dust electrification parts are worn out or lose electrification functions due to contamination by the dust, easy replacement of a part of the extension pipe part and connecting pipe having the electrification functions is enabled.

As described above, in the connecting pipe 600, the connecting pipe main body 601 is formed so as to be integrated with the first electrification part.

By employing the above-described configuration, the number of the components of which the connecting pipe 600 is composed can be decreased and the number of processes in which the connecting pipe 600 is assembled can be decreased, thereby allowing a reduction in the assembly working time. Moreover, the cost of manufacturing the connecting pipe 600 can be reduced.

### (Embodiment 2-5)

Fig. 60 is a diagram illustrating an extension pipe of a vacuum cleaner, as an embodiment 2-5 according to the present invention.

As shown in Fig. 60, the extension pipe 502 comprises a first electrification part 521 and a second electrification part 522 and an exterior frame is formed so as to be integrated with the first electrification part 521. Parts of the extension pipe 502 are separated to be the first electrification part 521 and the second electrification part 522, and the first electrification part 521 and the second electrification part 522 as another component are combined, thereby forming the extension pipe 502 which allows gas to circulate in a sealed state.

The first electrification part 521 and the second electrification part 522 as the another component are made of materials which are capable of positively and negatively electrifying the dust.

As described above, by separately forming and combining the parts of the extension pipe 502, the gas passage part for positively and negatively electrifying the dust is formed, thereby allowing the fine dust to become the dust masses. The materials of the first electrification part 521 and the second electrification part 522 may be changed and members for positively and negatively electrifying the dust may be formed on the inner wall. In addition, an electrification film may be formed on the inner wall of the gas passage part. As a method for providing the electrification film, coating, kneading of a functional material for the electrification, combining of materials, or the like may be appropriately selected.

As described above, in the extension pipe 502, the exterior frame and the first electrification part 521 are formed in the integrated manner.

By employing the above-described configuration, the number of the components of which the extension pipe 502 is composed can be decreased and the number of processes in which the extension pipe 502 is assembled can be decreased, thereby allowing a reduction in the assembly working time. Moreover, the cost of manufacturing the extension pipe 502 can be reduced.

### (Embodiment 2-6)

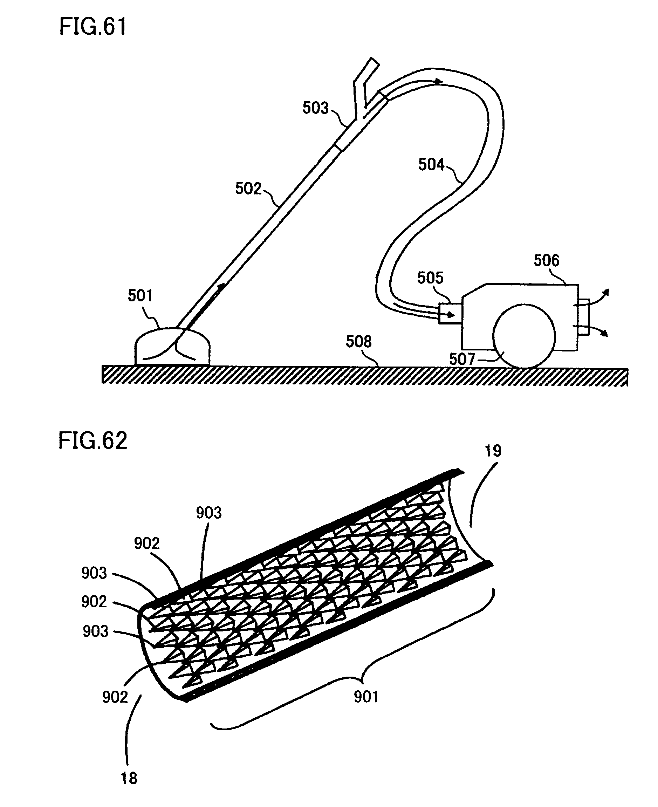

Fig. 61 is a diagram illustrating a whole of a vacuum cleaner, as an embodiment 2-6 according to the present invention. Fig. 12 is an explanatory diagram illustrating a configuration of a main body of the vacuum cleaner according to the present invention.

As shown in Fig. 61 and Fig. 12, a suction inlet 501 connects to an extension pipe 502, a connecting pipe 503 having a handle, and a bendable suction hose 504 in order, which constitute a gas passage part, and communicates via a joining section 505 with the vacuum cleaner main body 506. In the vacuum cleaner main body 506, an electric gas blower 567, a dust collecting unit 561, a dust collecting case 563, a HEPA filter 570, a cord reel (not shown), a control circuit (not shown) for controlling a supply of an electric power to the electric gas blower 567, and the like are contained. Upon driving the electric gas blower 567, air is sucked from the suction inlet 501 and the air containing the dust passes through the extension pipe 502, the connecting pipe 503, and the suction hose 504 and is transported to the vacuum cleaner main body 506. The dust sucked into the vacuum cleaner main body 506 passes through the dust collecting unit 561, the electric gas blower 567, and the HEPA filter 570 and is discharged from the exhaust outlet 571. Among the particulates of the dust which has been sucked from the suction inlet 501 as mentioned above, the particulates having large sizes are accumulated in the dust collecting unit 561. The air from which the dust has been removed and which has been clean passes through an inside of an electric motor 569 to cool the electric gas blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

In a part of the extension pipe 502, for example, the electrification gas passage member 700 of the embodiment 2-1 according to the present invention is provided. In other words, the extension pipe 502 includes the first electrification part 701 for positively contact-electrifying the dust, the second electrification part 702 for negatively contact-electrifying the dust, and the exterior frame 703 disposed outside of the first electrification part 701 and the second electrification part 702. The first electrification part 701 and the second electrification part 702 are disposed so as to be fitted into the exterior frame 703.

Upon driving the electric gas blower 567, a fan 568 generates a suction gas flow, the air containing the dust is fed via the suction hose 504 and the joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

As described above, the vacuum cleaner has the electric gas blower 567, the extension pipe 502 communicating via the suction inlet 501 with electric gas blower 567, and the dust collecting unit 561. The vacuum cleaner in which the dust is sucked from the suction inlet 501 by the gas flow generated by the electric gas blower 567 and the dust passing through the extension pipe 502 is collected in the dust collecting unit 561 comprises the extension pipe 502 including the first electrification part 701 for positively contact-electrifying the dust, the second electrification part 702 for negatively contact-electrifying the dust, and the exterior frame 703 disposed outside of the first electrification part 701 and the second electrification part 702. The first electrification part 701 and the second electrification part 702 are disposed so as to be fitted into the exterior frame 703. In a process in which the dust passes through the extension pipe 502 of the vacuum cleaner and is electrified so as to have different polarities by the first electrification part 701 and the second electrification part 702, the dust can grow to be dust masses (clusters).

These dust masses are caused to appropriately grow, thereby increasing a mass (weight) of each of the dust masses (clusters) and causing the clusters to grow. The mass (weight) of each of the dust masses (clusters) is increased, whereby for example, in a cyclone vacuum cleaner, the dust masses can be collected through centrifugal separation. In addition, in a filter-type vacuum cleaner, since each of sizes of the dust masses can be made larger than a mesh size of a filter, the dust can be collected by a filter having a large mesh size. In each case, since a pressure loss in suction gas hardly occurs, a suction power (power) of the vacuum cleaner main body is hardly reduced.

Furthermore, the vacuum cleaner includes the exterior frame 703 disposed outside of the first electrification part 701 and the second electrification part 702. The first electrification part 701 and the second electrification part 702 are disposed so as to be fitted into the exterior frame 703, whereby the disposition of the first electrification part 701 and the second electrification part 702 with respect to the extension pipe 502 can be determined and the first electrification part 701 and the second electrification part 702 can be easily fitted at accurate positions. The exterior frame 703, the first electrification part 701, the second electrification part 702 can be formed so as to be made of the different materials, whereby the exterior frame 703, the first electrification part 701, the second electrification part 702 can be respectively formed by using the appropriate materials which are suited to perform the functions required of the exterior frame 703, the first electrification part 701, the second electrification part 702.

As described above, the vacuum cleaner, including a cyclone dust collecting device, which has the simple configuration and allows enhancement of performance of collecting the fine dust without reducing the power can be provided.

In addition, the vacuum cleaner, including a filter-type dust collecting device, which has the simple configuration and allows enhancement of performance of collecting the fine dust without reducing the power can be provided.

As described above, according to the present invention, the vacuum cleaner which has the simple configuration and is capable of electrifying and flocculating the dust without reducing a suction flow amount can be provided.

It is only required to dispose the first electrification part and the second electrification part upstream of the dust collecting unit 561. The first electrification part and the second electrification part may be disposed at any positions in the gas passage part, connecting the suction inlet 501 and the vacuum cleaner main body 506, such as positions of the suction inlet 501, the extension pipe 502, and the connecting pipe 503. In such a case, the configuration of the electrification gas passage member is not limited to the above-described configuration of the embodiment 2-1 and any configuration of the embodiment 2-2 through the embodiment 2-5 may be employed.

Hereinafter, an embodiment 3-1 through an embodiment 3-2 according to the present invention will be described with reference to drawings.

Fig. 2 through Fig. 5 are explanatory diagrams illustrating a manner in which dust is electrified and flocculated by electrification parts of an electrification duct of each of the embodiments according to the present invention.

Fig. 2 is an explanatory diagram illustrating the first and second electrification part of the electrification duct of one of the embodiment according to the present invention.

As shown in Fig. 2, the first electrification part (first frictional electrification part) 10 and the second electrification part (second frictional electrification part) 11 have half-pipe shapes obtained by halving a cylindrical pipe in an axial direction. The first frictional electrification part 10 is made of a material which allows the dust to be easily positively electrified. The second frictional electrification part 11 is made of a material which allows the dust to be easily negatively electrified. These half-pipe shapes may be modified in accordance with electrification performance and functions of components.

Fig. 3 is a diagram illustrating assembly of the first and second electrification parts of the electrification duct according to the one embodiment of the present invention.

As shown in Fig. 3, the first electrification part 10 and second electrification part 11 shown in Fig. 2 can be assembled to be the electrification duct (frictional electrification passage part, gas duct) 12 shown in Fig. 3, allowing an inside thereof to be kept in a sealed manner and gas to flow. It is supposed that a plane which is perpendicular to a plane including one joint surface 13 and another joint surface 14 of the electrification part 10 and the second electrification part 11 of the electrification duct 12 is a cross section A-A'.

Fig. 4 shows a cross sectional view of the electrification duct, taken from line A-A' in Fig. 3.

Fig. 4 is a diagram illustrating a manner in which the fine dust is electrified according to the present invention. Hereinafter, with reference to Fig. 4, a state where the dust is electrified will be described.

When a gas flow is generated through connection with an electric gas blower and flows into a gas suction pipe, fine dust 15A, fine dust 16A, and fine dust 17A, as the dust, each having a size of several microns are transported from an inlet 18 toward an outlet 19 of the electrification duct 12. When the fine dust 15A is transported in the vicinity of the first electrification part 10 and contacts the first electrification part 10, the fine dust 15A is positively electrified by action of frictional electrification. When the fine dust 17A is transported in the vicinity of the second electrification part 11 and contacts the second electrification part 11, the fine dust 17A is negatively electrified by the action of frictional electrification. The fine dust 15A positively electrified and fine dust 17A negatively electrified as mentioned above are mixed in the electrification duct 12, and the dust 15A and the dust 17A mutually suck each other due to an electrostatic force and thereby, adsorb each other, thereby forming a dust mass 19A. The electrification duct 12 and the electrification part are made so as to be appropriately long, whereby the dust mass 19A contacts again the first electrification part 10 and the second electrification part 11 and thereby, the dust mass 19A is further electrified. In such a manner, the electrification and the adsorption of the fine dust 15A, the fine dust 17A, and the dust mass 19A are repeated, thereby further increasing a size of the dust mass 19A. In Fig. 4, it is illustrated that when the fine dust collides with the first electrification part 10 or the second electrification part 11 one time, the adsorption is carried out one time. However, by appropriately setting a length and a diameter of the electrification duct 12, the contact of the fine dust with the first electrification part 10 or the second electrification part 11 can be carried out a plurality of times. In addition, by appropriately selecting a material, an amount of the electrification resulting when the fine dust 15A and the fine dust 17A contact the first electrification part 10 and the second electrification part 11 can be selected to be set.

Fig. 5 is a diagram illustrating a manner in another case, in which the dust mass is formed according to the present invention.

As shown in Fig. 5, as similarly to in Fig. 4, fine dust 15B and fine dust 17B contact the first electrification part 10 and the second electrification part 11, mutually adsorb each other due to suction action of static electricity or the gas flow, further suck fine dust 16B which is floating in the vicinity therearound and is not electrified or slightly electrified by the air, thereby forming a dust mass (cluster) 19B.

In the electrification duct, protuberances may be provided on the inner surface.

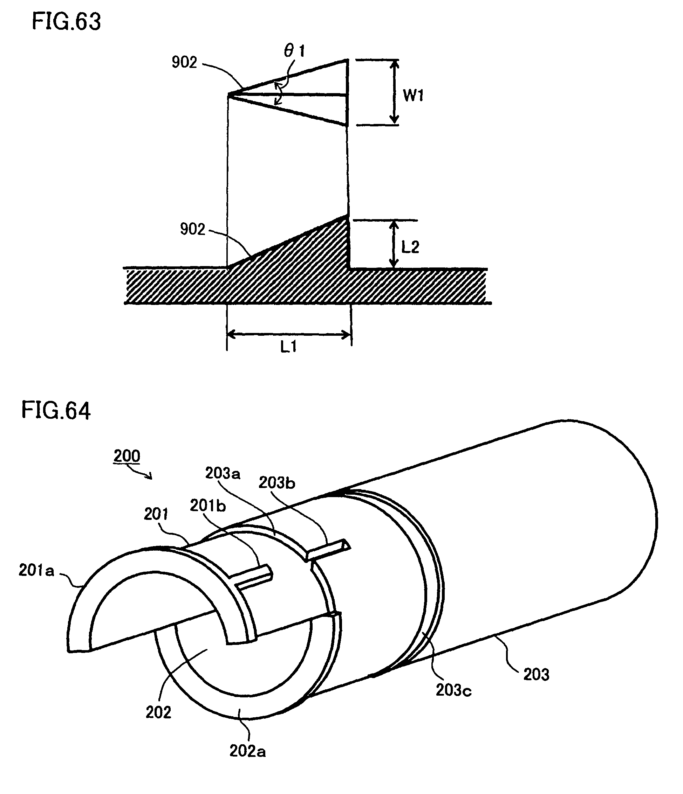

Fig. 62 is an explanatory diagram illustrating a configuration of an electrification duct as one embodiment according to the present invention in a case where the protuberances are provided on the inner surface. Fig. 63 is a diagram illustrating a detailed shape of each of the protuberances shown in Fig. 62.

With reference to Fig. 62 and Fig. 63, a structure on a side of the inner surface of the electrification duct will be described.

As shown in Fig. 62, from an inlet 18 toward an outlet 19 of the electrification duct 901, a large number of protuberances 902 and protuberances 903 as deflecting parts are formed. A length of the electrification duct 901 is 200 mm and an internal diameter thereof is 40 mm. When a gas flow is fed from an upstream toward a downstream of the electrification duct 901, the gas flow and dust in the vicinity of the electrification duct 901 flows downstream while the gas flow and dust are being deflected by the large number of protuberances 902 and protuberances 903 so as to flow around the protuberances in accordance with directions of slopes of the protuberances. A shape of each of the protuberances is of a flat triangular pyramid. As shown in Fig. 63, on an inlet side of each of the protuberances, two gentle slopes are provided so as to face each other; and on an outlet side of each of the protuberances, a side having an angle steeper than an angle which each of the two gentle slopes has is provided.

The protuberances 902 are made of a material which is capable of positively electrifying the dust. The protuberances 903 are made of a material which is capable of negatively electrifying the dust. In a circumferential direction of the inner surface of the electrification duct 901, each of the protuberances 902 and each of the protuberances 903 neighbor each other. In a direction of the gas flow from the upstream side to the downstream side of the electrification duct 901, the protuberances 902 and the protuberances 903 are each alternately arranged such that the protuberance 902 is first arranged and the protuberance 903 is next arranged. As described above, the protuberances 902 and the protuberances 903 are arranged such that even when the gas flow containing the dust is deflected so as to flow around the protuberances and sucked to the downstream direction, the gas flow containing the dust approaches alternately each of the protuberances 902 and each of the protuberances 903.

Fig. 63 is an explanatory diagram illustrating a schematic shape and cross section of the protuberance 902 or the protuberance 903. Each of the protuberances 902 is of the triangular pyramid shape and a face of an isosceles triangle having a base length W1 and a height L1 contacts the inner surface of the electrification duct 901. The shape of each of the protuberances 902 is the same as that of each of the protuberances 903. An angle θ1 of an apex of the above-mentioned isosceles triangle, which is formed from the upstream side toward downstream side, is set to be 35 degrees. The base length W1 is 5 mm, the height L1 is 9.5 mm, and a height L2 from the inner surface of the electrification duct 901 is 2.4 mm. Among sides which the triangular pyramid has, three sides which do not form the above-mentioned isosceles triangle are of round shapes each with a radius of approximately 1 mm.

In a case where the electrification duct formed as described above is used in a vacuum cleaner, when an electric gas blower is driven, the gas flow containing the dust flows from the inlet 18 toward the outlet 19 of the electrification duct 901. Since the dust sucked from the inlet 18 passes, together with large pieces of the dust, through the electrification duct 901 inside which the protuberances 902 and the protuberances 903 are alternately disposed, a positive or negative electric charge is consecutively imparted to the fine dust. A principle in which the electric charge is imparted by contacting is the same as the principle of electrification in the embodiment 3-1. The gas flow which is deflected by the gentle slopes on the inlet side is abruptly deflected toward a side of the inner wall from apex portions of the protuberances 902 and the protuberances 903, whereby small vortices of the gas flow are easily formed. The formation of these small vortices and the deflection of the gas flow, caused by the slopes, are alternately repeated, whereby the fine dust can be positively and negatively electrified in an efficient manner. The positively and negatively electrified particulates of the fine dust adsorb one another. Even when the positively and negatively electrified particulates of the fine dust become clusters and are electrically substantially neutralized, these clusters further contact the protuberances 902 and the protuberances 903 and thereby, are electrified again, whereby the clusters grow to be large.

As described above, the clusters of the fine dust can be caused to grow to be larger than four micrometers which is a limit size of dust collected by a well-designed cyclone dust collecting machine, and the fine dust can be collected through performing centrifugal separation by using the cyclone-type dust collecting machine. In addition, a dust collecting filter having a large mesh size can be employed in a filter-type vacuum cleaner. In a case where the filter having the small mesh size is used, time until occurrence of clogging of the filter is prolonged, thereby attaining long life. Even in a case where a HEPA filter is used, prolonging life of the HEPA filter can be attained.

The vacuum cleaner according to the present invention includes the electrification duct having the above-described first and second electrification parts. Hereinafter, embodiments of the vacuum cleaner according to the present invention will be described.

### (Embodiment 3-1)

Fig. 11 is a diagram illustrating a whole of a vacuum cleaner as embodiment 3-1 according to the present invention. Fig. 12 is an explanatory diagram illustrating a configuration of a main body of the vacuum cleaner according to the present invention.

As shown in Fig. 11 and Fig. 12, in the vacuum cleaner 500, a suction inlet 501as a suction inlet body connects to an extension pipe small part 511 as a first suction pipe; an extension pipe large part 512 as a second suction pipe; a connecting pipe 503, as a first connecting pipe, having a handle 503a; and a bendable suction hose 504 as a third suction pipe in order and communicates via a joining section 505 with a vacuum cleaner main body 506 as a main body. In the vacuum cleaner main body 506, an electric gas blower 567, a dust collecting unit 561, a dust collecting case 563, a HEPA filter 570, a cord reel (not shown), a control circuit (not shown) for controlling a supply of an electric power to the electric gas blower 567, and the like are contained.

In Fig. 11 and Fig. 12, a flow of the air containing the dust is indicated by an arrow. Upon driving the electric gas blower 567, air is sucked from the suction inlet 501 and the air containing dust passes through the extension pipe small part 511, the extension pipe large part 512, the connecting pipe 503, the suction hose 504, and the joining section 505 and is transported to the vacuum cleaner main body 506. The dust sucked into the vacuum cleaner main body 506 passes through the dust collecting unit 561, the electric gas blower 567, and the HEPA filter 570 and is discharged from the exhaust outlet 571. Among the particulates of the dust which has been sucked from the suction inlet 501 as mentioned above, the particulates having large sizes are accumulated in the dust collecting unit 561. The air from which the dust has been removed and which has been clean passes through an inside an electric motor 569 to cool the electric gas blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

An external diameter of the extension pipe small part 511 is substantially equal to an internal diameter of the extension pipe large part 512. The whole extension pipe can extend and contract so as to increase and decrease a length thereof by sliding the extension pipe small part 511 to an inside the extension pipe large part 512, thereby allowing a user to perform cleaning in his or her suited condition.

As described above, when protrusions for generating a turbulent flow and agitating the gas flow are provided on an inner surface of an electrification duct, performance of flocculating the dust, which is attained by the electrification duct according to the present invention, is enhanced. However, regardless of presence or absence of the protrusions, the longer a gas suction direction of the electrification duct is, the better the performance of flocculating the dust is. Accordingly, from a viewpoint of an effect of flocculating the dust, it is preferable that the vacuum cleaner 500 is designed so as to include an electrification duct which is as long as possible and an electrification duct having a length of at least approximately 15 through 20 cm is required. On the other hand, the electrification duct is required to be disposed at a position in the vacuum cleaner 500 where suction gas passes. However, the length of the electrification duct may be subject to restrictions and operability of the vacuum cleaner 500 may be reduced depending on a position where the electrification duct is disposed. As the position where the electrification duct can be disposed, an inside any of the extension pipe small part 511, the extension pipe large part 512, the connecting pipe 503, and the joining section 505 can be considered.

Consequently, the present inventors conducted examinations, as described below, with respect to the position in the vacuum cleaner 500 where the electrification duct having a first electrification part for positively electrifying the dust contained in the suction gas and a second electrification part for negatively electrifying the dust contained in the suction gas is disposed.

### (1) Examination on a pressure loss (suction power)

A suction power of a vacuum cleaner, which is expressed by a product of a suction flow amount and a degree of vacuum, is an important index directly linked to cleaning performance. In order to enhance the performance, it is required to reduce a pressure loss in a suction gas passage. To reduce the pressure loss, internal diameters of respective pipes through which the suction gas passes are required to be large and even. In any portion of the extension pipe small part 511, the extension pipe large part 512, the connecting pipe 503, and the joining section 505, where the electrification duct is disposed, the pressure loss occurs due to a thickness of the wall of the electrification duct and the protuberances formed inside the electrification duct. However, in the extension pipe small part 511 whose internal diameter is smaller than those of the pipes of the other portions, a pressure loss is intrinsically high. If the electrification duct is disposed inside the extension pipe small part 511, the pressure loss is further increased. Accordingly, it is not appropriate to dispose the electrification duct inside the extension pipe small part 511.

### (2) Examination on a shock resistance

When cleaning is performed by using the vacuum cleaner 500, respective portions of the vacuum cleaner 500 contact furniture or the like and a large shock may be exerted on the contacted portions, depending on a condition of the usage thereof. If such a shock is exerted on the portion where the electrification duct is disposed, a strength of the electrification duct is reduced and the position of the electrification duct is misaligned, whereby an effect of flocculating the dust is likely to be reduced. Accordingly, the position where the electrification duct is disposed is required to be a position with a small shock stress if exerted.

Judging from a condition under which the vacuum cleaner 500 is used, since the handle 503a directly held by a user is disposed on the connecting pipe 503, any shock is scarcely exerted on the connecting pipe 503. On the other hand, since the joining section 505 is connected from the handle 503a via the connecting pipe 503 and the suction hose 504, it is hard for an acting force of the user to be applied to the joining section 505, and a frequency at which the joining section 505 contacts the furniture or the like is high. However, because it is hard for the acting force of the user to be applied to the joining section 505, even if the joining section 505 contacts the furniture or the like, an exerted shock stress is small. On the other hand, since not only frequencies at which the extension pipe small part 511 and the extension pipe large part 512 contact the furniture or the like are high but also the force of the user is directly exerted on the extension pipe small part 511 and the extension pipe large part 512, a shock stress exerted on the extension pipe small part 511 and the extension pipe large part 512 when the extension pipe small part 511 and the extension pipe large part 512 contact the furniture or the like is large. In particular, since a distance from the extension pipe small part 511 to hands of the user is long, the frequency at which the extension pipe small part 511 contact the furniture or the like is high. In addition, since a diameter of the extension pipe small part 511 is small, a strength thereof is intrinsically low.

Accordingly, when the positions where the electrification duct is disposed are arranged in decreasing order of the shock resistance, the order is: connecting pipe 503 > joining section 505 > extension pipe large part 512 > extension pipe small part 511.

### (3) Examination on a dust flocculation function (product life)

When the vacuum cleaner 500 is used, a length of the extension pipe, which can be elongated and contracted and includes the extension pipe small part 511 and the extension pipe large part 512, varies depending on a user or a purpose of cleaning. There may be a case where the extension pipe is used in a state where the extension pips is most contracted to be most short, that is, a state where the extension pipe small part 511 is contained into an inside the extension pipe large part 512 to the greatest extent. At this time, since the extension pipe small part 511 is in a state where the extension pipe small part 511 is slid and contained into the extension pipe large part 512, the inner wall surface of the extension pipe large part 512 scarcely contact the dust. Accordingly, if the electrification duct is disposed in the extension pipe large part 512, in a case where the extension pips is used in the state where the extension pipe is contracted and short, the dust scarcely contacts the inner wall of the electrification duct and the dust is not contact-electrified, whereby the dust flocculation effect cannot be enhanced.

There may be a case where in order to keep the gas suction passage in a sealed state, the external diameter of the extension pipe small part 511 is close to equal to the internal diameter of the extension pipe large part 512 and in order to further enhance sealing performance, a packing is provided on a downstream end of the extension pipe small part 511. In such a configuration, an outer wall surface of the extension pipe small part 511 and an inner wall surface (or the packing) of the extension pipe large part 512 rub against each other. Accordingly, if the electrification duct is disposed in the extension pipe large part 512, the electrification duct is damaged. In addition, in a case where the electrification duct has the protrusions for agitating the gas flow by generating the turbulent flows on the inner surface thereof, if this kind of the electrification duct is disposed in the extension pipe large part 512, the extension pipe large part 512 cannot internally contain the extension pipe small part 511, whereby the extension pipe cannot function in the elongated and contracted manner. Accordingly, if the electrification duct is disposed in the extension pipe large part 512, there may be a case where the dust flocculation effect cannot be attained and damaging the electrification duct is likely to occur.

### (4) Examination on operability and handleability

When the electrification duct having a length of approximately 15 to 20 cm is disposed in the extension pipe small part 511 and the extension pipe large part 512, an outer dimension of the electrification duct does not change. However, the electrification duct having the length of approximately 15 to 20 cm is disposed in the connecting pipe 503 or the joining section 505, the outer dimension of the electrification duct changes.

The connecting pipe 503 including the handle 503a and the joining section 505 connected to the vacuum cleaner main body 506 are both connected also to the suction hose 504. The user operates the extension pipe by holding the handle 503a and the vacuum cleaner main body 506 moves in accordance with a user's movement. In order not to hinder such an operation and movement performed by the user, the suction hose 504 is formed so as to be bendable. Therefore, it is not preferable that a member having high stiffness is included between the handle 503a and the vacuum cleaner main body 506.

If the electrification duct which is required to have a certain degree of a length is disposed inside the connecting pipe 503 or the joining section 505, the connecting pipe 503 or the joining section 505 is also required to be elongated in accordance with the length of the electrification duct. In particular, since the elongation of the joining section 505 in a case where the electrification duct is disposed inside the joining section 505 is equivalent to an increase in a length of the vacuum cleaner main body 506, handleability of the vacuum cleaner 500 is reduced. This may cause problems that a stress to which the user is subjected and a cleaning time increase and that a power consumption in accordance with the increase in the cleaning time increases. On the other hand, if the electrification duct is disposed inside the connecting pipe 503, because of the increase in the length of the connecting pipe 503, the portion of the suction hose 504, which has flexibility, moves to a downstream side, thereby causing a slight reduction in operability.

The results of the above-described examinations are shown in Table 1. In Table 1, the respective positions where the electrification duct is disposed and the respective items of effects to be attained thereby are shown together with marks: Ⓞ representing a very favorable position, ○ representing a favorable position, Δ representing a slightly unfavorable position, and × representing an inappropriate position.

**[Table 1]**

| | Extension pipe small part | Extension pipe large part | Connecting pipe | Joining section |
|---|---|---|---|---|
| Suppression of pressure loss (Suction power) | × | ○ | ○ | ○ |
| Shock resistance | × | Δ | Ⓞ | ○ |
| Dust flocculation function (Product life) | ○ | × | ○ | ○ |
| Operability, Handleability | Ⓞ | Ⓞ | ○ | Δ |

As shown in Table 1, when all the items of the pressure loss (suction power), the shock resistance, the dust flocculation function (product life), and the operability and handleability are examined in a comprehensive manner, it can be said that it is most favorable that the electrification duct is disposed in the connecting pipe 503 and it is also favorable that the electrification dust is disposed in the joining section 505.

Consequently, in the embodiment 3-1 according to the present invention, the electrification duct is disposed inside the connecting pipe 503.

Fig. 64 is a diagram illustrating a whole of the electrification duct of the embodiment 3-1 according to the present invention.

As shown in Fig. 64, the electrification duct 200 (frictional electrification passage part, electrification gas passage member) includes a first electrification part 201, a second electrification part 202, and an exterior frame 203. Shown in Fig. 64 is a state where the second electrification part 202 has been fitted into the exterior frame 203 and the first electrification part 201 has not yet been fitted into the exterior frame 203.

The first electrification part 201 and the second electrification part 202 have half-pipe shapes obtained by halving a cylindrical pipe in an axial direction. The exterior frame 203 is a cylindrical pipe having an internal diameter larger than an external diameter of a cylindrical pipe formed by joining two half-pipes of the first electrification part 201 and the second electrification part 202. The first electrification part 201 is made of polypropylene and allows particulates to be sufficiently positively contact-electrified. The second electrification part 202 is made of polyamide and allows the particulates to be sufficiently negatively contact-electrified. The exterior frame 203 is made of an ABS resin with excellent processability.

As fitting parts disposed along a circumferential direction of the exterior frame 203, a slot 203b is formed in the exterior frame 203. A protrusion (a projection or a flange part) 201a and a protrusion (a projection) 201b are formed on an edge face perpendicular to an axial direction of the half-pipe of the first electrification part 201. A protrusion (a projection or a flange part) 202a is formed on an edge face perpendicular to an axial direction of the half-pipe of the second electrification part 202. On a periphery of the exterior frame 203, a groove 203c for fitting the electrification duct 200 into the connecting pipe 503 of the vacuum cleaner 500 is formed as a fitting part.

The first electrification part 201 is inserted into the exterior frame 203 and the protrusion 201a is fitted to an edge face 203a of the exterior frame 203, which is perpendicular to the axial direction of the exterior frame 203 and fitting the protrusion 201b into the slot 203b, and is attached inside the exterior frame 203. The second electrification part 202 is inserted into the exterior frame 203 and the protrusion 202a is fitted to the edge face 203a of the exterior frame 203, which is perpendicular to the axial direction of the exterior frame 203, and is attached inside the exterior frame 203. In the second electrification part 202, a protrusion corresponding to the protrusion 201b in the first electrification part 201 is formed and is fitted into a slot formed at a position, in the exterior frame 203, which faces the slot 203b shown in Fig. 64. In such a manner, the electrification gas passage member 200 is assembled.

The protrusions 201b are provided in both of the first electrification part 201 and the second electrification part 202. However, since a mechanical force in a rotation direction is not exerted directly on these portions, a configuration in which the protrusion is provided in either one of the first electrification part 201 and the second electrification part 202 may be employed. In addition, a configuration in which the first electrification part and the second electrification part are held inside the exterior frame 203 through press-fitting without providing any protrusions in both of the first electrification part and the second electrification part may be employed.

Fig. 13 shows a cross-sectional view of the connecting pipe in which the electrification duct is disposed.

As shown in Fig. 13, the electrification duct 200 is provided such that one end of a downstream side thereof is inserted so as to be covered by one end of an upstream side of the suction hose 504 and another end of an upstream side thereof is inserted to the connecting pipe 503. Here, the downstream end of the electrification duct 200 is held inside the connecting pipe 503 so as to have a depth t from the downstream end of the connecting pipe 503. This allows a curving degree to be restricted by the downstream end of the connecting pipe 503 even when the suction hose 504 is curved downward and allows a stress exerted on the electrification duct 200 to be drastically relieved. Accordingly, in order not to increase a pressure loss in the electrification duct 200, it is possible to increase an internal diameter of the electrification duct 200 or to configure the electrification duct 200 so as to have a double structure.

Since in order to relieve a stress exerted on the downstream end of the electrification duct 200, it is only required to increase the depth t, it can be considered to elongate the connecting pipe 503. However, if the connecting pipe 503 is elongated, a movable portion behind the handle 503a is away from the handle 503a, thereby reducing operability of the vacuum cleaner 500. The present inventors performed operations by using a variety of prototypes and as a result, discovered that the stress exerted on the electrification duct 200 can be sufficiently reduced by setting the depth t to be 19 mm when the internal diameter of the connecting pipe 503 is 58 mm; the external diameter of the electrification duct 200 is 46 mm; and the internal diameter of the electrification duct 200 is 42 mm. If a small allowance is taken, even by setting the depth t to be 12mm, the stress exerted on the downstream end of the electrification duct 200 can be considerably relieved.

On an exterior frame 203 of the electrification duct 200, a groove 203c is formed along a periphery thereof. The connecting pipe 503 is provided with a holding fixture 513 for holding the electrification duct 200 inside thereof. The holding fixture 513 is fixed in the connecting pipe 503. On the holding fixture 513, a protrusion (projection) 513a is formed and has a shape allowing a fit into the groove 203c. Accordingly, while the electrification duct 200 is connected to the suction hose 504 and held so as not to be disconnected from the connecting pipe 503, the electrification duct 200 is rotatable in a circumferential direction.

In addition, because of the configuration in which the one end of the downstream side of the electrification duct 200 is covered by the suction hose 504, great sealing performance is attained, the air does not leak even without configuring the first electrification part 201, the second electrification part 202, and the exterior frame 203 so as to be highly tightly sealed, and neither ultrasonic welding nor screwing is required. Thus, when the electrification duct 200 is produced, a reduction in a production time, enhancement of a production efficiency, a reduction in a production cost, and the like are attained, thereby enhancing a profitability.

Upon driving the electric gas blower 567, a fan 568 generates a suction gas flow, air containing the dust is fed via the suction hose 504 and the joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, when the dust contained in the suction gas passes through the electrification duct 200 disposed in the connecting pipe 503, the dust contained in the suction gas is electrified and flocculated. Since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

As described above, the vacuum cleaner 500 comprises: the suction inlet 501 having the gas suction inlet; the electric gas blower 567 for generating the suction gas; the vacuum cleaner main body 506 having the electric gas blower 567 therein; the gas suction pipe communicating between the suction inlet 501 and the vacuum cleaner main body 506; and the electrification duct 200 having the first electrification part 201 for positively electrifying the dust contained in the suction gas and the second electrification part 202 for negatively electrifying the dust contained in the suction gas. The gas suction pipe includes: the extension pipe small part 511 connected to the suction inlet 501; the extension pipe large part 512 connected to the extension pipe small part 511 such that the one part, on the downstream side with respect to the suction gas, of the extension pipe small part 511 is inserted into the extension pipe large part 512; the connecting pipe 503 connected to the extension pipe large part 512 on the downstream side of the extension pipe large part 512 with respect to the suction gas; the suction hose 504 connected to the connecting pipe 503 on the downstream side of the connecting pipe 503 with respect to the suction gas; and the joining section 505 for connecting the suction hose 504 and the vacuum cleaner main body 506 on the downstream side of the suction hose 504 with respect to the suction gas. The extension pipe small part 511 has stiffness and a relatively small diameter. The extension pipe large part 512 has stiffness and a relatively large diameter. The connecting pipe 503 has stiffness and relatively large diameter and includes the handle 503a which a user holds. The suction hose 504 has flexibility and a relatively large diameter. The joining section 505 has stiffness and a relatively large diameter. In the vacuum cleaner 500, the electrification duct 200 is disposed inside the connecting pipe 503.

The dust flocculation effect is enhanced in accordance with an increase in the length of the electrification duct 200 in a gas suction direction. On the other hand, in a case where the vacuum cleaner 500 includes the electrification duct 200, the electrification duct 200 is required to be disposed at a position where the suction gas passes. However, the length of the electrification duct 200 is subject to restrictions or the operability of the vacuum cleaner 500 is reduced, depending on the position where the electrification duct 200 is disposed.

Therefore, the electrification duct 200 is disposed inside the connecting pipe 503, whereby the vacuum cleaner 500 which has the simple configuration and is capable of electrifying and flocculating the dust without reducing the suction flow amount can be provided.

In the vacuum cleaner 500, the suction hose 504 is connected to the connecting pipe 503 such that the one part of the suction hose 504 is inserted into the connecting pipe 503; the electrification duct 200 is disposed in the connecting pipe 503 such that the at least one part of the electrification duct 200 is inserted into the suction hose 504; and the downstream end of the electrification duct 200, which is located downstream of the suction gas, is located upstream, with respect to the suction gas, of the downstream end of the connecting pipe 503, which is located downstream of the suction gas.

By employing the above-described configuration, even when the suction hose 504 having the flexibility is curved, a curving degree is restricted by the connecting pipe 503 having the stiffness and a stress exerted on the electrification duct 200 inserted into the suction hose 504 is drastically relieved. Consequently, in order to avoid an increase in the pressure loss inside the electrification duct 200, it is possible to increase the internal diameter of the electrification duct 200 or to configure the electrification duct 200 so as to have the double structure.

In addition, by employing the above-described configuration, since the downstream end of the electrification duct 200 is covered by the suction hose 504 and thereby, the great sealing performance is attained, the air does not leak even without ultrasonic welding or screwing the components constituting the electrification duct 200. Thus, when the electrification duct 200 is produced, the reduction in the production time, the enhancement of the production efficiency, the reduction in the production cost, and the like are attained, thereby enhancing the profitability.

Further, in the vacuum cleaner 500, the electrification duct 200 is held so as to be rotatable with respect to an axis of the flow direction of the suction gas.

If the electrification duct 200 is held such that the electrification duct does not rotate in the connecting pipe 503 by fixing the positions of the connecting pipe 503 and the electrification duct 200, a twisting force is exerted when the vacuum cleaner is handled and the user has difficulty in cleaning.

Therefore, by employing the above-described configuration, the operability of the vacuum cleaner 500 is enhanced and the user can operate the vacuum cleaner 500 without being subjected to the stress, thereby allowing the cleaning time and the power consumption to be reduced. Moreover, the force generated by the rotation of the suction hose 504 having the flexibility is unlikely to be exerted on the electrification duct 200, thereby preventing the electrification duct from, for example, being deformed or damaged and attaining safety and long life of the vacuum cleaner 500.

### (Embodiment 3-2)

In an embodiment 3-2 according to the present invention, though not shown, the electrification duct 200 is inserted into one downstream end of the suction hose 504. The other parts of a configuration of the embodiment 3-2 are same as those of the configuration of the vacuum cleaner 500 of the embodiment 3-1.

As described above, the vacuum cleaner 500 comprises: the suction inlet 501 having the gas suction inlet; the electric gas blower 567 for generating the suction gas; the vacuum cleaner main body 506 having the electric gas blower 567 therein; the gas suction pipe communicating between the suction inlet 501 and the vacuum cleaner main body 506; and the electrification duct 200 having the first electrification part 201 for positively electrifying the dust contained in the suction gas and the second electrification part 202 for negatively electrifying the dust contained in the suction gas. The gas suction pipe includes: the extension pipe small part 511 connected to the suction inlet 501; the extension pipe large part 512 connected to the extension pipe small part 511 such that the one part, on the downstream side with respect to the suction gas, of the extension pipe small part 511 is inserted into the extension pipe large part 512; the connecting pipe 503 connected to the extension pipe large part 512 on the downstream side of the extension pipe large part 512 with respect to the suction gas; the suction hose 504 connected to the connecting pipe 503 on the downstream side of the connecting pipe 503 with respect to the suction gas; and the joining section 505 for connecting the suction hose 504 and the vacuum cleaner main body 506 on the downstream side of the suction hose 504 with respect to the suction gas. The extension pipe small part 511 has stiffness and a relatively small diameter. The extension pipe large part 512 has stiffness and a relatively large diameter. The connecting pipe 503 has stiffness and relatively large diameter and includes the handle 503a which a user holds. The suction hose 504 has flexibility and a relatively large diameter. The joining section 505 has stiffness and a relatively large diameter. In the vacuum cleaner 500, the electrification duct 200 is disposed inside the joining section 505.

The dust flocculation effect is enhanced in accordance with an increase in the length of the electrification duct 200 in a gas suction direction. On the other hand, in a case where the vacuum cleaner 500 includes the electrification duct 200, the electrification duct 200 is required to be disposed at a position where the suction gas passes. However, the length of the electrification duct 200 is subject to restrictions or operability of the vacuum cleaner 500 is reduced, depending on the position where the electrification duct 200 is disposed.

Therefore, the electrification duct 200 is disposed inside the joining section 505, whereby the vacuum cleaner 500 which has the simple configuration and is capable of electrifying and flocculating the dust without reducing the suction flow amount can be provided.

In addition, in the vacuum cleaner 500, the electrification duct 200 is held so as to be rotatable with respect to an axis of the flow direction of the suction gas.

If the electrification duct 200 is held such that the electrification duct does not rotate in the joining section 505 by fixing the positions of the joining section 505 and the electrification duct 200, a twisting force is exerted when the vacuum cleaner is handled and the user has difficulty in cleaning.

Therefore, by employing the above-described configuration, the operability of the vacuum cleaner 500 is enhanced and the user can operate the vacuum cleaner 500 without being subjected to a stress, thereby allowing a cleaning time and a power consumption to be reduced. Moreover, a force generated by the rotation of the suction hose 504 having the flexibility is unlikely to be exerted on the electrification duct 200, thereby preventing the electrification duct from, for example, being deformed and damaged and attaining safety and long life of the vacuum cleaner 500.

Hereinafter, an embodiment 4-1 through an embodiment 4-17 according to the present invention will be described with reference to drawings.

### (Embodiment 4-1)

Fig. 61 is a diagram illustrating a whole of a vacuum cleaner to which the present invention is applied. Fig. 12 is an explanatory diagram illustrating a configuration of a vacuum cleaner main body.

As shown in Fig. 61 and Fig. 12, a suction inlet 501 connects to an extension pipe 502, a connecting pipe 503 having a handle, and a bendable suction hose 504 in order and communicates via a joining section 505 with a vacuum cleaner main body 506. In the vacuum cleaner main body 506, an electric gas blower 567, a dust collecting unit 561, a dust collecting case 563, a HEPA filter 570, a cord reel (not shown), a control circuit (not shown) for controlling a supply of an electric power to the electric gas blower 567, and the like are contained. Upon driving the electric gas blower 567, air is sucked from the suction inlet 501 and the air containing the dust passes through the extension pipe 502 serving as a gas passage, the connecting pipe 503, and the suction hose 504 and is transported to the vacuum cleaner main body 506. The dust sucked into the vacuum cleaner main body 506 passes through the dust collecting unit 561, the electric gas blower 567, and the HEPA filter 570 and is discharged from the exhaust outlet 571. Among the particulates of the dust which has been sucked from the suction inlet 501 as mentioned above, the particulates having large sizes are accumulated in the dust collecting unit 561. The air from which the dust has been removed and which has been clean passes through an inside an electric motor 569 to cool the electric gas blower 567 and is discharged out of the vacuum cleaner main body 506. On side surfaces of the vacuum cleaner main body 506, wheels 507 which support the vacuum cleaner main body 506 and allow the vacuum cleaner main body 506 to be movable on a floor surface 508 are provided in a rotatable manner.

Upon driving the electric gas blower 567, a fan 568 generates a suction gas flow, the air containing the dust is fed via the suction hose 504 and the joining section 505 into the vacuum cleaner main body 506, and the air is blown toward the connecting part 562, the dust collecting filter 564, the connecting part 565, the fan 568, the electric motor main body 569, the HEPA filter 570, and the exhaust outlet 571. At this time, since the air containing fine dust and dust masses are transported while being mixed with the gas flow at midstream of the transportation, the particulates of the dust and the dust masses contact, suck, and adsorb one another, thereby causing the dust masses in the present invention to grow so as to be further large.

Since each of the sizes of the largely grown dust masses become larger than a mesh size of the dust collecting filter 564, the dust masses are collected by the dust collecting filter 564. Since by employing a configuration in which a plurality of electrification parts are provided or which allows the fine dust to contact the electrification part many times, each of the sizes of the collected dust masses becomes larger than the mesh size of the dust collecting filter 564. In such a case, the HEPA filter 570 is not needed.

In a case the dust masses do not grow so as to have each of the sizes of the dust masses, which is larger than the mesh size of the dust collecting filter 564, the dust masses may pass through the filter 564. In such a case, the dust masses may be collected by using the HEPA filter 570.

Fig. 2 through Fig. 5 are explanatory diagrams regarding the embodiment 4-1 to which the present invention is applied.

Fig. 2 is an explanatory diagram illustrating a configuration of an electrification gas passage member which is provided on an extension pipe of the vacuum cleaner of the embodiment 4-1 according to the present invention and electrifies dust by causing the gas to pass therethrough.

The first electrification part (first frictional electrification part) 10 and the second electrification part (second frictional electrification part) 11 have half-pipe shapes obtained by halving a cylindrical pipe in an axial direction. The first frictional electrification part 10 is made of a material which allows the dust to be easily positively electrified. The second frictional electrification part 11 is made of a material which allows the dust to be easily negatively electrified. These half-pipe shapes may be modified in accordance with electrification performance and functions of components.

Fig. 3 is a diagram illustrating assembly and a cross section of the embodiment 4-1. The first electrification part 10 and second electrification part 11 shown in Fig. 2 can be assembled to be a gas duct (frictional electrification passage part, electrification duct) 12 shown in Fig. 3, allowing an inside thereof to be kept in a sealed manner and the gas to flow.

It is supposed that a plane which is perpendicular to a plane including one joint surface 13 and another joint surface 14 of the first electrification part 10 and the second electrification part 11 of the gas duct 12 is a cross section A-A'.

Fig. 4 shows a cross sectional view with the electrification duct, shown in Fig. 3, viewed in a direction of a line A-A' and illustrating a manner in which the fine dust is electrified according to the present invention. Hereinafter, with reference to Fig. 4, a state where the dust is electrified will be described.

When a gas flow is generated through driving the electric gas blower 567, fine dust 15A, fine dust 16A, and fine dust 17A, as the dust, each having a size of several microns are transported from an inlet 18 toward an outlet 19 of the gas duct 12. When the fine dust 15A is transported in the vicinity of the first electrification part 10 and contacts the first electrification part 10, the fine dust 15A is positively electrified by action of frictional electrification. When the fine dust 17A is transported in the vicinity of the second electrification part 11 and contacts the second electrification part 11, the fine dust 17A is negatively electrified by the action of frictional electrification. The fine dust 15A positively electrified and fine dust 17A negatively electrified as mentioned above are mixed in the gas duct 12, and the dust 15A and the dust 17A mutually suck each other due to an electrostatic force and thereby, adsorbs each other, thereby forming a dust mass 19A. The gas duct 12 and the electrification parts are made so as to be appropriately long, whereby the dust mass 19A contacts again the first electrification part 10 and the second electrification part 11 and thereby, the dust mass 19A is further electrified. In such a manner, the electrification and the adsorption of the fine dust 15A, the fine dust 17A, and the dust mass 19A are repeated, thereby further increasing a size of the dust mass 19A. In Fig. 4, it is illustrated that when the fine dust collides with the first electrification part 10 or the second electrification part 11 one time, the adsorption is carried out one time. However, by appropriately setting a length and a diameter of the gas duct 12, the contact of the fine dust with the first electrification part 10 or the second electrification part 11 can be carried out a plurality of times. In addition, by appropriately selecting a material, an amount of the electrification resulting when the fine dust 15A and the fine dust 17A contact the first electrification part 10 and the second electrification part 11 can be selected to be set.

Fig. 5 is a diagram illustrating a manner in another case, in which the dust mass is formed according to the present invention.

As similarly to in Fig. 4, the fine dust 15B and the fine dust 17B contact the first electrification part 10 and the second electrification part 11, mutually adsorb one each other due to suction action of static electricity or the gas flow, further suck the fine dust 16B which is floating in the vicinity therearound and is not electrified or slightly electrified by the air, thereby forming a large dust masses (clusters) 19B. Fig. 5 shows the state where the dust mass 19B is formed as described above.

It is only required to dispose the first electrification part and the second electrification part upstream of the dust collecting unit 561. The first electrification part and the second electrification part may be disposed at any positions in the gas passage part, connecting the suction inlet 501 and the vacuum cleaner main body 506, such as positions of the suction inlet 501, the extension pipe 502, and the connecting pipe 503.

### (Embodiment 4-2)

Fig. 60 is an explanatory diagram illustrating an embodiment 4-2 according to the present invention.

Parts of the extension pipe 502 are separated to be the first electrification part 521 and the second electrification part 522, and the first electrification part 521 and the second electrification part 522 as another component are combined, thereby forming the extension pipe 502 which allows the air to circulate in a sealed state.

The first electrification part 521 and the second electrification part 522 as the another component are made of materials which are capable of positively and negatively electrifying the dust.

As described above, by separately forming and combining the parts of the extension pipe 502, as similarly to in the embodiment 4-1, the gas passage part for positively and negatively electrifying the dust is formed, thereby allowing the fine dust to become the dust masses. The materials of the first electrification part 521 and the second electrification part 522 may be changed and members for positively and negatively electrifying the dust may be formed on the inner wall. In addition, an electrification film may be formed on the inner wall of the gas passage part. As a method for providing the electrification film, coating, kneading of a functional material for the electrification, combining of materials, or the like may be appropriately selected.

### (Embodiment 4-3)

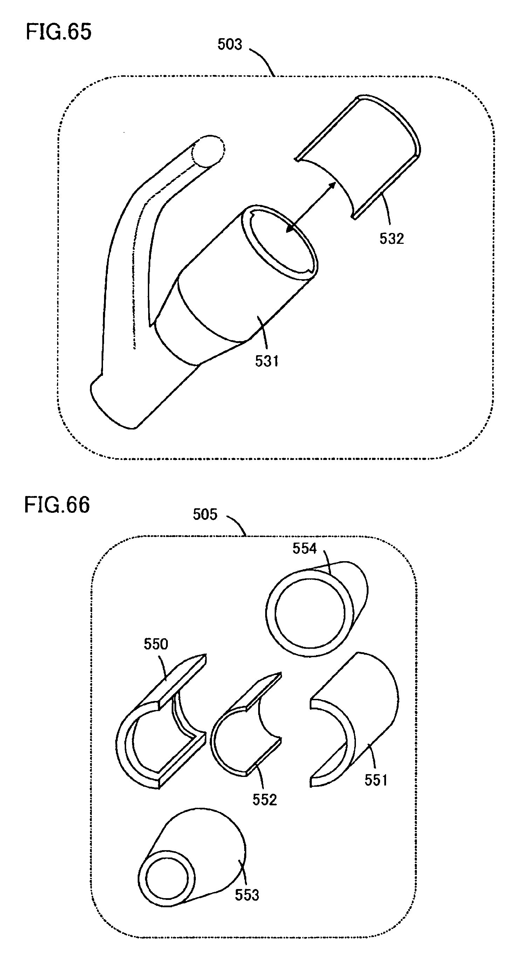

Fig. 65 is an explanatory diagram illustrating an embodiment 4-3 according to the present invention.

A part of an air circulating duct of a connecting pipe 503 in a vacuum cleaner is formed as an attachment 532 which can be inserted into a gas passage and is exchangeable. The attachment 532 is inserted into a connecting pipe main body 531, thereby forming a sealed gas passage part. In such a manner, the connecting pipe 503 can be assembled by using a plurality of components. As materials of the attachment 532 and the connecting pipe main body 531, materials which are capable of electrifying dust so as to have different polarities are selected and the air containing dust is caused to pass through the connecting pipe 503, thereby allowing fine dust to grow so as to be dust masses. The connecting pipe main body 531 and the attachment 532 may be made of one kind of a material, and by kneading a functional material for electrification in such one kind of the material, positive and negative electrification is also enabled.

The gas passage part may be configured to include and connect a plurality of joining parts such as a suction inlet 501, an extension pipe 502, the connecting pipe 503, and a suction hose 504, thereby allowing partial replacement of these components.

In the vacuum cleaner according to the present invention, it is preferable that as the dust electrification parts, the extension pipe 502 or the connecting pipe 503 is made of a material which is capable of electrifying the dust so as to have either one polarity, and a part of the extension pipe 502 or the connecting pipe 503 is separated in a direction in which the gas passes and is made of a material which is capable of electrifying the dust so as to have the other polarity.

As described above, the electrification parts for causing the dust to be positively and negatively electrified are provided in the extension pipe 502 or the connecting pipe part 503 of the vacuum cleaner. By employing the above-described configuration, in a case where the dust electrification parts are worn out or lose electrification functions due to contamination by the dust, easy replacement of a part of the extension pipe part 502 and the connecting pipe 503 having the electrification functions is enabled.

Furthermore, since the electrification parts can be divided as small blocks, the extension pipe 502 and the connecting pipe 503 for electrifying the dust in the present invention can be placed in the conventional vacuum cleaner. Therefore, not only in a product to be newly purchased but also a vacuum cleaner already in use, the gas passage member according to the present invention can be provided, thereby allowing a fine dust collecting efficiency to be enhanced.

### (Embodiment 4-4)

Fig. 66 is an explanatory diagram illustrating an embodiment 4-4 according to the present invention.

A connecting part 505 which is connected to a vacuum cleaner main body 506 includes a main body connecting part 554, a suction hose connecting part 553, a half-cylinder-shaped case 550, a case 551, and an electrification part 552. The electrification part 552 is incorporated into the case 550 and combined with a second half cylinder part 551, thereby forming a sealed gas passage part as a connecting part 505. In the present embodiment, as materials of the electrification part 552 and the case 551, a material which is capable of positively electrifying dust and a material which is capable of negatively electrifying the dust are respectively selected. A flow of air containing the dust is caused to pass through the connecting part 505, thereby allowing the fine dust to grow to be dust masses. Each of the electrification part 552 and the case 551 may be made of one kind of a material, and by kneading a functional material for electrification in such one kind of the material, positive and negative electrification is also enabled.

In the embodiment 4-1 through the embodiment 4-4, as the materials of the first electrification part 10 and the second electrification part 11, etc. for imparting static electricity to the dust, nylon and polypropylene are selected. However, this is merely one example, a combination of these materials is only required to be capable of positively electrifying the dust and negatively electrifying the dust, respectively, and these materials may be selected from among materials listed in the triboelectric series of resins and combined.

### (Embodiment 4-5)

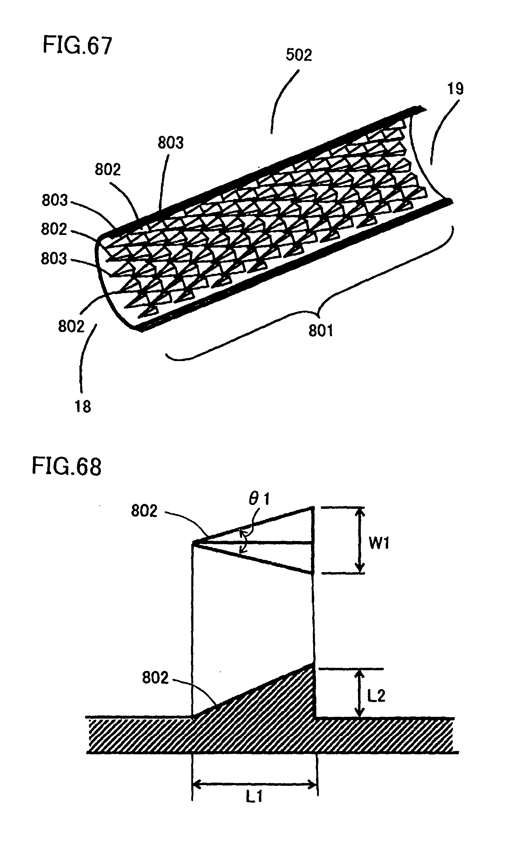

Fig. 67 illustrates an embodiment 4-5 according to the present invention and is an explanatory diagram illustrating a configuration of an inner surface side of an extension pipe 502. Fig. 68 is a diagram explaining a detailed shape of each of protuberances shown in Fig. 67.

With reference to Fig. 67 and Fig. 68, the embodiment 4-5 according to the present invention will be described.

From an inlet 18 toward an outlet 19 of the extension pipe 502, a large number of protuberances 802 and protuberances 803 as deflecting parts are formed. A length of the extension pipe 502 is 200 mm and an internal diameter thereof is 40 mm. When a gas flow is fed from an upstream toward a downstream of the extension pipe 502, the gas flow and dust in the vicinity of the extension pipe 502 flows downstream while the gas flow and dust are being deflected by the large number of protuberances 802 and protuberances 803 so as to flow around the protuberances in accordance with directions of slopes of the protuberances. A shape of each of the protuberances is of a flat triangular pyramid. As shown in Fig. 68, on an inlet side of each of the protuberances, two gentle slopes are provided so as to face each other; and on an outlet side of each of the protuberances, a side having an angle steeper than an angle which each of the two gentle slopes has is provided.

The protuberances 802 are made of a material which is capable of positively electrifying the dust. The protuberances 803 are made of a material which is capable of negatively electrifying the dust. In a circumferential direction of the inner surface of the extension pipe 502, each of the protuberances 802 and each of the protuberances 803 neighbor each other. In a direction of the gas flow from the upstream side to the downstream side of the extension pipe 502, the protuberances 802 and the protuberances 803 are each alternately arranged such that the protuberance 802 is first arranged and the protuberance 803 is next arranged. As described above, the protuberances 802 and the protuberances 803 are arranged such that even when the gas flow containing the dust is deflected so as to flow around the protuberances and sucked to the downstream direction, the gas flow containing the dust approaches alternately each of the protuberances 802 and each of the protuberances 803.

Fig. 68 is an explanatory diagram illustrating a schematic shape and cross section of the protuberance 802 or the protuberance 803. Each of the protuberances 802 is of the triangular pyramid shape and a face of an isosceles triangle having a base length W1 and a height L1 contacts the inner surface of the extension pipe 502. The shape of each of the protuberances 802 is the same as that of each of the protuberances 803. An angle θ1 of an apex of the above-mentioned isosceles triangle, which is formed from the upstream side toward downstream side, is set to be 35 degrees. The base length W1 is 5 mm, the height L1 is 9.5 mm, and a height L2 from the inner surface of the extension pipe 502 is 2.4 mm. Among sides which the triangular pyramid has, three sides which do not form the above-mentioned isosceles triangle are of round shapes each with a radius of approximately 1 mm.

In a case where the extension pipe 502 formed as described above is used in the vacuum cleaner, when the electric gas blower 567 is driven, the gas flow containing the dust flows from the inlet 18 toward the outlet 19 of the extension pipe 502. Since the dust sucked from the inlet 18 passes, together with large pieces of the dust, a protuberance region 801 where the protuberances 802 and the protuberances 803 are alternately disposed, a positive or negative electric charge is consecutively imparted to the fine dust. A principle in which the electric charge is imparted by contacting is the same as the principle of electrification in the embodiment 4-1. The gas flow which is deflected by the gentle slopes on the inlet side is abruptly deflected toward a side of the inner wall from apex portions of the protuberances 802 and the protuberances 803, whereby small vortices of the gas flow are easily formed. The formation of these small vortices and the deflection of the gas flow, caused by the slopes, are alternately repeated, whereby the fine dust can be positively and negatively electrified in an efficient manner. The positively and negatively electrified particulates of the fine dust adsorb one another. Even when the positively and negatively electrified particulates of the fine dust become clusters and are electrically substantially neutralized, these clusters further contact the protuberances 802 and the protuberances 803 and thereby, are electrified again, whereby the clusters grow to be large.

As described above, the clusters of the fine dust can be caused to grow to be larger than four micrometers which is a limit size of dust collected by a well-designed cyclone dust collecting machine and the fine dust can be collected through performing centrifugal separation by using the cyclone-type dust collecting machine. In addition, a dust collecting filter having a large mesh size can be employed in a filter-type vacuum cleaner. In a case where the filter having the small mesh size is used, time until occurrence of clogging of the filter is prolonged, thereby attaining long life. Even in a case where a HEPA filter is used, prolonging life of the HEPA filter can be attained.

### (Embodiment 4-6)

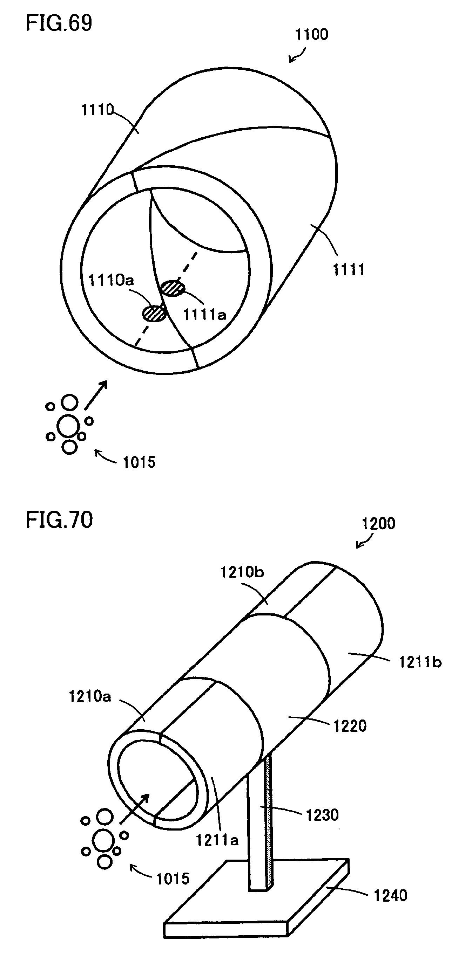

Fig. 69 is a diagram illustrating a whole of an electrification gas passage member of an embodiment 4-6 according to the present invention.

As shown in Fig. 69, the electrification gas passage member 1100 includes a first electrification part 1110 for positively contact-electrifying dust and a second electrification part 1111 for negatively contact-electrifying the dust. The first electrification part 1110 and the second electrification part 1111 extend along a direction of a gas flow so as to form an angle of 90 degrees. In other words, the first electrification part 1110 and the second electrification part 1111 are disposed in a skewed manner at a skew angle of 90 degrees between one opening and the other opening of the electrification gas passage member 1100. An arrow in Fig. 69 indicates a direction in which a particulate group 1015 as the dust flows into the electrification gas passage member 1100.

A part of the particulate group 1015 contacts a spot 1110a of an inner surface of the first electrification part 1110 and a spot 1111a of an inner surface of the second electrification part 1111 while passing through the electrification gas passage member 1100.

Among the particulates of the particulate group 1015, the particulates which contact the spot 1110a of the first electrification part 1110 are positively electrified. At this time, the inner wall surface of the first electrification part 1110 is negatively electrified. On the other hand, among the particulates of the particulate group 1015, the particulates which contact the spot 1111a of the second electrification part 1111 are negatively electrified. At this time, the inner wall surface of the second electrification part 1111 is positively electrified.

Even when turbulent flow components do not occur in a direction perpendicular to the direction of the gas flow in the electrification gas passage member 1100, since the first electrification part 1110 and the second electrification part 1111 are disposed along the direction of the gas flow, the parts of the particulate group 1015 approaches each other due to the turbulent flow components along the direction of the gas flow. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of particulates.

Depending on a shape of a gas passage pipe, a viscosity of a fluid containing the dust, or the like, the dust may be scarcely diffused in a direction intersecting the direction of the gas flow. In such a case, when the first electrification part and the second electrification part are disposed in the direction intersecting the direction of the gas flow, the positively electrified dust and the negatively electrified dust hardly approach each other due to the gas flow passing along the direction of the gas passage. In order for the Coulomb force and the Van der Waals force to effectively act, the positively electrified dust and the negatively electrified dust are required to approach each other to the certain extent. Therefore, when the positively electrified dust and the negatively electrified dust do not approach each other to the certain extent, it occurs that the Coulomb force and the Van der Waals force do not facilitate the dust flocculation.

Therefore, the first electrification part 1110 and/or the second electrification part 1111 are/is extended so as to form the angle with respect to the direction of the gas flow, that is, are/is skewed, whereby the dust flowing along the gas flow passes both of the first electrification part 1110 and the second electrification part 1111. By employing the above-described configuration, even when the dust is not diffused in the direction intersecting the direction of the gas flow, the particulates of the dust approaches each other due to the turbulent flow components along the direction of gas flow. When the positively electrified particulates and the negatively electrified particulates approach each other to the certain extent, the effect of the Coulomb force becomes prominent, the positively electrified particulates and the negatively electrified particulates mutually attract each other and are flocculated, thereby becoming masses (clusters) of the particulates.

As described above, also in a case where the turbulent flow components in the direction intersecting the direction of the gas flow are small or where the turbulent flow components in the direction intersecting the direction of the gas flow are large, the dust can be sufficiently flocculated.

### (Embodiment 4-7)

Fig. 70 is a diagram illustrating a whole of an electrification gas passage member of an embodiment 4-7 according to the present invention.

As shown in Fig. 70, the electrification gas passage member 1200 includes: a first electrification part 1210a and a first electrification part 1210b which are half-cylinder-shaped pipes made of a material capable of positively contact-electrifying dust; and a second electrification part 1211a and a second electrification part 1211b which are half-cylinder-shaped pipes made of a material capable of negatively contact-electrifying the dust. The first electrification part 1210a and the second electrification part 1211a constitute one electrification part pair and the first electrification part 1210b and the second electrification part 1211b constitute another electrification part pair. These two electrification part pairs are disposed so as to be arranged via a joining member 1220. The joining member 1220 is a cylindrical pipe made of a single material. In the present embodiment, although the joining member 1220 does not actively contact-electrify a particulate group 1015 of dust, the joining member 1220 may be made of a material which is capable of either positively or negatively electrifying the particulate group 1015. A supporting member 1230 is connected to an outer circumferential surface of the joining member 1220 and is fixed on a base 1240. In such a manner, the electrification gas passage member 1200 is held by the supporting member 1230. An arrow shown in Fig. 70 indicates a direction in which the particulate group 1015 flows into the electrification gas passage member 1200.

One part of the particulate group 1015 flowing into the electrification gas passage member 1200 contacts an inner wall surface of the first electrification part 1210a or an inner wall surface of the first electrification part 1210b and is positively electrified. Another part of the particulate group 1015 contacts an inner wall surface of the second electrification part 1211a or an inner wall surface of the second electrification part 1211b and is negatively electrified.

When the particulates positively electrified as mentioned above and the particulates negatively electrified as mentioned above approach each other due to the gas flow inside the electrification gas passage member 1200 to a certain extent, an effect of the Coulomb force becomes prominent, the positively electrified particulates and the negatively electrified particulates mutually attract each other and are flocculated, thereby becoming masses (clusters) of the particulates.

The material of which the half-cylinder-shaped first electrification part 1210a is made is different from the material of which the half-cylinder-shaped second electrification part 1211a is made, and the material of which the half-cylinder-shaped first electrification part 1210b is made is different from the material of which the half-cylinder-shaped second electrification part 1211b is made. When a cylindrical pipe is formed by assembling such half-cylinder-shaped pipes made of different materials through fitting-in or screwing, a strength thereof is generally inferior to that of a cylindrical pipe made of a single material. Therefore, when a strong cylindrical pipe is required, for example, in a case where a supporting member is incorporated into the cylindrical pipe or where an external pressure is exerted on the cylindrical pipe such that the cylindrical pipe is collapsed, a countermeasure such as increasing a wall thickness of the cylindrical pipe is required.

Therefore, by connecting the plurality of the electrification part pairs by using the common joining member 1220, the electrification gas passage member 1200 having a simple configuration can be formed by combining the different materials so as to have a sufficient strength.

### (Embodiment 4-8)

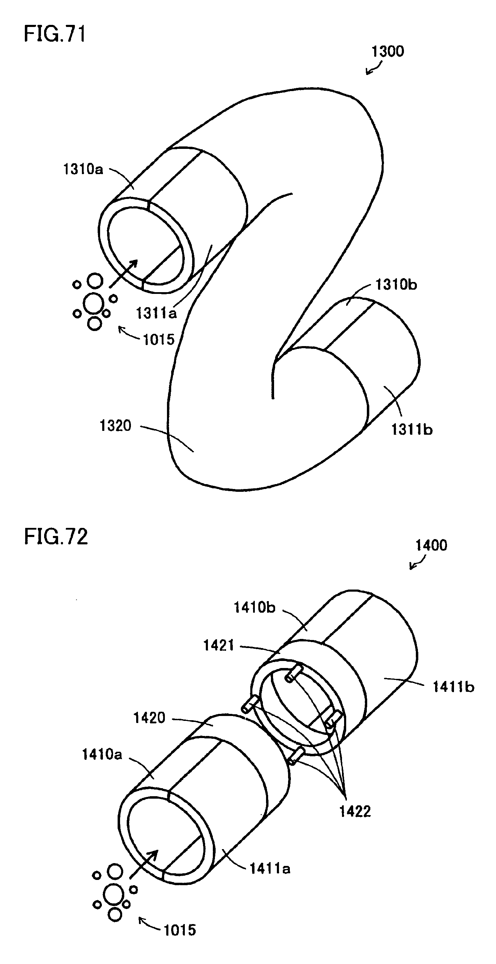

Fig. 71 is a diagram illustrating a whole of an electrification gas passage member of an embodiment 4-8 according to the present invention.

As shown in Fig. 71, the electrification gas passage member 1300 is different from the electrification gas passage member 1200 of the embodiment 4-7 in that a plurality of electrification part pairs are connected by using a bendable hose 1320 as a joining member.

The electrification gas passage member 1300 includes: a first electrification part 1310a and a first electrification par 1310b which are half-cylinder-shaped pipes made of a material capable of positively contact-electrifying dust; and a second electrification part 1311a and a second electrification part 1311b which are half-cylinder-shaped pipes made of a material capable of negatively contact-electrifying the dust. The first electrification part 1310a and the second electrification part 1311a constitute one electrification part pair and the first electrification part 1310b and the second electrification part 1311b constitute another electrification part pair. In each of the electrification part pairs, a first electrification part and a second electrification part are bonded so as to form a cylindrical pipe. These electrification part pairs are disposed so as to be arranged via the hose 1320. The hose 1320 which is bendable is a cylindrical pipe made of a single material. In the present embodiment, although the hose 1320 does not actively contact-electrify a particulate group 1015 of dust, the hose 1320 may be made of a material which is capable of either positively or negatively electrifying the particulate group 1015. An arrow shown in Fig. 71 indicates a direction in which the particulate group 1015 flows into the electrification gas passage member 1300.

One part of the particulate group 1015 flowing into the electrification gas passage member 1300 contacts an inner wall surface of the first electrification part 1310a or an inner wall surface of the first electrification part 1310b and is positively electrified. Another part of the particulate group 1015 contacts an inner wall surface of the second electrification part 1311a or an inner wall surface of the second electrification part 1311b and is negatively electrified.

When the particulates positively electrified as mentioned above and the particulates negatively electrified as mentioned above approach each other due to the gas flow inside the electrification gas passage member 1300 to a certain extent, an effect of the Coulomb force becomes prominent, the positively electrified particulates and the negatively electrified particulates mutually attract each other and are flocculated, thereby becoming masses (clusters) of the particulates.

As described above, the plurality of the electrification part pairs are connected by the bendable hose 1320, whereby the electrification gas passage member 1300 which has a simple configuration, is formed by combining the different materials, and has a sufficient strength can be realized.

In addition, by employing the above-described configuration, the electrification gas passage member 1300 can be applied to the suction hose 504 (Fig. 61) of a vacuum cleaner.

### (Embodiment 4-9)

Fig. 72 is a diagram illustrating a whole of an electrification gas passage member of an embodiment 4-9 according to the present invention.

As shown in Fig. 72, the electrification gas passage member 1400 is different from the electrification gas passage member 1200 of the embodiment 4-7 in that a cylindrical pipe 1420 and a cylindrical pipe 1421 as joining members are included.

The electrification gas passage member 1400 includes: a first electrification part 1410a and a first electrification part 1410b which are half-cylinder-shaped pipes made of a material capable of positively contact-electrifying dust; and a second electrification part 1411a and a second electrification part 1411b which are half-cylinder-shaped pipes made of a material capable of negatively contact-electrifying the dust. The first electrification part 1410a and the second electrification part 1411a are bonded so as to form a cylindrical pipe, constitute one electrification part pair, and connected to one opening portion of the cylindrical pipe 1420. The first electrification part 1410b and the second electrification part 1411b are bonded so as to form a cylindrical pipe, constitute another electrification part pair, and connected to one opening portion of the cylindrical pipe 1421. Protrusions 422 disposed on an opening portion of the cylindrical pipe 1421 are accepted into recesses formed in an opening portion of the cylindrical pipe 1420, whereby another opening portion of the cylindrical pipe 1420 and another opening portion of the cylindrical pipe 1421 are connected. The cylindrical pipe 1420 and the cylindrical pipe 1421 which are circular tubes are made of a single material. In the present embodiment, although the cylindrical pipe 1420 and the cylindrical pipe 1421 do not actively contact-electrify a particulate group 1015 of dust, the cylindrical pipe 1420 and the cylindrical pipe 1421 may be made of a material which is capable of either positively or negatively electrifying the particulate group 1015. An arrow shown in Fig. 72 indicates a direction in which the particulate group 1015 flows into the electrification gas passage member 1400.

One part of the particulate group 1015 flowing into the electrification gas passage member 1400 contacts an inner wall surface of the first electrification part 1410a or an inner wall surface of the first electrification part 1410b and is positively electrified. Another part of the particulate group 1015 contacts an inner wall surface of the second electrification part 1411a or an inner wall surface of the second electrification part 1411b and is negatively electrified.

When the particulates positively electrified as mentioned above and the particulates negatively electrified as mentioned above approach each other due to the gas flow inside the electrification gas passage member 1400 to a certain extent, an effect of the Coulomb force becomes prominent, the positively electrified particulates and the negatively electrified particulates mutually attract each other and are flocculated, thereby becoming masses (clusters) of the particulates.

As described above, the electrification gas passage member 1400 having a complicated structure in which the cylindrical pipe 1420 and the cylindrical pipe 1421 as joining parts are provided can be formed. By employing the above-described configuration, the electrification gas passage member 1400 which has a simple configuration, is formed by combining the different materials, and has a sufficient strength can be realized.

### (Embodiment 4-10)

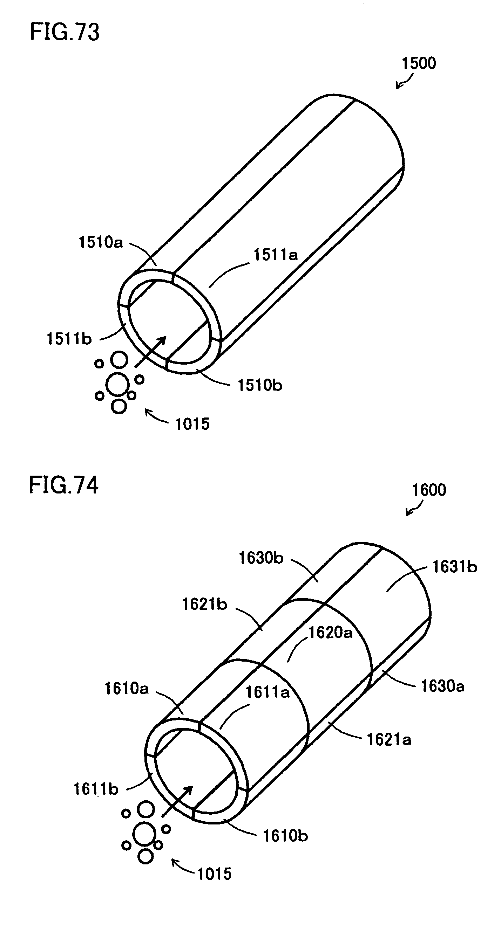

Fig. 73 is a diagram illustrating a whole of an electrification gas passage member of an embodiment 4-10 according to the present invention.

As shown in Fig. 73, in the electrification gas passage member 1500, electrification parts are respectively formed by using bent plates. In the electrification gas passage member 1500, a first electrification part 1510a and a second electrification part 1511a are arranged in a circumferential direction of a cross section of a gas passage, which intersects a direction of a gas flow, and constitute one electrification part pair forming one half-cylinder-shaped pipe. A first electrification part 1510b and a second electrification part 1511b are arranged in the circumferential direction of the cross section of the gas passage, which intersects the direction of the gas flow, and constitute another electrification part pair forming another half-cylinder-shaped pipe. These two electrification part pairs are disposed and bonded so as to be arranged in the circumferential direction of the cross section of the gas passage, which intersects the direction of the gas flow, thereby forming a cylindrical pipe. At this time, each of the electrification parts occupies a quarter of a periphery of the electrification gas passage member 1500, with an interior angle of 90 degrees on a cross section of the electrification gas passage member 1500. An arrow shown in Fig. 73 indicates a direction in which a particulate group 1015 flows into the electrification gas passage member 1500.

One part of the particulate group 1015 flowing into the electrification gas passage member 1500 contacts an inner wall surface of the first electrification part 1510a or an inner wall surface of the first electrification part 1510b and is positively electrified. Another part of the particulate group 1015 contacts an inner wall surface of the second electrification part 1511a or an inner wall surface of the second electrification part 1511b and is negatively electrified. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of the particulates.

In the embodiments 4-6 through 4-9, each of the first electrification part and the second electrification part occupies a half of a periphery of the cylindrical pipe-shaped electrification gas passage member, with an interior angle of 180 degrees on a cross section of the electrification gas passage member. On a surface perpendicular to an axis of the electrification gas passage member, a maximum distance between the particulates which contact the first electrification part and are positively electrified and the particulates which contact the second electrification part and are negatively electrified is equal to an internal diameter of the electrification gas passage member.

On the other hand, in the electrification gas passage member 1500 of the embodiment 4-10, on a surface perpendicular to the direction of the gas passage, a maximum distance between the positively electrified particulates and the negatively electrified particulates is 70% (=1/√2) of an internal diameter of the electrification gas passage member 1500.

When the distance between the positively electrified particulates and the negatively electrified particulates is large, the Coulomb force hardly acts on the positively electrified particulates and the negatively electrified particulates and a probability with which the positively electrified particulates and the negatively electrified particulates approach each other is also low, thereby reducing a probability with which the particulates are flocculated to grow to be masses. Therefore, by employing the above-described configuration, on the surface perpendicular to the direction of the gas passage, the distances between the particulates having the positive electric charge and the particulates having the negative electric charge are decreased.

As described above, when the distances between the particulates having the positive electric charge and the particulates having the negative electric charge are decreased, the Coulomb force easily acts on the respective particulates. In addition, the probability with which the particulates having the positive electric charge and the particulate having the negative electric charge approach each other is increased. Accordingly, the respectively electrified particulates are flocculated to easily grow to be the masses.

In the embodiment 4-10, the configuration in which the electrification gas passage member 1500 is divided so as to have the four peripheral portions and each of the electrification parts occupies the quarter of the periphery of the electrification gas passage member 1500, with the interior angle of 90 degrees on the cross section of the electrification gas passage member 1500, is employed. However, the electrification gas passage member may be divided so as to have six peripheral portions, eight peripheral portions, and so forth, thereby allowing further enhancement of the effect.

### (Embodiment 4-11)

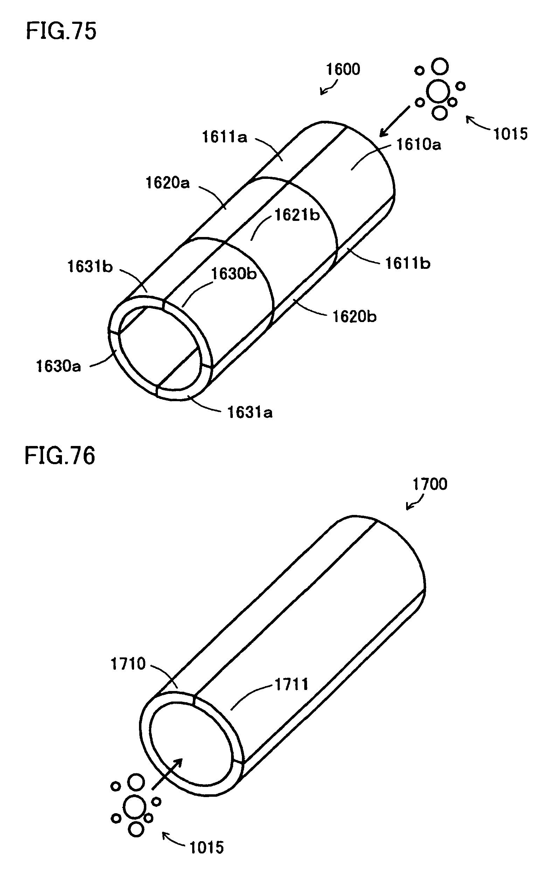

Fig. 74 and Fig. 75 are diagrams each illustrating a whole of an electrification gas passage member of an embodiment 4-11 according to the present invention. Fig. 75 is the diagram illustrating the whole of the electrification gas passage member which is viewed in a direction opposite to the direction in which the electrification gas passage member is viewed in Fig. 74.

As shown in Fig. 74 and Fig. 75, in the electrification gas passage member 1600, a first electrification part 1610a and a second electrification part 1611a constitute an electrification part pair 1610A; a first electrification part 1610b and a second electrification part 1611b constitute an electrification part pair 1610B; a first electrification part 1620a and a second electrification part 1621a constitute an electrification part pair 620A; a first electrification part 1620b and a second electrification part 1621b constitute an electrification part pair 620B; a first electrification part 1630a and a second electrification part 1631a constitute an electrification part pair 630A; and a first electrification part 1630b and a second electrification part 1631b constitute an electrification part pair 630B. Each of the electrification parts is a bent plate which occupies a twelfth of a periphery of the electrification gas passage member 1600, with an interior angle of 90 degrees on a cross section of the electrification gas passage member 1600. The electrification parts are arranged in a paired manner in a circumferential direction of a gas duct whose cross section intersects a direction of a gas flow. The electrification part pair 1610A and the electrification part pair 1610B; the electrification part pair 620A and the electrification part pair 620B; and the electrification part pair 630A and the electrification part pair 630B are arranged in a grouped manner in the circumferential direction of the gas duct whose cross section intersects the direction of the gas flow. The groups, each of which is formed by four divided bent plates arranged in the circumferential direction of the gas duct, constitute a cylindrical pipe. The above-mentioned three groups of the electrification part pairs are disposed so as to be arranged in the direction of the gas flow. At this time, the electrification parts are disposed such that the first electrification parts constituting the plurality of electrification part pairs do not mutually neighbor each other and the second electrification parts constituting the plurality of electrification part pairs do not mutually neighbor each other.

A particulate group 1015 flows into the electrification gas passage member 1600 in a direction indicated by each arrow shown in Fig. 74 and Fig. 75. Among the particulates constituting the particulate group 1015, for example, the particulates which contact an inner wall of the first electrification part 1610a are positively electrified. Next, these particulates which have contacted the inner wall of the first electrification part 1610a and been positively electrified come to pass the second electrification part 1621b. At this time, the particulates which have contacted the inner wall of the first electrification part 1610a and been positively electrified come to approach the particulates which have contacted an inner wall of the first electrification part 1610a and been negatively electrified. When the positively electrified particulates and the negatively electrified particulates approach each other to a certain extent, an effect of the Coulomb force becomes prominent, the positively electrified particulates and the negatively electrified particulates mutually attract each other and are flocculated, thereby becoming masses (clusters) of the particulates.

Depending on a shape of a gas passage pipe and a viscosity of a fluid containing the dust, the dust may be scarcely diffused in a direction intersecting the direction of the gas flow. In such a case, even when the first electrification part and the second electrification part are disposed in the direction intersecting the direction of the gas flow, the positively electrified dust and the negatively electrified dust hardly approach each other due to the gas flow passing along a direction of a gas passage. In order for the Coulomb force and the Van der Waals force to effectively act, the positively electrified dust and the negatively electrified dust are required to approach each other to the certain extent. Therefore, when the positively electrified dust and the negatively electrified dust do not approach each other to the certain extent, it occurs that the Coulomb force and the Van der Waals force do not facilitate the dust flocculation.

In the electrification gas passage member 1600, the first electrification part and the second electrification part are arranged in the direction of the gas passage and constitute one electrification part pair, and the plurality of electrification part pairs are arranged and disposed in the direction of the gas passage.

As described above, in the electrification gas passage member 1600, the first electrification part and the second electrification part are disposed alternately along the direction of the gas passage, whereby a part of the positively electrified dust and a part of the negatively electrified dust approach each other due to turbulent flow components along the direction of the gas passage. When the positively electrified particulates and the negatively electrified particulates approach each other to the certain extent, the effect of the Coulomb force becomes prominent, the positively electrified particulates and the negatively electrified particulates mutually attract each other and are flocculated, thereby becoming the masses (clusters) of the particulates.

By employing the above-described configuration, an efficiency of electrifying the particulates is increased, and an effect of the flocculation is enhanced. In particular, in a case where turbulent flow components in a direction perpendicular to the direction of the gas passage are small and a case where the turbulent flow components in the direction of the gas passage are large, the effect of the flocculation is enhanced.

The first electrification part and the second electrification part constitute the one electrification part pair; the plurality of electrification part pairs are arranged in the circumferential direction of the gas duct whose cross section intersects the direction of the gas flow and in the direction of the gas passage; and the electrification parts are disposed such that the first electrification parts constituting the plurality of electrification part pairs do not mutually neighbor each other and the second electrification parts constituting the plurality of electrification part pairs do not mutually neighbor each other.

By employing the above-described configuration, an efficiency of electrifying the particulates is increased, and an effect of the flocculation is enhanced. In particular, in a case where turbulent flow components in a direction perpendicular to the direction of the gas passage are small and a case where the turbulent flow components in the direction of the gas passage are large, the effect of the flocculation is enhanced.

### (Embodiment 4-12)

Fig. 76 is a diagram illustrating a whole of an electrification gas passage member of an embodiment 4-12 according to the present invention.

As shown in Fig. 76, the electrification gas passage member 1700 includes a first electrification part 1710 and a second electrification part 1711. The first electrification part 1710 and the second electrification part 1711 are both bent plates. The first electrification part 1710 and the second electrification part 1711 are arranged in a circumferential direction of a gas duct and bonded, thereby forming the electrification gas passage member 1700 which is a cylindrical pipe. At this time, the first electrification part 1710 occupies three quarters of a periphery of the cylindrical pipe, with an interior angle of 270 degrees on a cross section of the cylindrical pipe. The second electrification part 1711 occupies a quarter of the periphery of the cylindrical pipe, with an interior angle of 90 degrees on the cross section of the cylindrical pipe. An arrow shown in Fig. 76 indicates a direction in which a particulate group 1015 flows into the electrification gas passage member 1700.

Here, as values of work functions of respective materials (electrochemical potentials from a vacuum level), it is supposed that a work function of the particulate group 1015 is 4.0 eV; a work function of the first electrification part 1710 is 4.1 eV; and a work function of the second electrification part 1711 is 3.7 eV. Since if states of surfaces of and electric conductivities of the respective materials are the same as one another, a contact electrification amount is determined in accordance with values corresponding to differences of the work functions, a positive electrification amount and a negative electrification amount of the particulates are not equal to each other. Therefore, when the particulate group 1015 contacts the first electrification part 1710 and the second electrification part 1711, (4.0 - 3.7) / (4.1 - 4.0) = 3 results and thereby, the particulate group 1015 is electrified such that an electric charge amount of the negatively electrified particulates is three times as large as an electric charge amount of the positively electrified particulates.

At this time, when it is supposed that the particulate group 1015 flows in the circumferential direction of the electrification gas passage member 1700 so as to show an even concentration distribution, three quarters of the particulate group 1015 contact an inner wall surface of the first electrification part 1710. This group is supposed to be a particulate group 1015C. At this time, the inner wall surface of the first electrification part 1710 is supposed to be negatively electrified and a sum total of the positively electrified particulate group 1015C is supposed to be Q.

A quarter of the particulate group 1015 contacts an inner wall surface of the second electrification part 1711. This group is supposed to be a particulate group 1015D. At this time, the inner wall surface of the second electrification part 1711 is supposed to be positively electrified and a sum total of the negatively electrified particulate group 1015D is supposed to be Q.

When the positively electrified particulate group 1015C and the negatively electrified particulate group 1015D approach each other to a certain extent, an effect of the Coulomb force becomes prominent, the positively electrified particulate group 1015C and the negatively electrified particulate group 1015D mutually attract each other and are flocculated, thereby becoming masses (clusters) of the particulates.

Since the respective sum totals of the positive and negative electrification amounts in the particulate group 1015C and the particulate group 1015D are equal to each other, a flocculation efficiency is high.

It is supposed that a half of dust flowing inside the electrification gas passage member is positively electrified by a member for positively contact-electrifying the particulates so as to have a certain electric charge amount. It is also supposed that the remaining half of the dust is negatively electrified by a member for negatively contact-electrifying the particulates so as to have the same electric charge amount as mentioned above. At this time, since the positive and negative electrification distribution is even, in a case where the Coulomb force is dominant in the mutual flocculation of the particulates, a flocculation efficiency is highest. However, here, a case where dust whose composition is greatly different from the above-mentioned dust flows into the electrification gas passage member is considered. In general, since an electrochemical potential of a solid substance is specific thereto, disproportion between a positive electrification amount and a negative electrification amount in the whole dust occurs. Therefore, as compared with the case where the positive and negative electrification distribution is even, a flocculation efficiency is reduced.

Therefore, as described above, a proportion of an area which the first electrification part 1710 occupies in the electrification gas passage member 1700 is made different from a proportion of an area which the second electrification part 1711 occupies in the electrification gas passage member 1700, thereby allowing the positive and negative electrification amounts to be even. In accordance with dust which most frequently flows in the electrification gas passage member 1700, a proportion of an area which the first electrification part 1710 occupies in the electrification gas passage member 1700 is made different from a proportion of an area which the second electrification part 1711 occupies in the electrification gas passage member 1700, thereby realizing the electrification gas passage member 1700 which attains a high flocculation efficiency.

### (Embodiment 4-13)

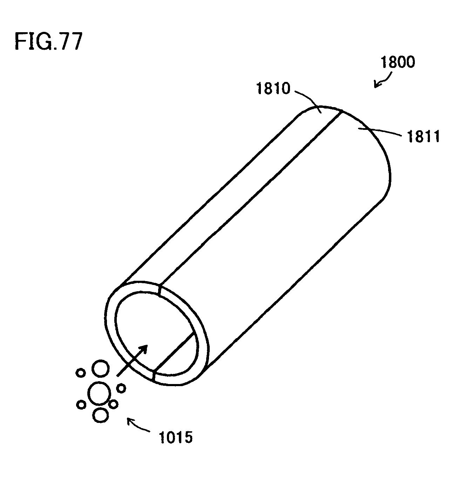

Fig. 77 is a diagram illustrating a whole of an electrification gas passage member of an embodiment 4-13 according to the present invention.

As shown in Fig. 77, an electrification gas passage member 1800 includes a first electrification part 1810 and a second electrification part 1811. A cross section of each of the first electrification part 1810 and the second electrification part 1811, which intersects a gas passage, is of a semicircular shape. The first electrification part 1810 and the second electrification part 1811 are arranged in a circumferential direction of a cross section of a gas passage, which intersects a direction of a gas flow, and bonded, thereby constituting the electrification gas passage member 1800 which is a cylindrical pipe. The first electrification part 1810 is made of polypropylene as a polymer resin for positively contact-electrifying expanded polystyrene (polystyrene) as one example of a material of which dust is composed. The second electrification part 1811 is made of nylon 66 (polyamide obtained by co-condensation polymerization of adipic acid and hexamethylenediamine) as a polymer resin which is a material for negatively contact-electrifying the expanded polystyrene. An arrow shown in Fig. 77 indicates a direction in which a particulate group 1015 flows into the electrification gas passage member 1800.

One part of the particulate group 1015 flowing into the electrification gas passage member 1800 contacts an inner wall of the first electrification part 1810 and is positively electrified. Another part of the particulate group 1015 contacts an inner wall of the second electrification part 1811 and is negatively electrified. When the positively electrified particulates and the negatively electrified particulates flow inside the electrification gas passage member 1800 and approach each other to a certain extent, an effect of the Coulomb force becomes prominent, the positively electrified particulates and the negatively electrified particulates mutually attract each other and are flocculated, thereby becoming masses (clusters) of the particulates.

In the present embodiment, as a result of various examinations conducted by the inventors, the polypropylene is used as the polymer resin of which the first electrification part 1810 is made and the nylon 66 is used as the polymer resin of which the second electrification part 1811 is made.

In a case where the electrification parts are formed by using respective materials for positively and negatively contact-electrifying dust, a raw material cost increases depending on kinds of the materials. In addition, processing is difficult depending on a disposition and a configuration of the materials.

Therefore, for example, the polypropylene is used as the material of which the first electrification part is made and the nylon 66 is used as the material of which the second electrification part is made, that is, the polymer resins which are available at a low cost as industrial materials are used to form the electrification parts, thereby allowing a reduction in the cost. In addition, even in a case where a complicated shape is required, such as a case where the respective electrification parts are fitted into each other, when thermoplastic resins are used, mass production is enabled by employing a processing method such as extrusion molding and injection molding.

### (Embodiment 4-14)

In a case where a gas duct is formed by using respective materials for positively and negatively contact-electrifying particulates, there has been a problem that when polymer resins are used as the materials, the particulates are not sufficiently contact-electrified and are scarcely mutually flocculated.

The embodiment 4-14 is different from the embodiment 4-13 in that a first electrification part 1810 is made of polypropylene and a second electrification part 1811 is made of glass.

The polypropylene easily positively electrifies polystyrene as one example of a material of which dust is composed. The glass is more easily positively electrified than the polystyrene and nylon which are the polymer resins. Accordingly, the second electrification part which is made of the glass is more easily positively electrified than the second electrification part in the embodiment 4-13, which is made of the nylon. In other words, the dust is further easily negatively electrified by the second electrification part made of the glass.

As described above, the glass is used as the material for negatively contact-electrifying the dust, whereby the dust is sufficiently contact-electrified and a flocculation effect is enhanced.

### (Embodiment 4-15)

In a case where a gas duct is formed by using respective materials for positively and negatively contact-electrifying particulates, there has been a problem that when polymer resins are used as the materials, the particulates are not sufficiently contact-electrified and are scarcely mutually flocculated. In such a case, by using glass as a material for negatively contact-electrifying the particulates, the particulates can be sufficiently contact-electrified. However, an electrification gas passage member formed by using the glass may be broken by a physical shock.

The embodiment 4-15 is different from the embodiment 4-14 in that a first electrification part 1810 is made of polypropylene and a second electrification part 1811 is made of a polymer resin containing a glass filler.

The polypropylene easily positively electrifies polystyrene as one example of a material of which dust is composed. The glass is more easily positively electrified than the polystyrene and nylon which are the polymer resins. Accordingly, the second electrification part made of the polymer resin mixed with the glass filler is more easily positively electrified than the second electrification part made of the nylon or the like. In other words, the dust is further easily negatively electrified by the second electrification part.

As described above, the polymer resin mixed with the glass filler is used as the material for negatively contact-electrifying the particulates, thereby avoiding danger of breakage or the like which may occur in a case where the glass is singly used and moreover, allowing enhancement of a flocculation effect through sufficiently electrifying the particulates by utilizing high contact electrification properties of the glass.

The same effect can be attained by coating an inner surface of the nylon 66 with a paint mixed with glass beads. For example, a paint in which 100 parts by weight of a urethane-series-thinner is mixed with 20 parts by weight of spherical glass beads which mainly comprise Na₂O, CaO, and SiO₂ and whose grain size is less than or equal to 53 µm is prepared. When the inner wall surface of the second electrification part 1811 made of the nylon 66 is coated with this paint, contact electrification properties of the nylon 66 are scarcely exhibited because the inner wall surface of the second electrification part 1811 is coated with the paint. However, the glass beads are present in a bare manner on a part of the inner wall surface and contact electrification properties thereof become prominent. Therefore, when the glass beads contact pieces of expanded polystyrene or the like, the inner wall of the second electrification part 1811 is positively electrified and the pieces of expanded polystyrene are negatively electrified.

The same effect can be attained by attaching a sheet having a surface on which the glass beads are spread, to the inner wall surface of the second electrification part 1811.

For example, a sheet on which spherical glass beads mainly comprising Na₂O, CaO, and SiO₂ and having a grain size of 106 through 850 µm are spread on a surface of a base cloth via a binder at a sinking rate of 60 % (a portion protruding on the surface is 40 %) is prepared. When this sheet is attached on the inner wall surface of the second electrification part 1811 made of the nylon 66, the contact electrification properties of the nylon 66 are scarcely exhibited because the inner wall surface of the second electrification part 1811 is covered with the sheet. However, the glass beads are present in a bare manner on a part of the inner wall surface and contact electrification properties thereof become prominent. Therefore, when the glass beads contact pieces of expanded polystyrene or the like, the inner wall of the second electrification part 1811 is positively electrified and the pieces of expanded polystyrene are negatively electrified.

### (Embodiment 4-16)

In a case where a cylindrical pipe is formed by using respective materials for positively and negatively contact-electrifying particulates, when dielectric materials are used as the materials, a contact electrification amount is comparatively early saturated. Therefore, an amount of the electrified particulates gradually decreases in accordance with an increase in an amount of the particulates to be electrified, thereby incurring a problem that flocculation performance is deteriorated. This occurs because even when electrons and electron holes are supplied in the vicinity of a material surface through contact electrification, the electrons and the electron holes are hardly diffused inside of the material due to a high resistivity of the dielectric material. In other words, this occurs because the transferred electrons and the electron holes are accumulated in the vicinity of the material surface and an electric potential of the material surface is greatly changed, thereby hampering a subsequent electric charge transfer.

An embodiment 4-16 is different from the embodiment 4-13 in that a first electrification part 1810 is made of polypropylene and a second electrification part 1811 is made of a stainless steel which is a conductive material.

The polypropylene easily positively electrifies polystyrene as one example of a material of which dust is composed. The stainless steel more easily negatively electrifies the polystyrene than the nylon 66 of which the second electrification part in the embodiment 4-13 is made. As a result of various examinations conducted by the inventors, it was discovered that among kinds of metal, the stainless steel has a relatively small work function and is easily positively electrified.

An effect attained when the second electrification part 1811 is made of the stainless steel is compared with the effect attained when the second electrification part 1811 is made of the nylon 66 (embodiment 4-13).

Whereas a resistivity of this nylon 66 is approximately 10¹⁰ Ω·m, a resistivity of the stainless steel is very small, approximately 10⁻⁷ Ω·m. Therefore, when the electron holes on a surface of the nylon 66 increase through contact electrification, the electrons are hardly conducted inside of the nylon 66, an surface potential increases, this compensates a chemical potential, and a contact electrification amount is saturated. On the other hand, when the electron holes on a surface of the stainless steel increase through contact electrification, the electrons are quickly conducted inside of the stainless steel, a surface potential scarcely increases, and a contact electrification amount is hardly saturated. In other words, since the electrons can be continued to be supplied to the contacted pieces of polystyrene, flocculation performance due to the Coulomb force is also maintained.

Metal is more easily positively electrified than, for example, the polystyrene as one example of a material of which dust is composed. Accordingly, when the second electrification part 1811 for negatively contact-electrifying the dust is made of the metal which is the conductive material, the contact electrification amount is hardly saturated, thereby allowing realization of the electrification gas passage member 1800 in which the particulate flocculation performance is maintained.

The same effect can be attained also by using aluminum, instead of the stainless steel. A resistivity of the aluminum which is a conductive material is very small, approximately 10⁻⁸Ω·m. Therefore, when the electron holes on a surface of the aluminum increase through contact electrification, the electrons are quickly conducted inside of the aluminum, a suface potential scarcely increases, and a contact electrification amount is hardly saturated. In other words, since the electrons can be continued to be supplied to the contacted dust, flocculation performance due to the Coulomb force is also maintained. In addition, a specific gravity of the aluminum is approximately one third of that of iron and a specific strength of the aluminum is equal to that of the iron. Thus, the electrification gas passage member which is very lightweight and has excellent contact electrification properties can be realized.

Accordingly, the second electrification part 1811 for negatively contact-electrifying the dust is made of the aluminum, thereby allowing the realization of the electrification gas passage member which is lightweight and enables the particulate flocculation performance to be maintained.

### (Embodiment 4-17)

The present embodiment is different from the embodiment 4-13 in that in the electrification gas passage member 1800, a first electrification part 1810 is made of polypropylene mixed with carbon black as an electrically conductive filler and a second electrification part 1811 is made of nylon.

When pieces of expanded polystyrene as one example of a material of which a particulate group 1015 is composed flow into the electrification gas passage member 1800, one part of the pieces of expanded polystyrene of the particulate group 1015 contacts an inner wall surface of the first electrification part 1810. Since the polypropylene is more easily negatively electrified than polystyrene, the inner wall surface of the first electrification part 1810 is negatively electrified and the one part of the pieces of expanded polystyrene is positively electrified. Another part of the pieces of expanded polystyrene of the particulate group 1015 contacts an inner wall surface of the second electrification part 1811. Since the nylon is more easily positively electrified than the polystyrene, the inner wall surface of the second electrification part 1811 is positively electrified and the another part of the pieces of expanded polystyrene is negatively electrified.

When the positively electrified particulates and the negatively electrified particulates flow inside the electrification gas passage member 1800 and approach each other to a certain extent, an effect of the Coulomb force becomes prominent, the positively electrified particulates and the negatively electrified particulates mutually attract each other and are flocculated, thereby becoming masses (clusters) of the particulates.

An effect attained in the case where the first electrification part 1810 is made of the polypropylene mixed with the carbon black as the electrically conductive filler is compared with an effect attained in a case where the first electrification part 1810 is made of polypropylene mixed with no electrically conductive filler. Since a resistivity of the polypropylene is approximately 10¹⁴Ω·m, even when electrons increase on a surface thereof through contact electrification, the electrons are hardly conducted inside of the polypropylene, a surface potential decreases, this compensates a chemical potential, and a contact electrification amount is saturated. On the other hand, in the polypropylene, according to the present embodiment, mixed with the carbon black, 60 parts by weight of the carbon black having an average particle size of 50nm is mixed per 100 parts by weight of the polypropylene. This carbon black acts as the electrically conductive filler and thereby, a resistivity of the polypropylene mixed with the carbon black decreases to 10²Ω·m or less. Therefore, even when electrons increase on a surface of the polypropylene mixed with the carbon black through the contact electrification, the electrons are conducted inside of the polypropylene mixed with the carbon black, a surface potential scarcely decreases, and a contact electrification amount is hardly saturated. In other words, since electron holes can be continued to be supplied to the contacted pieces of polystyrene, flocculation performance due to the Coulomb force is also maintained.

When dielectric materials are used as the respective materials for positively and negatively contact-electrifying the dust, a contact electrification amount is comparatively early saturated. Therefore, an amount of the electrified particulates gradually decreases in accordance with an increase in an amount of the particulates to be electrified, thereby incurring a problem that flocculation performance is deteriorated. This occurs because even when electrons and electron holes are supplied in the vicinity of a material surface through the contact electrification, the electrons and the electron holes are hardly diffused inside of the material due to a high resistivity of the dielectric material. In other words, this occurs because the transferred electrons and the electron holes are accumulated in the vicinity of the material surface and an electric potential of the material surface is greatly changed, thereby hampering a subsequent electric charge transfer.

Consequently, the metal which is the conductive material is used as the material for contact-electrifying the dust, thereby allowing the particulates to be sufficiently contact-electrified. The electrification part for contact-electrifying the dust is made of the polymer resin mixed with the electrically conductive filler, whereby the contact electrification amount is hardly saturated.

In addition, the electrification gas passage member 1800 for contact-electrifying the fine particulates such as the pieces of expanded polystyrene can be produced by using the polymer resins which are available at a low cost as industrial materials.

Furthermore, even in a case where a complicated shape is required, such as a case where the respective electrification parts are fitted into each other, the electrification parts made of thermoplastic resins can be mass-produced by employing a processing method such as extrusion molding and injection molding.

As described above, the first electrification part 1810 for contact-electrifying the particulates is made of the polypropylene mixed with the carbon black, whereby the contact electrification amount is hardly saturated. This allows realization of the electrification gas passage member which can be produced at a reduced cost and easily processed and enables the dust flocculation performance to be maintained.

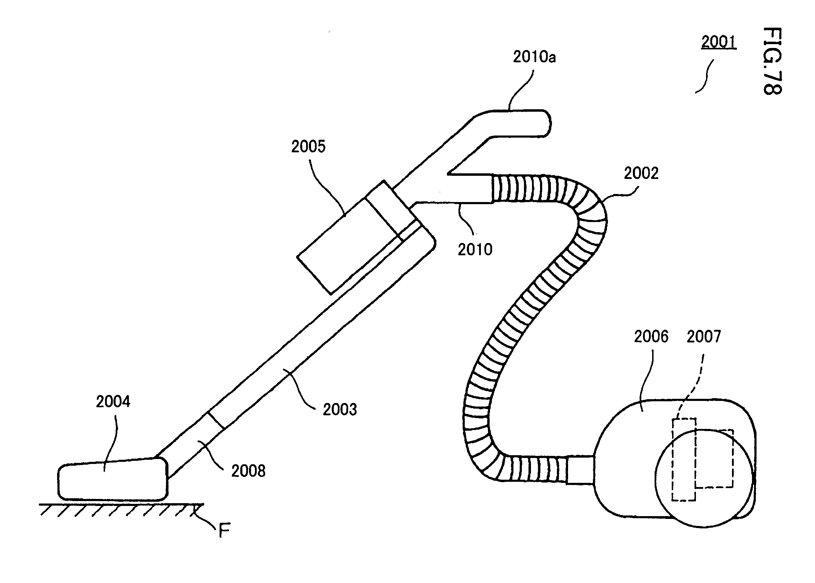

Hereinafter, embodiments 5-1 through 5-5 according to the present invention will be described with reference to drawings. Fig. 78 shows a side view illustrating a vacuum cleaner of the embodiment 5-1. The vacuum cleaner 2001 includes a suction inlet body 2004 having a suction inlet (not shown) which faces a floor surface F. A connecting pipe 2003 is connected to the suction inlet body 2004. On an upstream side of suction gas of the connecting pipe 2003, a frictional electrification resin pipe 2008 for contact-electrifying dust which circulates therein is provided.

On a downstream side of the suction gas of the connecting pipe 2003, a cyclone dust collecting unit 2005 is connected. The cyclone dust collecting unit 2005 communicates via a joining member 2010 and a suction hose 2002 with a main body unit 2006 having an electric gas blower 2007. A handle 10a held by a user is formed by bending a part of the joining member 2010.

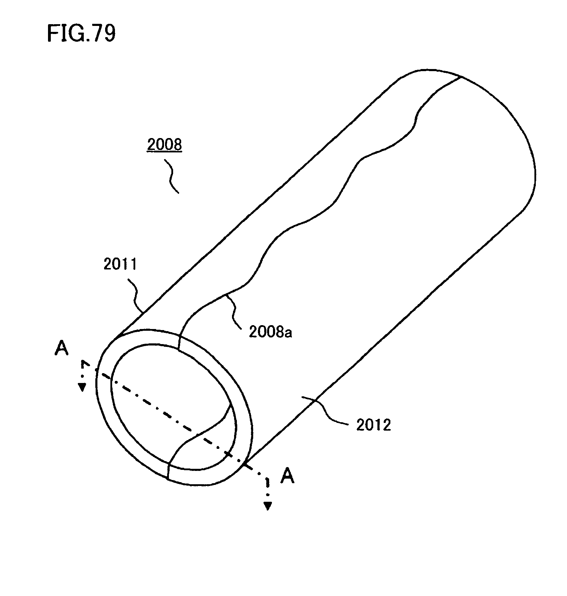

Fig. 79 shows a perspective view of the frictional electrification resin pipe 2008. The frictional electrification resin pipe 2008 is formed so as to be pipe-shaped by jointing a first electrification part 2011 and a second electrification part 2012, each of which has an arch-shaped cross section. The first and second electrification parts 2011 and 2012 are formed by using molded components, made of an ABS resin, in which charge control agents for promoting electrification of the dust passing through the frictional electrification resin pipe 2008 are mixed.

In the first electrification part 2011, the charge control agent which is negatively electrified and positively electrifies the dust is mixed. As such a charge control agent, for example, an azo metal compound shown in a "Chemical Formula 1", a salicylic acid metal chelate compound shown in a "Chemical Formula 2", or the like can be used.

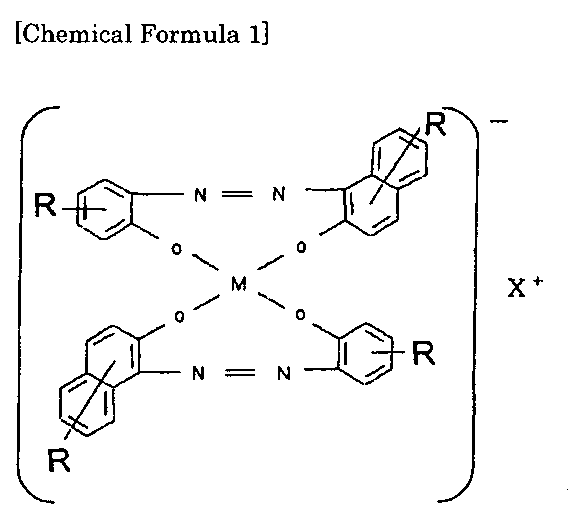

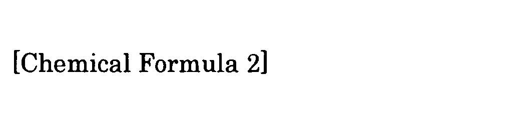

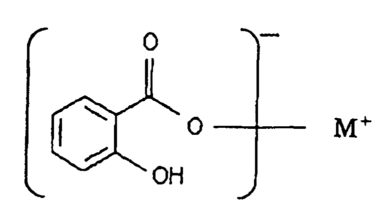

A charge control agent composed of a polymer resin such as a copolymer or the like which contains 2-acrylamide-2-methylpropanesulfonic acid may be used. A charge control agent composed of a monomer is inferior in compatibility with a thermoplastic resin and dispersibility, and in particular, separation from a resin surface may easily occur. In addition, in a case where a charge control agent contains metal or has water solubility, the charge control agent is likely to adversely affect the environment and health. Therefore, the charge control agent composed of the polymer resin is used, thereby allowing the compatibility with the thermoplastic resin and the dispersibility to be enhanced and the adverse effect exerted on the environment and the health to be reduced.

In the second electrification part 2012, the charge control agent which is positively electrified and negatively electrifies the dust is kneaded. As such a charge control agent, for example, quaternary ammonium salt shown in "Chemical Formula 3", a nigrosine compound shown in "Chemical Formula 4", or the like can be used. Note that in the "Chemical Formula 1", the "Chemical Formula 3", and the "Chemical Formula 4", R represents alkyl. In addition, a charge control agent composed of a polymer resin of a copolymer containing the quaternary ammonium salt may be used.

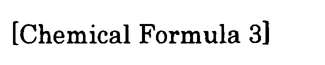

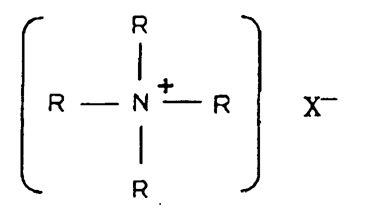

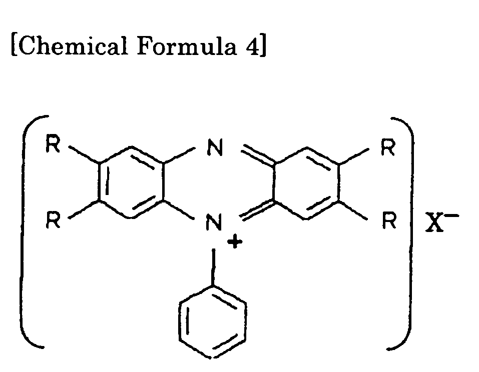

In the above-described configuration of the vacuum cleaner 2001, when the electric gas blower 2007 is driven and dust collection is started, the suction gas is taken in from the suction inlet of the suction inlet body 2004. The suction gas taken in from the suction inlet body 2004 circulates inside the frictional electrification resin pipe 2008 of the connecting pipe 2003. Inside the frictional electrification resin pipe 2008, the dust which contacts the first electrification part 2011 is positively electrified through friction and the dust which contacts the second electrification part 2012 is negatively electrified through the friction. The positively electrified dust and the negatively electrified dust, while circulating through the connecting pipe 2003, mutually attract each other due to the Coulomb force and are flocculated, thereby growing to be clusters. The clusters of dust flow into the cyclone dust collecting unit 2005.

The suction gas swirls in the cyclone dust collecting unit 2005, and large-sized pieces of garbage and the clusters of dust are separated and removed by a centrifugal force. The air from which the dust has been removed flows out of the cyclone dust collecting unit 2005 and flows via the joining member 2010 and the suction hose 2002 into the main body unit 2006. Th dust which has not been removed by the centrifugal separation in the cyclone dust collecting unit 2005 is collected by a filter (not shown) provided inside the main body unit 2006. A clean air is discharged out of the main body unit 2006.

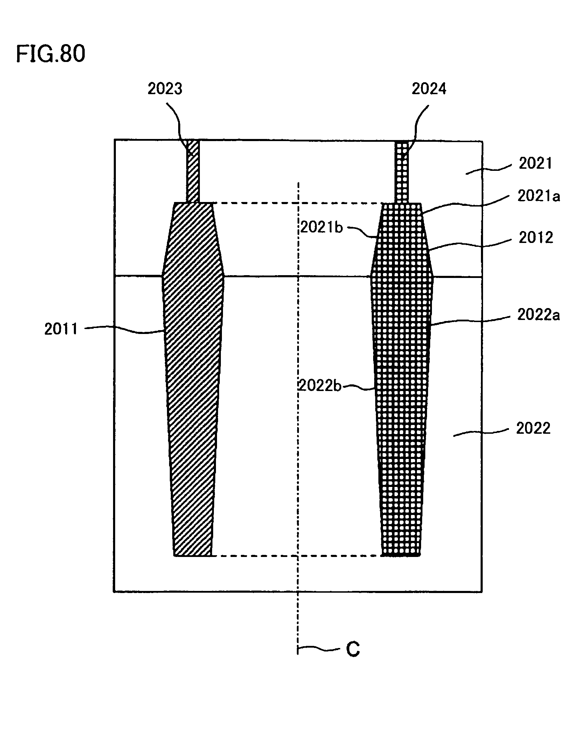

Fig. 80 shows a cross-sectional view showing a state in which the frictional electrification resin pipe 2008 is molded and illustrating an A-A cross section shown in Fig. 79. The frictional electrification resin pipe 2008 is formed by a fixed molding die 2021 and a movable molding die 2022 through the so-called color mixing molding. The fixed molding die 2021 has a concave-shaped cylindrical surface 2021a and a convex-shaped cylindrical surface 2021b which faces the cylindrical surface 2021a. Similarly, the movable molding die 2022 has a concave-shaped cylindrical surface 2022a and a convex-shaped cylindrical surface 2022b which faces the cylindrical surface 2022a. The fixed molding die 2021 and the movable molding die 2022 are clamped at a predetermined pressure and closely jointed. From injection nozzles 2023 and 2024 provided on the fixed molding die 2021, pellets molten at a high temperature are injected between the cylindrical surfaces 2021a and 2021b and between the cylindrical surfaces 2022a and 2022b.

The pellet injected from the injection nozzle 2023 contains the charge control agent, which is negatively electrified and positively electrifies the dust, in an ABS resin thereof. For example, 100 parts by weight of an ABS powder and 5 parts by weight of an azo metal compound powder are agitated to be mixed by using a tumbler and are melt-kneaded at 230°C by using a twin screw extruder. Then, drying is performed at 120°C for 12 hours, thereby forming the pellet.

The pellet injected from the injection nozzle 2024 contains the charge control agent, which is positively electrified and negatively electrifies the dust, in an ABS resin thereof. For example, 100 parts by weight of the ABS powder and 5 parts by weight of a nigrosine compound powder are agitated to be mixed by using the tumbler and are melt-kneaded at 230°C by using the twin screw extruder. Then, the drying is performed at 120°C for 12 hours, thereby forming the pellet.

The pellets injected from the injection nozzles 2023 and 2024 are molten, flow in the fixed molding die 2021 and the movable molding die 2022, and collide with each other in the vicinity of an alternate long and short dash line C where the pellets are equally distant from the injection nozzles 2023 and 2024. When the resin is sufficiently filled, the resin is hardened through cooling. In the above-described method, the cylindrical pipe-shaped frictional electrification resin pipe 2008 comprising the first and second electrification parts 2011 and 2012 which are segmented by a weld line 2008a (see Fig. 79), have the arch-shaped cross sections, and are integrally formed can be obtained. The frictional electrification resin pipe 2008 may be formed so as to have a tubular shape other than the cylindrical pipe shape.

Although the main ingredient of the frictional electrification resin pipe 2008 may be a resin other than the ABS resin, it is more preferable to use the ABS resin. By using the ABS resin, the frictional electrification resin pipe 2008 which is excellent in shock resistance, chemical resistance, processability, shape stability, etc., in a wide range of temperature and also has fine gloss can be obtained. In addition, since the ABS resin is extremely widely used as an industrial product material, the frictional electrification resin pipe 2008 can be produced at a low cost.

In a case where chief ingredients of the pellets injected from the injection nozzles 2023 and 2024 are the same resin, it is only required to inject the pellets at the same pressure since the pellets has the same flowability. This allows the first and second electrification parts 2011 and 2012 to be easily and simultaneously formed. However, in a case where the chief ingredients of the pellets injected from the injection nozzles 2023 and 2024 are different from each other, the flowability of the pellet injected from the injection nozzle 2023 and the flowability of the pellet injected from the injection nozzle 2024 are different from each other. Therefore, by injecting amounts which are equal to each other and adjusting pressures and timing upon the injection, the pellets can collide with each other in the vicinity of the alternate long and short dash line C. Although the frictional electrification resin pipe 2008 is formed through the color mixing molding, the frictional electrification resin pipe 2008 may be formed through two-color extrusion molding.

According to the present embodiment, since the frictional electrification resin pipe 2008 includes the first electrification part 2011 for positively electrifying the dust and the second electrification part 2012 for negatively electrifying the dust, the dust can be made to be the clusters. Accordingly, the dust can be easily collected by using the filter and the cyclone dust collecting unit. In addition, since the first and second electrification parts 2011 and 2012 contain the charge control agents for promoting the electrification, the frictional electrification resin pipe 2008 which has a high strength and a simple configuration can be formed by using the ABS resin or the like. Accordingly, the frictional electrification resin pipe can be formed easily and at a low cost.

In addition, since particulates of the charge control agents are kneaded in the first and second electrification parts 2011 and 2012, the frictional electrification resin pipe 2008 having the charge control agents which are exposed on a surface thereof can be easily formed through the molding.

Furthermore, since the materials of which the first and second electrification parts 2011 and 2012 are made are the same resin such as the ABS resin, the first and second electrification parts 2011 and 2012 can be easily and simultaneously formed, thereby allowing the frictional electrification resin pipe 2008 to be formed at the low cost.

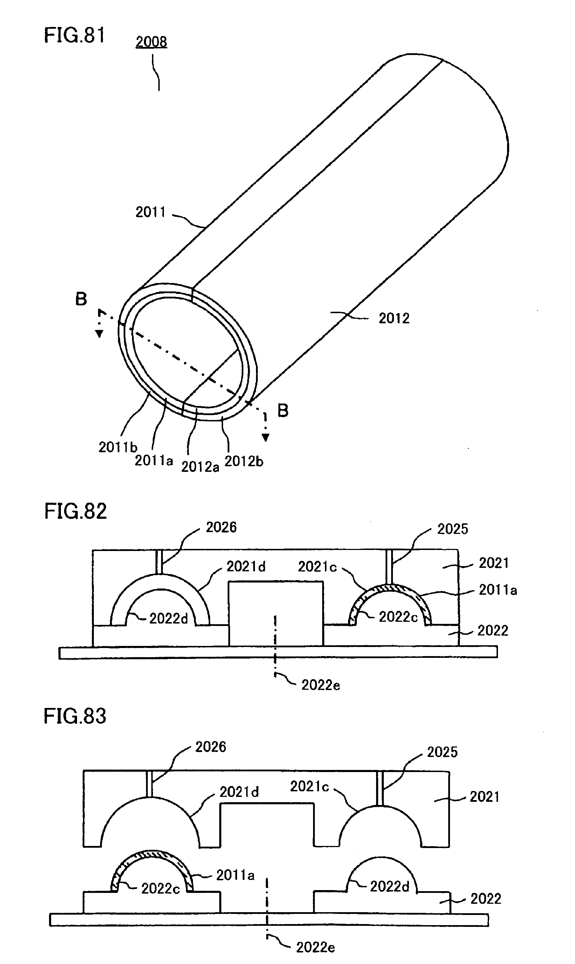

Next, Fig. 81 shows a perspective view illustrating a frictional electrification resin pipe of an embodiment 5-2 in a vacuum cleaner. For convenience sake in description, the same parts of the embodiment 5-2 as those of the embodiment 5-1 shown in Fig. 78 through Fig. 80 are denoted by the same reference numerals and codes as those used in the description of the embodiment 5-1. Each of the first and second electrification parts 2011 and 2012 of the frictional electrification resin pipe 2008 is formed so as to have two layers. The frictional electrification resin pipe 2008 has electrification layers 2011a and 2012a disposed on an inner surface thereof and has reinforcement layers 2011b and 2012b disposed on an outer surface thereof.

In the electrification layers 2011a and 2012a, the same charge control agents as those in the embodiment 5-1 are kneaded in the ABS resin thereof. The reinforcement layers 2011b and 2012b are made of the ABS resin. In addition, each of the first and second electrification parts 2011 and 2012 is formed so as to be a half-cylinder pipe having an arch-shaped cross section. The first and second electrification parts 2011 and 2012 are jointed at respective edge faces thereof in a circumferential direction.

Fig. 82 through Fig. 85 show cross-sectional views showing processes for molding the first electrification part 2011. The first electrification part 2011 is formed through the so-called two-color molding by using a fixed molding die 2021 and a movable molding die 2022. At two portions of the fixed molding die 2021, concave-shaped cylindrical surfaces 2021c and 2021d are provided, to which injection nozzles 2025 and 2026 are coupled, respectively. A curvature radius of the cylindrical surface 2021d is larger than that of the cylindrical surface 2021c. At two portions of the movable molding die 2022, which face the cylindrical surfaces 2021c and 2021d, convex-shaped cylindrical surfaces 22c and 2022d are provided and rotatable with respect to a center line 2022e.

As shown in Fig. 82, the fixed molding die 2021 and the movable molding die 2022 are clamped at a predetermined pressure. From the injection nozzle 2025 provided on the fixed molding die 2021, a pellet molten at a high temperature is injected between the cylindrical surfaces 2021c and 2022c. The pellet injected from the injection nozzle 2025 contains, in an ABS resin thereof, a charge control agent which is negatively electrified and positively electrifies dust. When the resin is sufficiently filled, the resin is hardened through cooling, thereby forming the electrification layer 2011a.

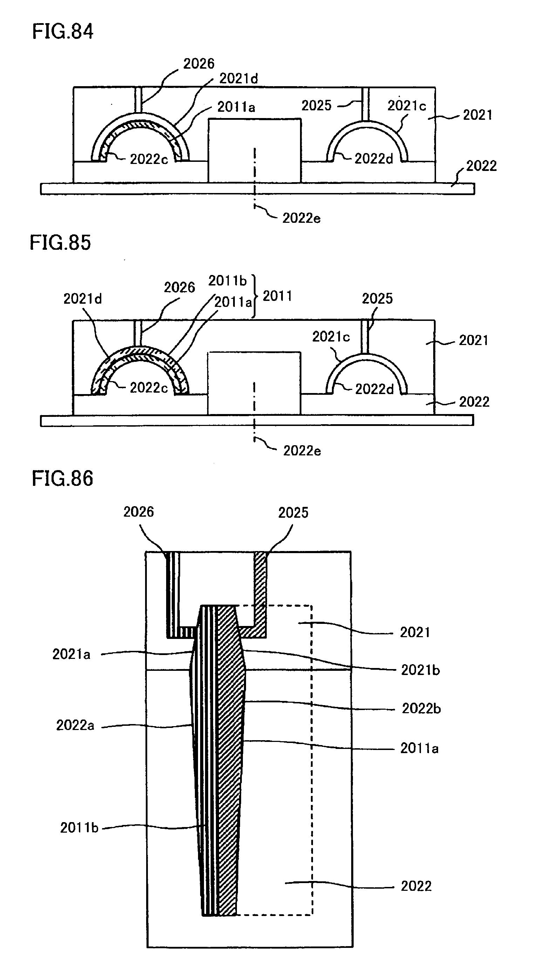

Next, as shown in Fig. 83, the movable molding die 2022 is separated from the fixed molding die 2021 and rotated by 180 degrees with respect to the center line 2022e. When the electrification layer 2011a comes so as to be disposed below the cylindrical surface 2021d, as shown in Fig. 84, the fixed molding die 2021 and the movable molding die 2022 are clamped at a predetermined pressure and closely jointed.

Then, as shown in Fig. 85, from the injection nozzle 2026, the pellet of the ABS resin, which contains no charge control agent, is molten at a high temperature and injected into a clearance between the electrification layer 2011a and the cylindrical surface 2021d. At this time, the pellet may be injected from the injection nozzle 2025 and molten, thereby forming a next work. When the resin is sufficiently filled, the resin is hardened through the cooling, thereby forming the first electrification part 2011 which is the half-cylinder pipe having the arch-shaped cross section and has the reinforcement layer 2011b formed on an outer surface of the electrification layer 2011a.

As similarly to the first electrification part 2011, the second electrification part 2012 is formed through the molding, and the both are thermally welded through ultrasonic welding, thereby obtaining the cylindrical pipe-shaped frictional electrification resin pipe 2008. The frictional electrification resin pipe 2008 may be formed so as to have a shape other than the cylindrical pipe shape.

According to the present embodiment, the same effect as that attained by the embodiment 5-1 can be attained. Further, in the frictional electrification resin pipe 2008, the reinforcement layers 2011b and 2012b on the outer surface thereof contain no charge control agent and the electrification layers 2011a and 2012a on the inner surface thereof contain the charge control agent. In other words, a density of the charge control agent on the outer surface of the frictional electrification resin pipe 2008 is low and a density of the charge control agent on the inner surface is high. Therefore, the effect of electrifying the dust circulating inside the frictional electrification resin pipe 2008 can be maintained, thereby allowing a reduction in an amount of the charge control agent. Accordingly, the frictional electrification resin pipe 2008 can be obtained at a further low cost.

The chief ingredients of each of the electrification layers 2011a and 2012a and each of the reinforcement layers 2011b and 2012b may be a resin other than the ABS resin. The first and second electrification parts 2011 and 2012 may be formed by forming the electrification layers 2011a and 2012a and the reinforcement layers 2011b and 2012b through the so-called insert molding in which molding dies different from each other are used.

Next, an embodiment 5-3 will be described. As similarly to in the embodiment 5-2 shown in Fig. 81, in a frictional electrification resin pipe of the present embodiment in a vacuum cleaner, each of a first electrification part 2011 and a second electrification part 2012 is formed so as to have two layers. On an inner surface thereof, electrification layers 2011a and 2012a are provided and on an outer surface thereof, reinforcement layers 2011b and 2012b are provided.

In the electrification layers 2011a and 2012a, the same charge control agents as those in the embodiment 5-1 are kneaded in the ABS resin thereof. The reinforcement layers 2011b and 2012b are made of the ABS resin. In addition, each of the first and second electrification parts 2011 and 2012 is formed so as to be a half-cylinder pipe having an arch-shaped cross section. The first and second electrification parts 2011 and 2012 are jointed at respective edge faces thereof in a circumferential direction.

Fig. 86 shows a cross-sectional view illustrating a state in which the first electrification part 2011 is molded and illustrating a B-B cross section shown in Fig. 81. Similarly, the second electrification part 2012 is molded. The first electrification part 2011 is formed through the so-called color mixing molding by using a fixed molding die 2021 and a movable molding die 2022. The fixed molding die 2021 has a concave-shaped cylindrical surface 2021a and a convex-shaped cylindrical surface 2021b which faces the cylindrical surface 2021a. Similarly, the movable molding die 2022 has a concave-shaped cylindrical surface 2022a and a convex-shaped cylindrical surface 2022b which faces the cylindrical surface 2022a. Injection nozzles 2026 and 2025 are coupled to the cylindrical surfaces 2021a and 2021b, respectively.

The fixed molding die 2021 and the movable molding die 2022 are clamped at a predetermined pressure and closely jointed. From the injection nozzles 2025 and 2026 provided on the fixed molding die 2021, pellets molten at a high temperature are injected between the cylindrical surfaces 2021a and 2021b and between the cylindrical surfaces 2022a and 2022b.

The pellet injected from the injection nozzle 2025 contains, in an ABS resin thereof, a charge control agent which is negatively electrified and positively electrifies dust. The pellet injected from the injection nozzle 2026 is made of the ABS resin which contains no charge control agent. When the resin is sufficiently filled, the resin is hardened through cooling, thereby forming the first electrification part 2011 which is a half-cylinder pipe having an arch-shaped cross section and has the reinforcement layer 2011b formed on an outer surface of the electrification layer 2011a.

As similarly to the first electrification part 2011, the second electrification part 2012 is formed through the molding. The pellet injected from the injection nozzle 2025 contains, in the ABS resin thereof, a charge control agent which is positively electrified and negatively electrifies dust. The first and second electrification parts 2011 and 2012 are thermally welded through ultrasonic welding, thereby obtaining the frictional electrification resin pipe 2008. The chief ingredient of each of the electrification layers 2011a and 2012a and each of the reinforcement layers 2011b and 2012b may be a resin other than the ABS resin. In addition, the shape of the frictional electrification resin pipe 2008 may be a tubular shape other than the cylindrical pipe shape.

According to the present embodiment, the same effect as that attained by the embodiment 5-2 can be attained. In addition, the electrification layers 2011a and 2012a and the reinforcement layers 2011b and 2012b can be simultaneously molded, thereby allowing the frictional electrification resin pipe 2008 to be further simply formed. In order to prevent the resins injected from the injection nozzles 2025 and 2026 from being mixed while flowing to reach an end portion of the movable molding die 2022, an injection nozzle may be provided also on the movable molding die 2022 to shorten a flowing distance.

Next, an embodiment 5-4 will be described. As similarly to in the embodiment 5-2 shown in Fig. 81, in a frictional electrification resin pipe of the present embodiment in a vacuum cleaner, each of a first electrification part 2011 and a second electrification part 2012 is formed so as to have two layers. On an inner surface thereof, electrification layers 2011a and 2012a are provided and on an outer surface thereof, reinforcement layers 2011b and 2012b are provided.

In the electrification layers 2011a and 2012a, the same charge control agents as those in the embodiment 5-1 are kneaded in the ABS resin thereof. The reinforcement layers 2011b and 2012b are made of the ABS resin. In addition, each of the first and second electrification parts 2011 and 2012 is formed so as to be a half-cylinder pipe having an arch-shaped cross section. The first and second electrification parts 2011 and 2012 are jointed at respective edge faces thereof in a circumferential direction.

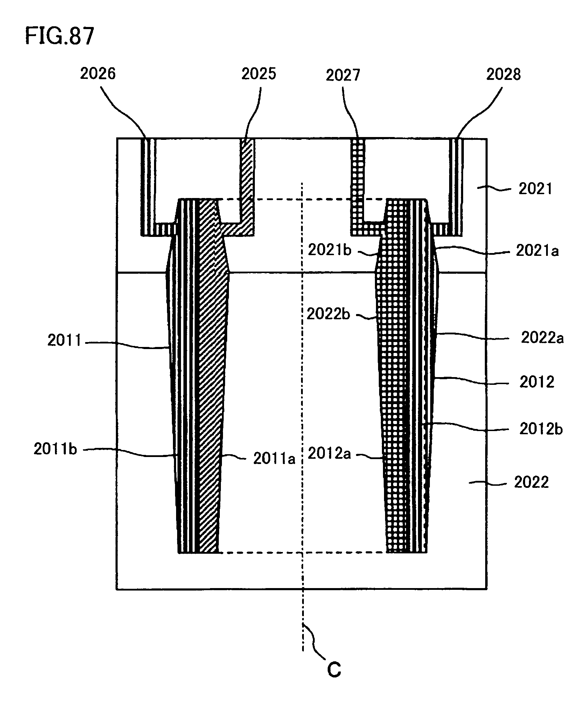

Fig. 87 shows a cross-sectional view illustrating a state in which the frictional electrification resin pipe 2008 is molded and illustrating a B-B cross section shown in Fig. 81. The frictional electrification resin pipe 2008 is formed through the so-called color mixing molding by using a fixed molding die 2021 and a movable molding die 2022. The fixed molding die 2021 has a concave-shaped cylindrical surface 2021a and a convex-shaped cylindrical surface 2021b which faces the cylindrical surface 2021a. Similarly, the movable molding die 2022 has a concave-shaped cylindrical surface 2022a and a convex-shaped cylindrical surface 2022b which faces the cylindrical surface 2022a. On the cylindrical surface 2021a, injection nozzles 2026 and 2028 are coupled so as to face each other and on the cylindrical surface 2021b, injection nozzles 2025 and 2027 are coupled so as to face each other.

The fixed molding die 2021 and the movable molding die 2022 are clamped at a predetermined pressure and closely jointed. From the injection nozzles 2025, 2026, 2027, and 2028, pellets molten at a high temperature are injected between the cylindrical surfaces 2021a and 2021b and between the cylindrical surfaces 2022a and 2022b.

The pellet injected from the injection nozzle 2025 contains, in an ABS resin thereof, a charge control agent which is negatively electrified and positively electrifies dust. The pellet injected from the injection nozzle 2027 contains, in an ABS resin thereof, a charge control agent which is positively electrified and negatively electrifies the dust. The pellets injected from the injection nozzles 2026 and 2028 are made of an ABS resin which contains no charge control agent.

The pellets injected from the injection nozzles 2025 and 2026 and the pellet injected from the injection nozzles 2027 and 2028 are molten, flow in the fixed molding die 2021 and the movable molding die 2022, and collide with each other, respectively in the vicinity of an alternate long and short dash line C where the pellets are equally distant from the injection nozzles 2025 and 2027. When the resin is sufficiently filled, the resin is hardened through cooling. In the above-described method, the cylindrical pipe-shaped frictional electrification resin pipe 2008 comprising the first and second electrification parts 2011 and 2012 which are segmented by a weld line 2008a (see Fig. 79), have the arch-shaped cross sections, and are integrally formed can be obtained. The chief ingredient of each of the electrification layers 2011a and 2012a and each of the reinforcement layers 2011b and 2012b may be a resin other than the ABS resin. The frictional electrification resin pipe 2008 may be formed so as to have a tubular shape other than the cylindrical pipe shape.

According to the present embodiment, the same effect as that attained by the embodiment 5-2 and the embodiment 5-3 can be attained. In addition, the first electrification part 2011 and the second electrification part 2012 can be simultaneously molded, thereby allowing the frictional electrification resin pipe 2008 to be further simply formed. Note that an injection nozzle may be provided also on the movable molding die 2022 to shorten a flowing distance of the resins.

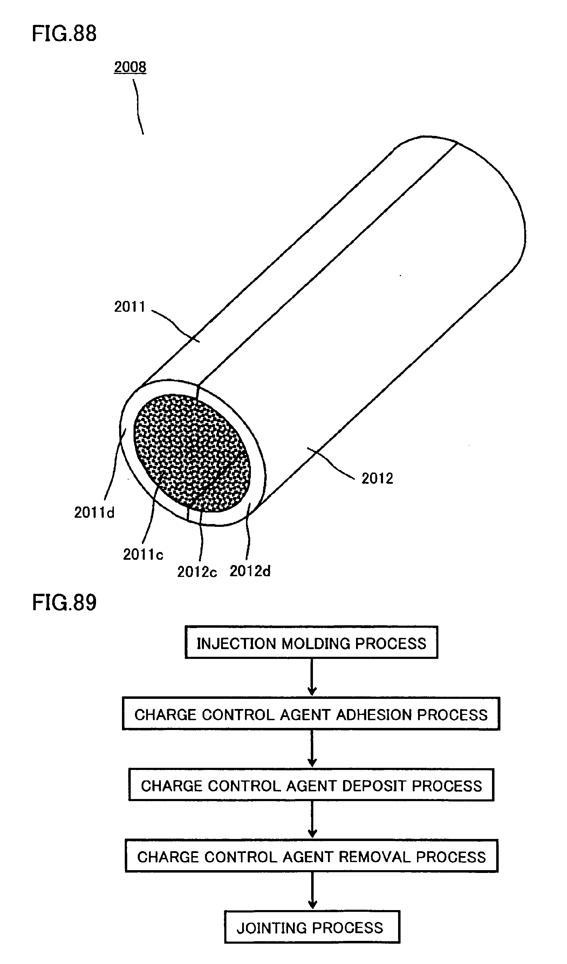

Next, Fig. 88 shows a perspective view illustrating a frictional electrification resin pipe 2008 of an embodiment 5-5 in a vacuum cleaner. For convenience sake in description, the same parts of the embodiment 5-5 as those of the embodiment 5-1 shown in Fig. 78 through Fig. 81 are denoted by the same reference numerals and codes as those used in the description of the embodiment 5-1. The frictional electrification resin pipe 2008 is formed by jointing a first electrification part 2011 and a second electrification part 2012, which has arch-shaped cross sections, so as to be tubular. The first and second electrification parts 2011 and 2012 are made of ABS resin molded components and on an inner surface thereof, particles 2011c and 2012c of charge control agents for promoting electrification of dust passing through the frictional electrification resin pipe 2008 are fixed.

In the first electrification part 2011, particles 2011c of a charge control agent which is negatively electrified and positively electrifies dust are deposited in a base material 2011d thereof. In the second electrification part 2012, particles 2012c of a charge control agent which is positively electrified and negatively electrifies the dust are deposited in a base material 2012d thereof. Each of the base materials 2011d and 2012d is made of an ABS resin and is a half-cylinder-shaped pipe having an arch-shaped cross section. The base materials 2011d and 2012d are jointed at respective edge faces thereof in a circumferential direction. Each of the base materials 2011d and 2012d may be made of a resin other than the ABS resin.

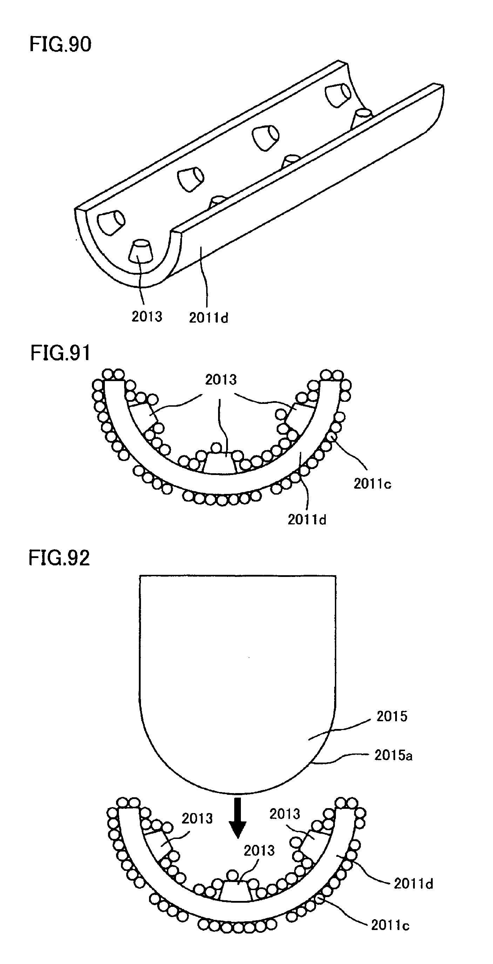

Fig. 89 is a flow chart showing processes for manufacturing the frictional electrification resin pipe 2008. An injection molding process in which a pellet made of the ABS resin is injected into a molding die and molded through injection molding is conducted. By conducting this process, the base material 2011d which is a half-cylinder-shaped pipe as shown in Fig. 90 is formed. Similarly, the base material 2012d is formed by using the same molding die. On inner surfaces of the base materials 2011d and 2012d, a large number of protrusions 2013 are formed.

Next, a charge control agent adhesion process in which the charge control agents are fixed to the base materials 2011d and 2012d is conducted. In the charge control agent adhesion process, the base materials 2011d and 2012d are immersed in powders of the charge control agents and forcibly rotated. By conducting this process, the charge control agents are pressed against the base materials 2011d and 2012d, thereby imparting friction and compression thereagainst. As a result, by a dry mechanochemical method, as shown in Fig. 91, the particles 2011c and 2012c of the charge control agents are fixed to the surfaces of the base materials 2011d and 2012d. The base materials 2011d and 2012d may be immersed in a fluid in which the particles 2011c and 2012c of the charge control agents are mixed.

Next, a charge control agent deposit process in which the charge control agents fixed to the base materials 2011d and 2012d are deposited is conducted. Fig. 92 shows an elevation view showing the charge control agent deposit process. In the charge control agent deposit process, a horn 2015 (heating part) which vibrates in an ultrasonic manner is provided. The horn 2015 has a cylindrical surface 2015a which has a substantially same curvature radius as those of the inner surface of the base materials 2011d and 2012d and is inserted to each side of the inner surface of the base materials 2011d and 2012d.

The cylindrical surface 2015a of the horn 2015 contacts the protrusions 2013, whereby the horn 2015 vibrates in the ultrasonic manner. This thermally melts surfaces of the protrusions 2013. When the thermal melting of the protrusions 2013 has progressed, the cylindrical surface of each side of the inner surfaces of the base materials 2011d and 2012d contacts the cylindrical surface 2015a of the horn 2015. This causes the horn 2015 to be closely attached to the whole inner surfaces of the base materials 2011d and 2012d, and the base materials 2011d and 2012d are evenly heated. Thus, the particles 2011c and 2012c of the charge control agents are evenly distributed and fixedly adhered onto the inner surface of the base materials 2011d and 2012d.

At this time, a decomposition temperature T1 of each of the charge control agents is higher than a softening temperature T2 of each of the base materials 2011d and 2012d. Thus, the charge control agents are not decomposed and performance degradation of the charge control agents can be prevented, thereby allowing the charge control agents to be easily distributed in the inner surface of the frictional electrification resin pipe 2008.

The softening temperature T2 of each of the base materials 2011d and 2012d made of the ABS resin is approximately 230°C. Therefore, as the charge control agent fixed to the base material 2011d, AIZEN SPILON BLACK TRH (manufactured by Hodogaya Chemical Co., LTD.) which is an azo metal compound whose decomposition temperature T1 is greater than or equal to 300°C can be used. Also as the charge control agent fixed to the base material 2012d, TP-302 (manufactured by Hodogaya Chemical Co., LTD.) which is a quaternary ammonium salt compound whose decomposition temperature T1 is greater than or equal to 290°C can be used.

In addition, the protrusions 2013 allow the horn 2015 to be closely attached to the whole inner surface of the base materials 2011d and 2012d and allow the particles 2011c and 2012c of the charge control agents to be evenly distributed in the whole inner surface of the base materials 2011d and 2012d, thereby decreasing the dust which is insufficiently electrified.

Next, a charge control agent removal process in which an excess of the particles 2011c and 2012c of the charge control agents is removed is conducted. In the charge control agent removal process, the excess of the base materials 2011d and 2012d is brushed off, by blowing a compressed air against the base materials 2011d and 2012d, by using a brush, or by means of others. Thus, the excess of the particles 2011c and 2012c of the charge control agents, which has been caused to adhere to outer surfaces or the like of the base materials 2011d and 2012d in the charge control agent adhesion process, is removed. As a result, the first and second electrification parts 2011 and 2012 can be obtained.

Next, a jointing process in which the first and second electrification parts 2011 and 2012 are jointed is conducted. In the jointing process, the edge faces, in the circumferential direction, of the first and second electrification parts 2011 and 2012 which are the half-cylinder-shaped pipes are closely attached to each other and ultrasonic welding is performed. Thus, the first and second electrification parts 2011 and 2012 are jointed and the cylindrical pipe-shaped frictional electrification resin pipe 2008 can be obtained. The shape of the frictional electrification resin pipe 2008 may be a tubular shape other than the shape of the cylindrical pipe.

According to the present embodiment, the same effect as that attained by the embodiment 5-1 can be obtained. In addition, since the particles 2011c and 2012c of the charge control agents are fixed to the inner surfaces of the first and second electrification parts 2011 and 2012, the density of the charge control agent in the inner surface side of the frictional electrification resin pipe 2008 is larger than that of the charge control agent in the outer surface side of the frictional electrification resin pipe 2008. Thus, an effect of electrifying the dust is maintained and a used amount of the charge control agent can be reduced. Accordingly, the frictional electrification resin pipe 2008 can be obtained at a further low cost.

In each of the embodiments 5-1 through 5-5, the frictional electrification resin pipe 2008 is formed so as to be tubular by jointing the first and second electrification parts 2011 and 2012 having the arch-shaped cross sections. However, the first and second electrification parts 2011 and 2012 may be formed so as to be tubular and may be disposed in an axial direction. However, it is more preferable that the frictional electrification resin pipe 2008 is formed so as to be tubular by jointing the first and second electrification parts 2011 and 2012 having the arch-shaped cross sections. Thus, the dust passing through the frictional electrification resin pipe 2008 can be evenly positively and negatively electrified. Accordingly, the clusters can be easily formed, thereby allowing enhancement of a dust collecting power.

In addition, either one of the first and second electrification parts 2011 and 2012 may be provided with a charge control agent and the other thereof may be formed by using a molded component of a resin such as polyamide and polypropylene, which electrifies the dust. Thus, the frictional electrification resin pipe 2008 can be obtained more easily and at a lower cost than the frictional electrification resin pipe 2008 which includes the first and second electrification parts 2011 and 2012 both formed by using the resin molded components having no charge control agent.

Furthermore, although the frictional electrification resin pipe 2008 is used in the vacuum cleaner 2001, the frictional electrification resin pipe 2008 may be used in other machines. For example, the frictional electrification resin pipe 2008 can be used in a gas duct of an air cleaner, an air conditioner, or the like which has a filter or the like for collecting the dust.

Moreover, the frictional electrification resin pipe may have only one of the charge control agents which positively and negatively electrify a substance subjected to the friction. Thus, the frictional electrification resin pipe for positively electrifying the dust and the frictional electrification resin pipe for negatively electrifying the dust are disposed in a gas duct of an vacuum cleaner, an air cleaner, an air conditioner, or the like, thereby causing the dust to grow to be clusters and easily collecting the dust. Further, this frictional electrification resin pipe may be disposed in a separation and classification machine for separating garbage or the like, and a substance, such as the garbage, which passes through the frictional electrification resin pipe and is subjected to the friction can be only either positively or negatively electrified and separated.

### EXAMPLE 1

One of the effects attained by the present invention is that the number of the fine particulates in an exhaust gas in the vacuum cleaner is reduced. This effect is attained by causing the fine particulates to be flocculated upstream of the dust collecting unit in the vacuum cleaner and to be grown so as to have a large average size, whereby a collecting efficiency of the dust collecting unit is enhanced and the number of the fine particulates in the exhaust gas is reduced.

Hereinafter, an experimental result obtained by examining a relationship between a size of each of the particulates in the exhaust gas and the number of the particulates in the exhaust gas in each of the conventional vacuum cleaner and the vacuum cleaner including the dust flocculating duct according the present invention will be described.

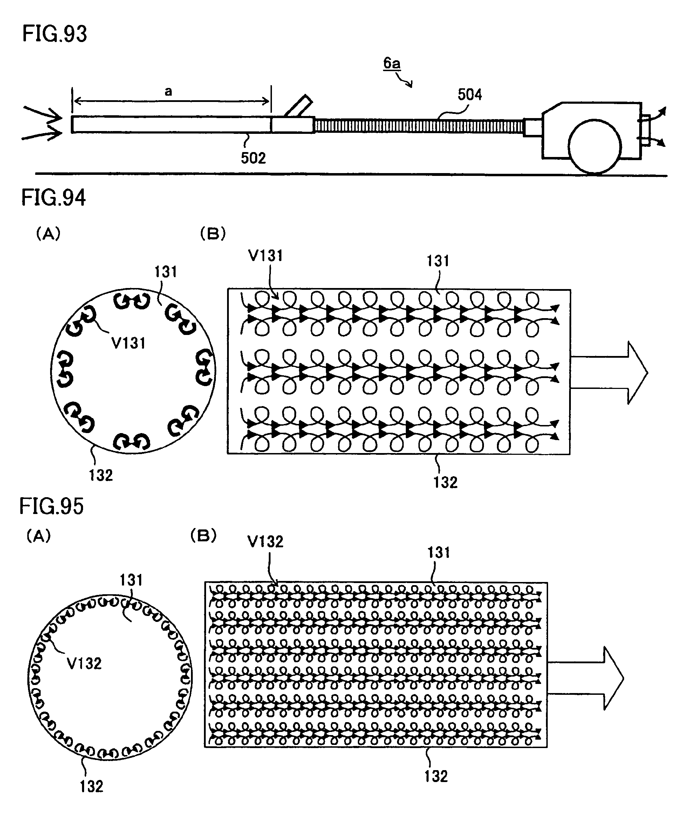

Fig. 93 is a schematic diagram illustrating a whole of a conventional vacuum cleaner, as a comparison machine, which comprises a cyclone dust collecting chamber. Fig. 10 is a schematic diagram illustrating a whole of a vacuum cleaner which comprises a dust flocculating duct according to the present invention.

As shown in Fig. 93, in each of the conventional vacuum cleaner 6a and the vacuum cleaner comprising the dust flocculating duct according to the present invention, an extension pipe 502 had a pipe length a of 700 mm and an pipe internal diameter of 35 mm, and a wind velocity at a center of the extension pipes 502 was 20 m/second.

As shown in Fig. 10, in the vacuum cleaner 6b comprising the dust flocculating duct according to the present invention, a frictional electrification passage part 161 having a length b was formed, which was located so as to have a distance c from a tip of the extension pipe 502. The length b of the frictional electrification passage part 161 was 200 mm and the distance c was 500 mm. A collision promotion passage part 162 having a length d was formed in a joining section 505. The length d of the collision promotion passage part 162 was 100 mm. As a material of which a first frictional electrification part for positively electrifying particulates was made, a polypropylene (PP) resin was used; as a material of which a second frictional electrification part for negatively electrifying the particulates was made, a nylon (polyamide) resin was used; and as a material of which the collision promotion passage part was made, an acrylonitrile butadiene styrene (ABS) resin was used.

Sizes and numbers of the particulates contained in the exhaust gases were measured in conformity with JIS C 9802 (methods of measurement of performance of vacuum cleaners for household).

With respect to the conventional vacuum cleaner comprising the cyclone dust collecting chamber and the vacuum cleaner comprising the dust flocculating duct according to the present invention, relationships of the sizes and the numbers of the particulates in the exhaust gases were compared.

In the dust flocculating duct according to the present invention, the frictional electrification passage part in which the shape of each of the protrusions and the disposition thereof in the embodiment 1-2-1 were employed was used and the collision promotion passage part in which the shape of each of the protrusions and the disposition thereof in the embodiment 1-2-2 were employed was used. As a result, when the total numbers of the particulates in the exhaust gases, each of which has a size of 0.1 µm or more, were compared, the total number thereof obtained by the vacuum cleaner according to the present invention was decreased by 43.0 %, as compared with that obtained by the conventional vacuum cleaner.

Fig. 94 through Fig. 96 show views illustrating other examples of vortices generated due to the protrusions in the above-described embodiments. In Fig. 94 through Fig. 96, the protrusions formed on a wall 132 of a passage 131 are not shown.

As shown in Fig. 94, the protrusions are disposed such that neighboring vortices V131, inside the passage 131, generated due to the protrusions swirl in directions opposite to each other, thereby allowing a probability of mutual collision of the particulates to be increased without increasing a frictional resistance caused by a viscosity of a flow.

In addition, as shown in Fig. 95, a size of each of vortices V132 generated in the passage 131 is decreased and the number of the vortices V132 is increased, thereby allowing a reduction in a frictional resistance with a surface of the wall 132 without reducing a probability of collision of the particulates.

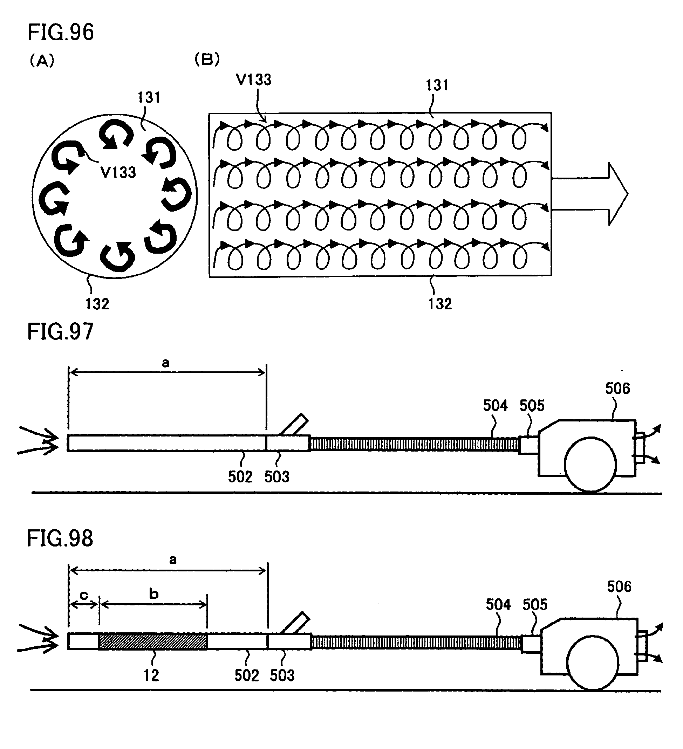

Furthermore, as shown in Fig. 96, when a flow line vector on a plane perpendicular to a direction of a flow in a case where neighboring vortices V133 inside the passage 131 all swirl in a same direction is considered, one side of the flow line vector of the flow on a contact surface of the vortices V132 swirls in a direction from a central portion of a flow passage toward the surface of the wall 132 and another side of the flow line vector swirl in a direction opposite to the above-mentioned direction. Therefore, the vortices V133 swirl in the directions so as to collide with each other, thereby allowing a probability of collision to be further effectively increased but increasing a frictional resistance.

As described above, in the dust flocculating duct, the protrusions are formed so as to allow generation of the vortices in the gas circulating downstream of the protrusions.

By employing the above-described configuration, all the particulates mutually collide with one another due to the action of the vortices, thereby allowing dust masses (clusters) to be effectively formed.

### EXAMPLE 2

One of the effects attained by the present invention is that the number of the fine particulates in an exhaust gas in the vacuum cleaner is reduced. This effect is attained by causing the fine particulates to be flocculated upstream of the dust collecting unit in the vacuum cleaner and to be grown so as to have a large average size, whereby a collecting efficiency of the dust collecting unit is enhanced and the number of the fine particulates in the exhaust gas is reduced.

Hereinafter, an experimental result obtained by examining a relationship between a size of each of the particulates in the exhaust gas and the number of the particulates in the exhaust gas in each of the convetinal vacuum cleaner and the vacuum cleaner according the present invention will be described.

Fig. 97 is a schematic diagram illustrating a whole of a conventional vacuum cleaner, as a comparison machine, which comprises a cyclone dust collecting chamber. Fig. 98 is a schematic diagram illustrating a whole of a vacuum cleaner of the embodiment 4-1 according to the present invention.

As shown in Fig. 97 and Fig. 98, in each of the comparison machine and the vacuum cleaner of the embodiment 4-1 according to the present invention, an extension pipe 502 had a pipe length a of 700 mm and an pipe internal diameter of 35 mm, and a wind velocity at a center of the extension pipe 502 was 20 m/second.

As shown in Fig. 98, in the vacuum cleaner of the embodiment 4-1 according to the present invention, a gas duct 12 (Fig. 3) having a length b was formed, which was located so as to have a distance c from a tip of the extension pipe 502. The length b of the gas duct 12 was 400 mm and the distance c was 100 mm. As a material of which a first electrification part 10 for positively electrifying particulates was made, a teflon (registered trademark) was used; and as a material of which a second electrification part 11 for negatively electrifying the particulates was made, glass was used.

Sizes and numbers of the particulates contained in the exhaust gases were measured in conformity with JIS C 9102 (methods of measurement of performance of vacuum cleaners for household).

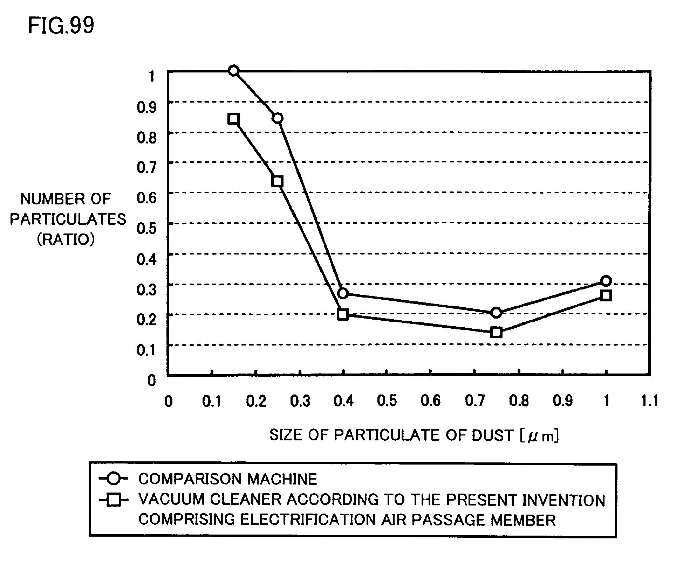

Fig. 99 is a diagram showing the relationships between the sizes and the numbers of the particulates contained in the exhaust gas with respect to the conventional vacuum cleaner which comprises the cyclone dust collecting chamber and the vacuum cleaner according to the present invention, which comprises the cyclone dust collecting chamber. On a vertical axis in Fig. 99, values which relatively represent the numbers of the dust particulates with a maximum value of 1 are shown.

As shown in Fig. 99, the relationships between the sizes and the numbers of the particulates contained in the exhaust gas with respect to the conventional vacuum cleaner comprising the cyclone dust collecting chamber and the vacuum cleaner of the embodiment 4-1 according to the present invention were compared. In a case where the vacuum cleaner of the embodiment 4-1 according to the present invention was used, the number of the particulates contained in the exhaust gas, each of which has a particle size in a range from 0.2 µm to 1.0 µm, was reduced by approximately several % to 20 %, as compared with a case where the conventional vacuum cleaner comprising the cyclone dust collecting chamber was used.

In addition, in the case where the vacuum cleaner of the embodiment 4-1 according to the present invention was used, the number of the particulates contained in the exhaust gas, each of which has a particle size of 0.1 µm or more, was reduced by 23.4 %, as compared with the case where the conventional vacuum cleaner comprising the cyclone dust collecting chamber was used.

The described embodiments and examples are to be considered in all respects only as illustrative and not restrictive. It is intended that the scope of the invention is, therefore, indicated by the appended claims rather than the foregoing descriptions of the embodiments and examples and that all modifications and variations coming within the meaning and equivalency range of the appended claims are embraced within their scope.

### INDUSTRIAL APPLICABILITY

The present invention is applicable to a vacuum cleaner having a filter or the like for collecting dust, an air cleaner, an air conditioner, a separation and classification machine which electrifies and separates garbage or the like, etc.

## Claims

1. A dust flocculating duct comprising:
passage parts (502, 504, 505) for flowing gas containing pieces of dust;
a frictional electrification passage part (110, 161) disposed in the passage part (502) and friction-electrifying the pieces of dust; and
a collision promotion passage part (100, 162) disposed in the passage part (505), causing the pieces of dust electrified by the frictional electrification passage part (110, 161) to collide with each other, and facilitating formation of dust masses (clusters),
wherein the frictional electrification passage part (110, 161) includes a first frictional electrification part made of a first material and a second frictional electrification part made of a second material, the collision promotion passage part (100, 162) is made of a third material, a contact potential difference of the first material is larger than a contact potential difference of the third material, and the contact potential difference of the third material is larger than a contact potential difference of the second material.

2. The dust flocculating duct according to claim 1,
wherein the frictional electrification passage part (110, 161) includes a first frictional electrification part (10) made of a material which has a contact potential difference larger than a contact potential difference of predetermined dust circulating through the passage parts (502, 504, 505) and a second frictional electrification part (11) made of a material which has a contact potential difference smaller than the contact potential difference of the predetermined dust circulating through the passage parts (502, 504, 505), and the collision promotion passage part (100, 162) is made of a material which has a substantially same contact potential difference as the contact potential difference of the predetermined dust circulating through the passage parts (502, 504, 505).

3. The dust flocculating duct according to claim 1,
wherein the frictional electrification passage part (110, 161) includes a first frictional electrification part (10) made of a material which has a contact potential difference larger than a maximum contact potential difference among contact potential differences of a plurality of pieces of dust circulating through the passage parts (502, 504, 505) and a second frictional electrification part (11) made of a material which has a contact potential difference smaller than a minimum contact potential difference among the contact potential differences of the plurality of pieces of dust circulating through the passage parts (502, 504, 505), and the collision promotion passage part (162) is made of a material which has a substantially same contact potential difference as an average contact potential difference of the contact potential differences of the plurality of pieces of dust circulating through the passage parts (502, 504, 505).

4. The dust flocculating duct according to claim 1,
wherein the frictional electrification passage part (110) has a wall (112) forming the frictional electrification passage part (110), and protrusions (113) are formed on an inner surface of the wall (112).

5. The dust flocculating duct according to claim 1,
wherein the collision promotion passage part (100) has a wall (102) forming the collision promotion passage part (100), and protrusions (103) are formed on an inner surface of the wall (102).

6. The dust flocculating duct according to claim 4,
wherein the protrusions (103, 113) are formed so as to allow vortices to be generated in gas circulating on downstream sides of the protrusions (103, 113).

7. An electrification gas passage member (700) having an inlet and an outlet communicating with each other so as to form a gas duct through which a gas flow passes through connection with a gas blower (567),
the gas passage member including a first electrification part (701) for positively contact-electrifying dust and a second electrification part (702) for negatively electrifying the dust,
wherein when the dust is transported by the gas flow through the gas duct, the dust is caused to contact one of the first electrification part (701) and the second electrification part (702) and to be electrified so as to have one of positive and negative polarities and the positively or negatively electrified dust is caused to form dust masses (clusters), and
wherein an exterior frame (703) disposed outside the first electrification part and the second electrification part (701, 702) is included and the first electrification part and/or the second electrification part (701, 702) are/is disposed so as to be fitted into the exterior frame (703).

8. The electrification gas passage member (700) according to claim 7,
wherein the exterior frame (703) and/or the first electrification part and the second electrification part (701, 702) have fitting parts (701a,702a, 703a) for fitting the exterior frame (703) and the first electrification part and the second electrification part (701, 702), and the fitting parts (701a,702a, 703a) are disposed along a direction of the gas flow.

9. The electrification gas passage member (200) according to claim 7,
wherein the exterior frame (203) and/or the first electrification part and the second electrification part (201, 202) have fitting parts (201a, 202a, 203a) for fitting the exterior frame (203), and the first electrification part and the second electrification part (201, 202) and the fitting parts (201a, 202a, 203a) are disposed along a circumferential direction of the exterior frame (203).

10. The electrification gas passage member (200) according to claim 7,
wherein the first electrification part and the second electrification part (201, 202) are formed so as to have external diameters of end portions thereof on an upstream side of the gas flow, which are larger than an internal diameter of the exterior frame (203).

11. The electrification gas passage member (600) according to claim 7,
wherein the exterior frame (601) is formed so as to be integrated with one of the first electrification part (601) and the second electrification part (602).

12. A vacuum cleaner including:
an electric gas blower (567);
a gas duct (502) for communicating from a suction inlet (501) to the electric gas blower (567); and
a dust collecting unit (561),
the vacuum cleaner operable to suck dust from the suction inlet (501) through a gas flow generated by the electric gas blower (567) and to collect in the dust collecting unit (561) the dust passing through the gas duct (502),
wherein in the gas duct (502), a first electrification part (701) for positively contact-electrifying the dust and a second electrification part (702) for negatively contact-electrifying the dust are provided,
wherein an exterior frame (703) disposed outside the first electrification part and the second electrification part (701, 702) is included and the first electrification part (701) and/or the second electrification part (702) are/is fitted into the exterior frame (703), and
in a process in which the dust passes through the gas duct (502), the vacuum cleaner operable to cause the dust and dust, which have been electrified by the first electrification part (701) and the second electrification part (702) so as to have polarities which are different from each other, to form dust masses (clusters) and operable to collect in the dust collecting unit (561) the dust grown as the dust masses.

13. A vacuum cleaner (500) comprising:
a suction inlet body (501) having a suction inlet;
an electric gas blower (567) for generating suction gas;
a main body (506) having the electric gas blower (567) thereinside;
a gas suction pipe for communicating between the suction inlet body (501) and the main body (506); and
an electrification duct (200) having a first electrification part (201) for positively electrifying dust contained in the suction gas and a second electrification part (202) for negatively electrifying the dust contained in the suction gas,
wherein the gas suction pipe has: a first gas suction pipe (511) connected to the suction inlet body (501); a second gas suction pipe (512) connected to the first gas suction pipe (511) such that one part of the first gas suction pipe (511) is inserted to an inside of the second gas suction pipe (512) on a downstream side of the first gas suction pipe (511) with respect to the suction gas; a first connecting pipe (503) connected to the second gas suction pipe (512) on a downstream side of the second gas suction pipe (512) with respect to the suction gas; a third gas suction pipe (504) connected to the first connecting pipe (503) on a downstream side of the first connecting pipe (503) with respect to the suction gas; and a second connecting pipe (505) for connecting the third gas suction pipe (504) and the main body (506) on a downstream side of the third gas suction pipe (504) with respect to the suction gas,
wherein the first gas suction pipe (511) has stiffness and a relatively small diameter; the second gas suction pipe (512) has stiffness and a relatively large diameter; the first connecting pipe (503) has stiffness and a relatively large diameter and includes a handle (503a) to be held by a user; the third gas suction pipe (504) has flexibility and a relatively large diameter; and the second connecting pipe (505) has stiffness and a relatively large diameter, and
wherein the electrification duct (200) is disposed inside one of the first connecting pipe (503) and the second connecting pipe (505).

14. The vacuum cleaner (500) according to claim 13,
wherein the third gas suction pipe (504) is connected to the first connecting pipe (503) such that one part of the third gas suction pipe (504) is inserted to an inside of the first connecting pipe (503); the electrification duct (200) is disposed inside the first connecting pipe (503) such that at least one part of the electrification duct (200) is inserted to an inside of the third gas suction pipe (504); and a downstream end portion of the electrification duct (200), which is located on a downstream side of the suction gas, is located more upstream of the suction gas than an downstream end portion of the first connecting pipe (503), which is located on the downstream side of the suction gas.

15. The vacuum cleaner (500) according to claim 13,
wherein the electrification duct (200) is held so as to be rotatable with respect to an axis of a direction in which the suction gas flows.

16. An electrification gas passage member having an inlet (18) and an outlet (19) communicating with each other so as to form a gas duct (12) through which a gas flow passes through connection with a gas blower (567),
the gas passage member including a first electrification part (10) for positively contact-electrifying dust and a second electrification part (11) for negatively electrifying the dust,
wherein when the dust is transported by the gas flow through the gas duct (12), the dust is caused to contact one of the first electrification part (10) and the second electrification part (11) so as to have one of positive and negative polarities and the positively or negatively electrified dust is caused to form dust masses (clusters).

17. The electrification gas passage member according to claim 16,
wherein the gas duct (12) further has deflecting parts (802, 803) for deflecting the gas flow in the gas duct (12).

18. The electrification gas passage member (1100) according to claim 16,
wherein the first electrification part (1110) and/or the second electrification part (1111) extend/extends so as to form an angle with respect to a direction of the gas flow.

19. The electrification gas passage member (1200) according to claim 16, including a joining member (1220), wherein the first electrification parts (1210a, 1210b) and the second electrification parts (1211a, 1211b) constitute one electrification part pair, respectively and a plurality of the electrification part pairs are respectively disposed so as to be arranged via the joining member (1220).

20. The electrification gas passage member (1500) according to claim 16,
wherein the first electrification parts (1510a, 1510b) and the second electrification parts (1511a, 1511b) constitute one electrification part pair so as to be arranged in a circumferential direction of a cross section of a gas passage, which intersects the direction of the gas flow, and a plurality of the electrification part pairs are respectively disposed so as to be arranged in the circumferential direction.

21. The electrification gas passage member (1600) according to claim 16,
wherein the first electrification parts (1610a, 1610b, 1620a, 1620b, 1630a, 1630b) and the second electrification parts (1611a, 1611b, 1621a, 1621b, 1631a, 1631b) are arrange in the direction of the gas flow and constitute one electrification part pair and a plurality of the electrification part pairs are respectively disposed so as to be arranged in the direction of the gas flow.

22. The electrification gas passage member (1600) according to claim 16,
wherein the first electrification parts (1610a, 1610b, 1620a, 1620b, 1630a, 1630b) and the second electrification parts (1611a, 1611b, 1621a, 1621b, 1631a, 1631b) constitute one electrification part pair, respectively and a plurality of the electrification part pairs are arranged in the circumferential direction of the cross section of the gas duct, which intersects the direction of the gas flow, and in the direction of the gas flow such that the first electrification parts (1610a, 1610b, 1620a, 1620b, 1630a, 1630b) included in the plurality of the electrification part pairs do not mutually neighbor each other, respectively and the second electrification parts (1611a, 1611b, 1621a, 1621b, 1631a, 1631b) included in the plurality of the electrification part pairs do not mutually neighbor each other, respectively.

23. The electrification gas passage member (1700) according to claim 16,
wherein in the first electrification part (1710) and the second electrification part (1711) included in the gas duct, an area occupied by the electrification part (1711) which contact-electrifies a relatively large amount of the dust is smaller than an area occupied by the electrification part (1710).

24. The electrification gas passage member (1800) according to claim 16, wherein the first electrification part (1810) and/or the second electrification part (1811) are/is made of a polymer resin.

25. The electrification gas passage member (1800) according to claim 24,
wherein the first electrification part (1810) and/or the second electrification part (1811) are/is made of a polymer resin mixed with an electrically conductive filler.

26. The electrification gas passage member (1800) according to claim 16,
wherein the second electrification part (1810) is made of glass.

27. The electrification gas passage member (1800) according to claim 16,
wherein the second electrification part (1811) is made of a polymer resin containing a glass filler.

28. The electrification gas passage member (1800) according to claim 16,
wherein the first electrification part (1810) and/or the second electrification part (1811) are/is made of a conductive material.

29. The electrification gas passage member (1800) according to claim 28,
wherein the second electrification part (1811) is made of a stainless steel.

30. The electrification gas passage member (1800) according to claim 28,
wherein the second electrification part (1811) is made of aluminum.

31. A vacuum cleaner including:
an electric gas blower (567);
a gas duct (502) for communicating from a suction inlet (501) to the electric gas blower (567); and
a dust collecting unit (561),
the vacuum cleaner operable to suck pieces of dust from the suction inlet (501) through a gas flow generated by the electric gas blower (567) and to collect in the dust collecting unit (561) the pieces of dust passing through the gas duct (502),
wherein in the gas duct (502), a first electrification part (10) for positively contact-electrifying the pieces of dust and a second electrification part (11) for negatively contact-electrifying the pieces of dust are provided,
in a process in which the pieces of dust passes through the gas duct (502), the vacuum cleaner operable to cause the pieces of dust, which have been electrified by the first electrification part (10) and the second electrification part (11) so as to have polarities which are different from each other, to form dust masses (clusters) and operable to collect in the dust collecting unit (561) the pieces of dust grown as the dust masses.

32. A frictional electrification resin pipe (2008) made of a tubular resin and operable to electrify a substance passing therethrough by contact and friction, comprising a first electrification part (2011) for positively electrifying the substance and a second electrification part (2012) for negatively electrifying the substance, wherein at least one of the first electrification part (2011) and the second electrification part (2012) has a charge control agent, for promoting the electrification, in a surface of the resin.

33. The frictional electrification resin pipe (2008) according to claim 32,
wherein particulates of the charge control agent are kneaded in one of the first electrification part (2011) and the second electrification part (2012).

34. The frictional electrification resin pipe (2008) according to claim 33,
wherein a density of the charge control agent in an inner surface side (2011a, 2012a) is higher than a density of the charge control agent in an outer surface side (2011b, 2012b).

35. The frictional electrification resin pipe (2008) according to claim 33,
wherein the resins of which the first electrification part and the second electrification part (2011, 2012) are made are same as each other.

36. The frictional electrification resin pipe (2008) according to claim 32,
wherein the particulates of the charge control agent are fixedly adhered to the inner surface of one of the first electrification part (2011) and the second electrification part (2012).

37. The frictional electrification resin pipe (2008) according to claim 36,
wherein the inner surface of one of the first electrification part (2011) and the second electrification part (2012) is molten, has the charge control agent fixedly adhered therein, and has a softening temperature lower than a softening temperature of the charge control agent.

38. The frictional electrification resin pipe (2008) according to claim 37,
wherein protrusions (2013) are provided on the inner surface of one of the first electrification part (2011) and the second electrification part (2012), to which the charge control agent is fixedly adhered, and the inner surface is molten by causing a heating part (2015) to contact the protrusions (2013).

39. The frictional electrification resin pipe (2008) according to claim 32, which is formed so as to be tubular by jointing the first electrification part and the second electrification part (2011, 2012) having arch-shaped cross sections.

40. A frictional electrification resin pipe (2008) made of a tubular resin and operable to electrify a substance, which passes therethrough and is subjected to friction, through contacting and the friction, the frictional electrification resin pipe (2008) having a charge control agent in a surface of the resin.

41. The frictional electrification resin pipe (2008) according to claim 40,
wherein, a density of the charge control agent on a side of the inner surface is higher than a density of the charge control agent on a side of an outer surface.

42. A vacuum cleaner (2001) comprising the frictional electrification resin pipe (2008) according to claim 32 disposed in a gas duct for circulating dust therethrough and having the first electrification part (2011) for positively electrifying the dust and the second electrification part (2012) for negatively electrifying the dust.

43. A vacuum cleaner (2001) comprising a plurality of the frictional electrification resin pipes (2008) according to claim 40 disposed in a gas duct for circulating dust therethrough, wherein one of the frictional electrification resin pipes (2008) positively electrifies the dust and another of the frictional electrification resin pipes (2008) negatively electrifies the dust.
